# EUROPEAN PATENT APPLICATION

(11) **EP 4 668 064 A1**
(43) Date of publication of application: **24.12.2025**
(21) Application number: 24803560.2
(22) Date of filing: 25.01.2024
(51) Int. Cl.: G06F 3/01, G06F 3/04842, G06T 19/00, G02B 27/01, G06F 3/00, G06V 40/20, G06V 10/10

(54) **WEARABLE DEVICE FOR MOVING VIRTUAL OBJECT USING GESTURE, AND METHOD THEREFOR**

(30) Priority: 09.05.2023 KR 20230060140; 12.06.2023 KR 20230075100
(71) Applicant: Samsung Electronics Co., Ltd., Suwon-si, Gyeonggi-do 16677 (KR)
(72) Inventor: YOON, Haemi, Suwon-si, Gyeonggi-do 16677 (KR); KIM, Hyeonjin, Suwon-si, Gyeonggi-do 16677 (KR); CHO, Minji, Suwon-si, Gyeonggi-do 16677 (KR)
(74) Representative: Gulde & Partner
(86) International application number: PCT/KR2024/001240
(87) International publication number: WO 2024/232503

(57) **Abstract**

A processor of a wearable device according to one embodiment can, on the basis of identifying a body part in a designated posture for moving a virtual object, display the virtual object being moved along a path of the body part being moved within the FoV of a camera. The processor can, on the basis of identifying that the body part is being moved out of the FoV through a first position at the edge of the FoV, display the virtual object at a second location, corresponding to the first location, within the virtual space. After displaying the virtual object at the second location, the processor can display the virtual object, moved from the second location and being moved along the path of the body part within the FoV, on the basis of identifying the body part in the designated posture moved into the FoV.

## Description

### [Technical Field]

The present disclosure relates to a wearable device for moving a virtual object using a gesture and a method thereof.

### [Background Art]

In order to provide an enhanced user experience, an electronic device that provide an augmented reality (AR) service that display information generated by a computer in association with an external object in the real-world are being developed. The electronic device may be a wearable device that may be worn by a user. For example, the electronic device may be AR glasses and/or a head-mounted device (HMD).

### [Disclosure]

### [Technical Solution]

According to an example embodiment, a wearable device may comprise: a camera, a display, and at least one processor, comprising processing circuitry. At least one processor, individually and/or collectively, may be configured to identify, while displaying a virtual object within a virtual space through the display, a body part in field-of-view(FoV) of the camera. At least one processor, individually and/or collectively, may be configured to control the display to display, based on identifying the body part in a specified posture for moving the virtual object, the virtual object moved along a path of the body part moved in the FoV. At least one processor, individually and/or collectively, may be configured to in a state of moving the virtual object along the path, control the display to display, based on identifying the body part moved outside of the FoV through a first position of an edge of the FoV, the virtual object in a second position within the virtual space corresponding to the first position using the camera . At least one processor, individually and/or collectively, may be configured to based on displaying the virtual object in the second position, control the display to display, based on identifying the body part in the specified posture moved inside of the FoV, the virtual object moved from the second position and moved along a path of the body part within the FoV.

According to an example embodiment, a method of a wearable device may comprise, while displaying a virtual object within a virtual space through a display of the wearable device, identifying, based on a video obtained from a camera of the wearable device, a body part in field-of-view(FoV) of the camera. The method may comprise displaying, based on identifying the body part in a specified posture for moving the virtual object, the virtual object moved along a path of the body part moved in the FoV. The method may comprise, in a state of moving the virtual object along the path, displaying, from the video, based on identifying the body part moved outside of the FoV through a first position of an edge of the FoV, the virtual object in a second position within the virtual space corresponding to the first position. The method may comprise, based on displaying the virtual object in the second position, displaying, based on identifying the body part in the specified posture moved inside of the FoV, the virtual object moved from the second position and moved along a path of the body part within the FoV.

According to an example embodiment, a wearable device may comprise: a camera, a display, and at least one processor, comprising processing circuitry. At least one processor, individually and/or collectively, may be configured to: based on the camera, identify a body part moved into a field-of-view (FoV) of the camera at a first timing. At least one processor may be configured to, individually and/or collectively, based on identifying that a posture of the body part moved into the FoV at the first timing corresponding to a specified posture, identify at least one virtual object which was connected to the body part at a second timing before the first timing. At least one processor, individually and/or collectively, may be configured to control the display to display, based on a position of the body part in the FoV, the at least one virtual object in the display.

According to an example embodiment, a method of a wearable device may comprise, based on the camera of the wearable device, identifying a body part moved into a field-of-view(FoV) of the camera of the wearable device at a first timing. The method may comprise, based on identifying that a posture of the body part moved into the FoV at the first timing corresponding to a specified posture, identifying at least one virtual object which was connected to the body part at a second timing before the first timing. The method may comprise displaying, based on a position of the body part in the FoV, the at least one virtual object in the display of the wearable device.

### [Description of the Drawings]

The above and other aspects, features and advantages of certain embodiments of the present disclosure will be more apparent from the following detailed description, taken in conjunction with the accompanying drawings, in which:
FIGS. 1A and 1B are diagrams illustrating an example of a screen displayed through a display of a wearable device according to an embodiment;
FIG. 2 is a block diagram illustrating an example configuration of a wearable device according to an embodiment;
FIG. 3 is a flowchart illustrating example operations of a wearable device according to an embodiment;
FIG. 4 is a diagram illustrating an example operation performed by a wearable device to identify a body part;
FIG. 5 is a diagram illustrating an example operation performed by a wearable device to obtain information on a body part;
FIGS. 6A, 6B and 6C are diagrams illustrating an example operation of a wearable device performed based on movement of a body part;
FIGS. 7A, 7B and 7C are diagrams illustrating an example operation of a wearable device performed based on movement of a body part;
FIG. 8 is a flowchart illustrating example operations of a wearable device according to an embodiment;
FIGS. 9A, 9B and 9C are diagrams illustrating an example operation of a wearable device performed based on movement of body parts;
FIG. 10 is a diagram illustrating an example operation of a wearable device performed based on movement of body parts;
FIGS. 11A, 11B and 11C are diagrams illustrating an example operation of a wearable device performed based on movement of body parts;
FIGS. 12A and 12B are diagrams illustrating an example operation of a wearable device performed based on movement of body parts;
FIGS. 13A, 13B and 13C are diagrams illustrating an example operation of a wearable device performed based on movement of body parts;
FIGS. 14A, 14B and 14C are diagrams illustrating different states of a screen displayed by a wearable device based on a position of a body part with respect to field-of-view (FoV) of a camera;
FIG. 15 is a flowchart illustrating example operations of a wearable device according to an embodiment;
FIG. 16A is a perspective view illustrating an example wearable device according to an embodiment;
FIG. 16B is a perspective view illustrating one or more hardware disposed in a wearable device according to an embodiment; and
FIGS. 17A and 17B are perspective views illustrating an example appearance of a wearable device according to an embodiment.

### [Mode for Invention]

Hereinafter, various example embodiments of the present disclosure will be described in greater detail with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, and may interchangeably be used with other terms, for example, "part," or "circuitry". A module may be a single integral component, or a minimum unit or part thereof, adapted to perform one or more functions. For example, according to an embodiment, the module may be implemented in a form of an application-specific integrated circuit (ASIC).

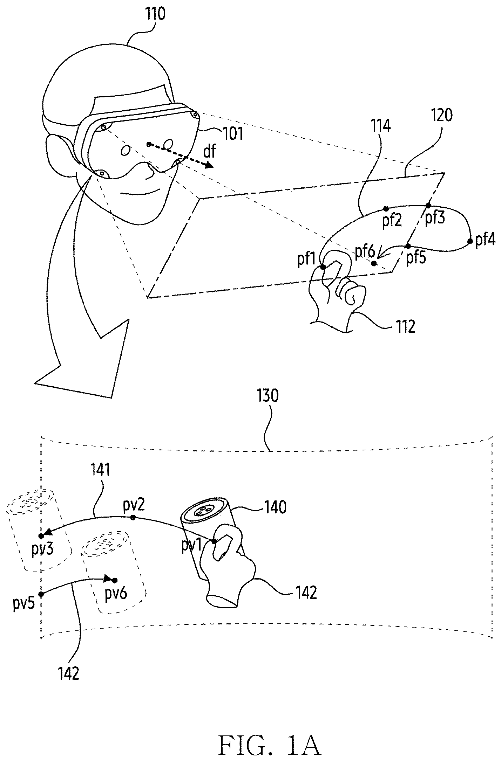

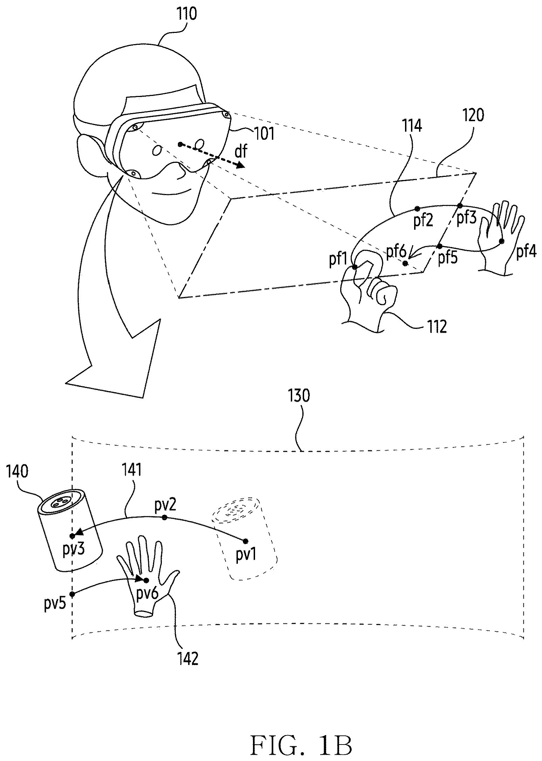

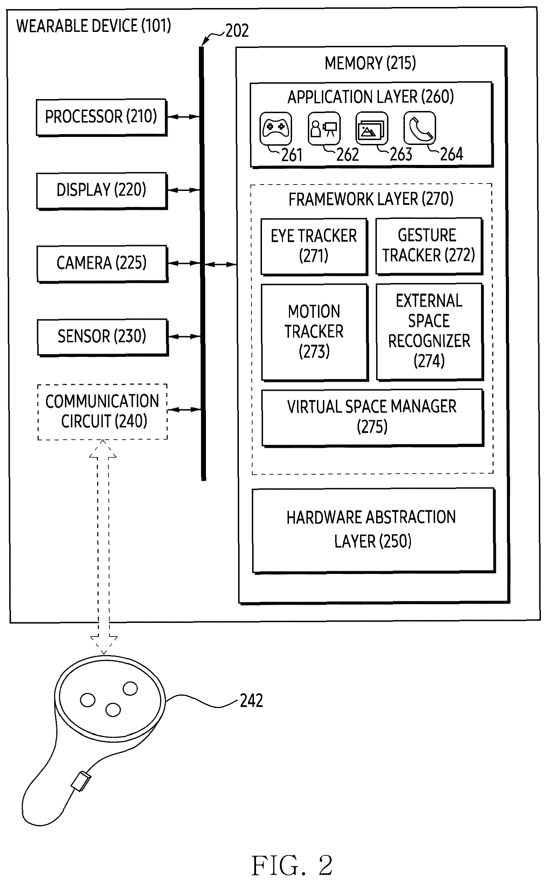

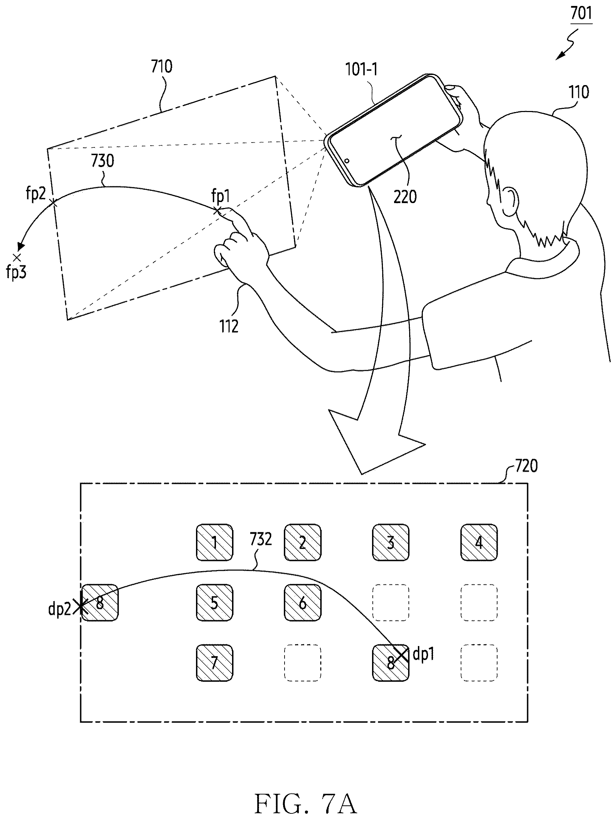

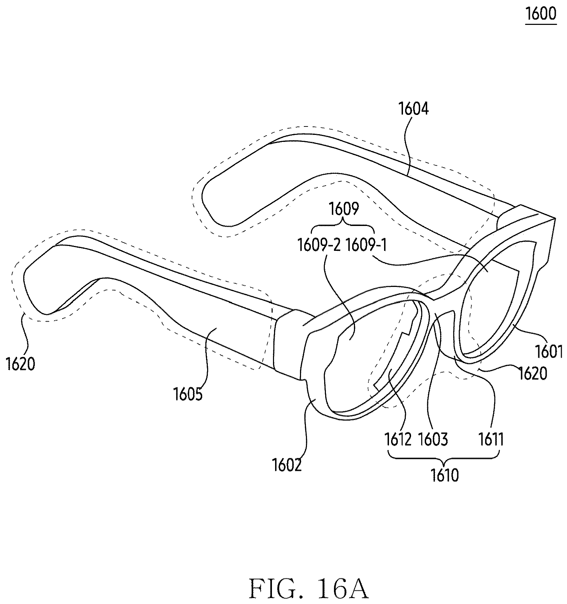

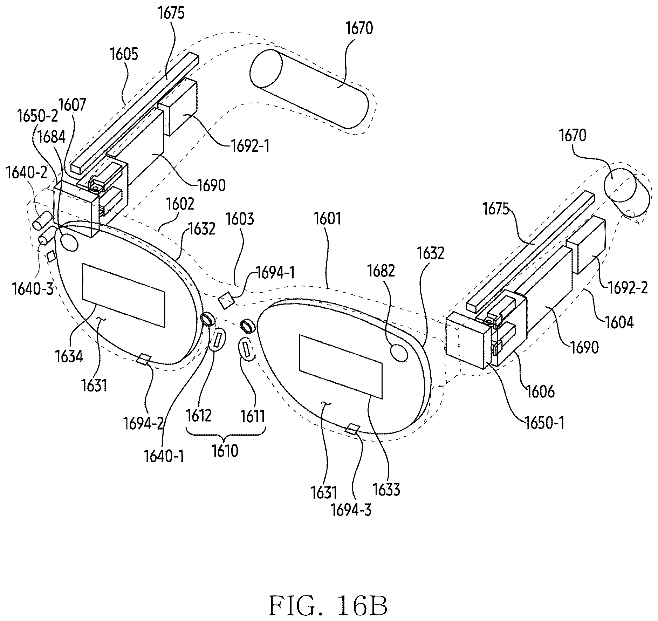

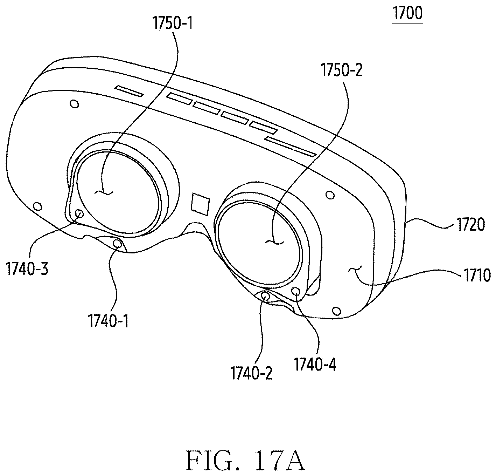

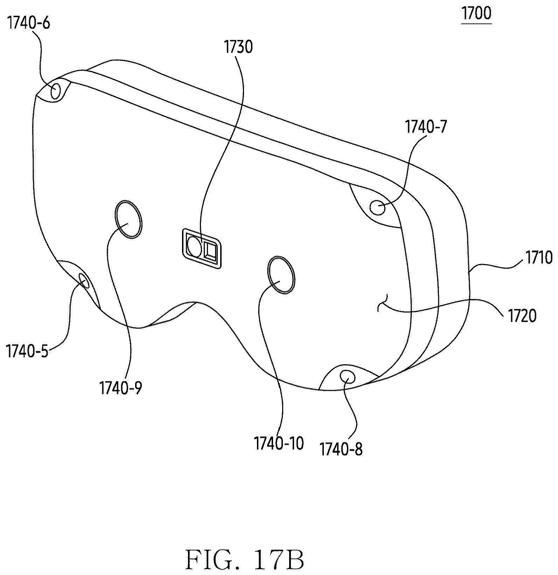

FIGS. 1A and 1B are diagrams an example screen displayed through a display of a wearable device 101 according to an embodiment. The wearable device 101 may include a head-mounted display (HMD) that is wearable on a user 110's head. Although the appearance of the wearable device 101 in a form of glasses is illustrated, the disclosure is not limited thereto. An example of one or more hardware included in the wearable device 101 is described by way of non-limiting example with reference to FIG. 2. An example of a structure of the wearable device 101 that is wearable on the user 110's head is described in greater detail below with reference to FIGS. 16A and 16B and/or 17A and 17B. The wearable device 101 may be referred to as an electronic device (e.g., an electronic device 101-1 of FIGS. 7A to 7C). For example, the electronic device may form an HMD, by being combined with an accessory for being attached to a user's head. The wearable device 101 may display a real world, may display a virtual world, or may display the real world and the virtual world together.

According to an embodiment, the wearable device 101 may execute a function related to a video see-through (VST) and/or virtual reality (VR). Referring to FIGS. 1A and 1B, in a state in which the user 110 wears the wearable device 101, the wearable device 101 may include a housing that covers user 110's eyes. The wearable device 101 may include a display disposed on a first surface of the housing facing the eye in the above state. The wearable device 101 may include a camera disposed on a second surface opposite to the first surface. Using the camera, the wearable device 101 may obtain an image and/or video representing ambient light. The wearable device 101 may output the image and/or video in a display disposed on the first surface, allowing the user 110 to recognize the ambient light through the display. A display area (or an active area) of the display disposed on the first surface may be formed by one or more pixels included in the display. The wearable device 101 may synthesize a virtual object with the image and/or video output through the display, allowing the user 110 to recognize the virtual object together with a real object recognized by the ambient light.

According to an embodiment, the wearable device 101 may execute functions related to augmented reality (AR) and/or mixed reality (MR). As shown in 1A and 1B, in a state in which the user 110 wears the wearable device 101, the wearable device 101 may include at least one lens disposed adjacent to the user 110's eyes. The wearable device 101 may combine light emitted from the display of the wearable device 101 with ambient light passing through the lens. The display area of the display may be formed in a lens through which ambient light passes. Since the wearable device 101 combines the ambient light with the light emitted from the display, the user 110 may see an image in which a real object recognized by the ambient light and a virtual object formed by the light emitted from the display are mixed. The augmented reality, mixed reality, and/or virtual reality described above may be referred to as extended reality (XR).

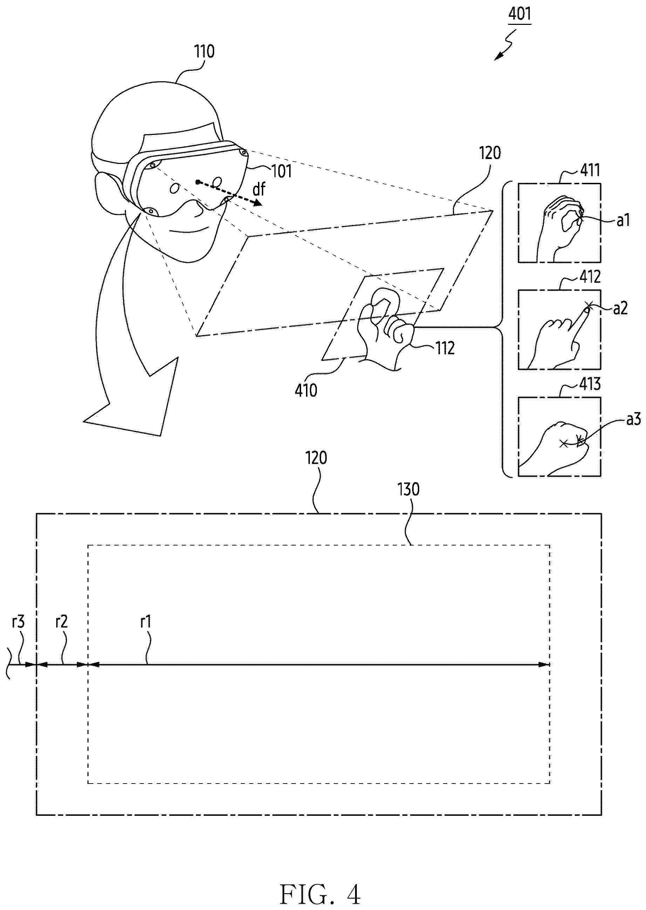

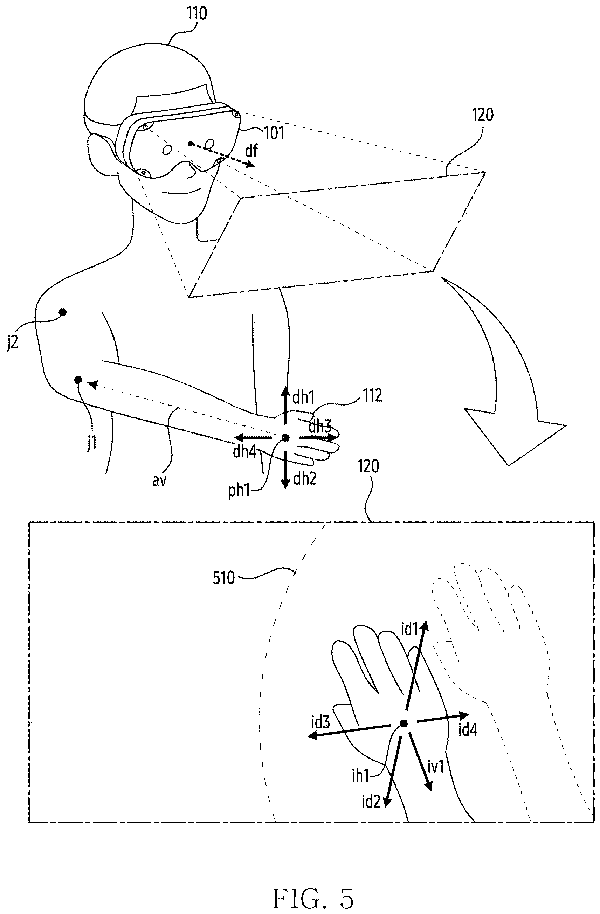

Referring to FIGS. 1A and 1B, according to an embodiment, the wearable device 101 may identify a body part such as a hand 112 based on one or more cameras (e.g., a three-dimensional camera) and/or a sensor (e.g., a depth sensor, a proximity sensor, and a time-of-flight (ToF) sensor). Referring to FIG. 1A, the wearable device 101 may identify a body part included in an external space that is sensible (e.g., able to be sensed) by the one or more cameras and/or the sensor using data of the one or more cameras and/or the sensor. Referring to FIG. 1A, the wearable device 101 may identify the hand 112 in field-of-view (FoV) 120 of a camera disposed toward the direction df (e.g., a front direction of the wearable device 101). The FoV may refer, for example, to an external space that is sensible by the camera. That the wearable device 101 identifies the hand 112 may include identifying at least one of a posture of the hand 112 in FoV 120, a position of the hand 112 in the FoV 120, and/or a type of gesture corresponding to the posture, based on the image and/or video of the camera. An example of an operation of the wearable device 101 performed to identify the hand 112 is described in greater detail below with reference to FIGS. 4 and 5. Hereinafter, an operation of the wearable device 101 for identifying the hand 112 of the user 110 is described, but the disclosure is not limited thereto.

Referring to FIGS. 1A and 1B, according to an embodiment, an example screen 130 displayed by the wearable device 101 is illustrated. The screen 130 may include a display area in which a virtual space, the real world, the mixed reality, or the extended reality is displayed through the display of the wearable device 101. For example, the wearable device 101 may display a three-dimensional virtual space surrounding a user 110's avatar, which has an arbitrary shape such as a sphere, a hemisphere, and a cylinder, with the user 110's avatar as a center point. The screen 130 may be an area currently being displayed through the display of the wearable device 101 in the virtual space. When the user 110 looks away, an area different from the area currently being displayed in the virtual space or an external space may be displayed on the wearable device 101. In other words, the external space is an area included in the virtual space, and at least a portion of the external space may include the area different from the area currently being displayed. On the screen 130, for example, in the virtual space, the wearable device 101 may display one or more virtual objects to the user 110. Referring to FIGS. 1A and 1B, a virtual object 140 having a shape of a three-dimensional cylinder is illustrated by way of example, but the disclosure is not limited thereto. The virtual object 140 displayed on the screen 130 may include a window provided from, for example, a software application (e.g., a web browser and/or a gallery) executed by the wearable device 101. The window may have a shape of a two-dimensional square, such as, for example, an activity of an Android operating system and/or a window (or pop-up-window) of, for example, a Windows operating system. The virtual object 140 may include a two-dimensional and/or three-dimensional widget (e.g., a weather widget) provided from the software application. The disclosure is not limited thereto, and the virtual object 140 may include any graphic object that may be displayed on the screen 130.

According to an embodiment, the wearable device 101 may display images including the virtual object 140 disposed at different positions to each of the two eyes of the user 110 substantially simultaneously. A difference (or distance) between the positions of the virtual object 140 commonly included in the images may be referred to as a binocular parallax. Using the binocular parallax, the wearable device 101 may adjust a distance sense of the virtual object 140 recognized by the user 110 wearing the wearable device 101. For example, the larger the binocular parallax of the virtual object 140, the user 110 viewing the virtual object 140 through the screen 130 may recognize that the virtual object 140 is disposed of at a close distance from the user 110.

According to an embodiment, the wearable device 101 may identify a body part (e.g., the hand 112) in the FoV 120 of the camera of the wearable device 101 while displaying the virtual object 140 through the display. Based on identifying the body part in the FoV 120, the wearable device 101 may identify a posture of the body part and/or a position of the body part in the FoV 120. Based on the posture and/or the position, the wearable device 101 may change the display of the virtual object 140 displayed on the screen 130. For example, based on identifying a body part in a preset posture for moving the virtual object 140, the wearable device 101 may display the virtual object 140 moved along a path of the body part moved in the FoV 120.

Referring to FIGS. 1A and 1B, the wearable device 101 may identify the posture of the hand 112 included in the FoV 120 of the camera using the camera. Based on identifying the hand 112 including a fingertip of an index finger in contact with a fingertip of a thumb in an example state of FIGS. 1A and 1B, the wearable device 101 may identify a posture of the hand 112 corresponding to a pinch gesture. The disclosure is not limited thereto, and the posture of the hand 112 corresponding to the pinch gesture may be identified based on the thumb and index finger having a shape of a ring. According to an embodiment, the wearable device 101 may identify an input indicating movement of the virtual object 140 based on the posture of the body part (e.g., the hand 112). For example, based on identifying the hand 112 having a posture of the pinch gesture illustrated in FIGS. 1A and 1B, the wearable device 101 may identify the input. For example, based on identifying that a position pfl of the hand 112 having the posture of the pinch gesture corresponds to a position pv1 in the screen 130 of the virtual object 140, for example, in the virtual space, the wearable device 101 may identify the input. For example, the preset posture for moving the virtual object 140 may include the posture of the hand 112 illustrated in FIGS. 1A and 1B.

Referring to FIGS. 1A and 1B, the wearable device 101 may move the virtual object 140 along a path 114 of the hand 112 in response to an input identified based on the hand 112 of the pinch gesture and indicating movement of the virtual object 140. Referring to FIGS. 1A and 1B, the wearable device 101 may move the virtual object 140 in the screen 130 along a path 141 corresponding to the path 114 of the hand 112. For example, the wearable device 101 identifying the hand 112 that moves from the position pfl to a position pf2 in the FoV 120 along the path 114 may move the virtual object 140 from the position pv1 to a position pv2 in the screen 130, for example, in virtual space. In FIGS. 1A and 1B, for convenience, the path 114 of the hand 112 is illustrated as if it were on a two-dimensional plane, but each of the position pf1, the position pf2, a position pf3, a position pf4, a position pf5, and a position pf6 on the path 114 may have three-dimensional coordinate values x, y, and z. In addition, a form (e.g., two-dimensional coordinates or three-dimensional coordinates) of the positions (the pf1 to the pf6) on the path 114 may be determined according to a form (e.g., the two-dimensional plane or a three-dimensional space) displayed on the screen 130. For example, in case that the screen 130 is the virtual space, the path 114 or positions pf1 to pf6 of the hand 112 may have a three-dimensional coordinate value, and a position of the object 140 in the virtual space may be displayed according to the path 114 of the hand 112. In addition, referring to FIGS. 1A and 1B, according to an embodiment, the wearable device 101 may display a virtual object 142 representing the hand 112. The virtual object 142 may be referred to as the user 110's avatar. The virtual object 142 may have a shape corresponding to the posture of the hand 112 and may be displayed based on a position in a virtual space corresponding to the position of the hand 112. Referring to FIG. 1A, the virtual object 142 having a shape of holding the virtual object 140 in the virtual space with the pinch gesture or holding it with a hand is illustrated as an example. In addition, instead of being displayed in a shape of a user 110's hand, a shape of a pointer, a ray, a stick, or various tools may be displayed.

In an embodiment, a range (e.g., the FoV 120) in which the wearable device 101 may detect the body part using the one or more cameras and/or the sensor may be finite. In an example state of FIGS. 1A and 1B in which the user 110 wears the wearable device 101, a range (or area) in which the user 110 may move the hand 112 may be different from the FoV 120 of the camera of the wearable device 101. For example, the hand 112 moved along the path 114 may be moved out of the FoV 120, at the position pf3 of an edge of the FoV 120. In a state in which the virtual object 140 is moved along the path 114, the wearable device 101 may identify that the body part (e.g., the hand 112) is moved out of the FoV 120 through the position pf3 of the edge of the FoV 120 using the camera. Based on identifying that the body part (e.g., the hand 112) is moved out of the FoV 120 through the position pf3 of the edge of the FoV 120, the wearable device 101 may display the virtual object 140 at the position pv3 of the display corresponding to the position pf3.

In an embodiment, after the hand 112 is moved out of the FoV 120, identifying the position and/or the posture of the hand 112 by the wearable device 101 using the camera may be at least temporarily ceased. Referring to FIG. 1A, while the hand 112 moves along the path 114 from the position pf3 of the edge of the FoV 120 to the position pf4 outside of the FoV 120, the wearable device 101 that obtains an image and/or a video of the inside of the FoV 120 cannot identify the hand 112. While the hand 112 is moved out of the FoV 120, the wearable device 101 may display the virtual object 140 based on the last position in the FoV 120 that identified the hand 112. In the example state of FIG. 1A, the wearable device 101 may display the virtual object 140 at the position pv3 in the screen 130 corresponding to the last position pf3 in the FoV 120 that identified the hand 112. For example, while the hand 112 moves from the position pf3 of the edge of the FoV 120 to the position pf4 outside of the FoV 120 along the path 114, the wearable device 101 may maintain the position of the virtual object 140 in the screen 130 as the position pv3.

According to an embodiment, after tracking the hand 112 is ceased as it is moved out of the FoV 120, the wearable device 101 may re-execute a function that was executed before ceasing to track the hand 112 based on identifying the hand 112 that is moved into the FoV 120. In the example state of FIG. 1A, the wearable device 101 identifying the hand 112 that moves into the FoV 120 through the position pf5 of the edge of the FoV 120 along the path 114 may re-execute a function (e.g., a function of moving the virtual object 140 based on the path 114 of the hand 112) executed by the hand 112 before moving out of the FoV 120 through the position pf3. Since the function is re-executed, the wearable device 101 may compensate for unintentional cessation of the function, which is generated by the hand 112 moved to the outside of the FoV 120.

Referring to FIG. 1A, after displaying the virtual object 140 at the position pv3 based on the hand 112 before being moved out of the FoV 120, the wearable device 101 may display a virtual object 140 moved from the position pv3 and moved along the path 114 of the body part in the FoV 120 based on identifying the body part (e.g., the hand 112) of the preset posture (e.g., the posture of the pinch gesture) moved into the FoV 120. For example, the wearable device 101 identifying the hand 112 having the posture of the pinch gesture moved into the FoV 120 may change the position pv3 of the virtual object 140 in the screen 130 based on the path 114 of the hand 112. For example, the wearable device 101 identifying the hand 112 that moves from the position pf5 of the edge of the FoV 120 to the position pf6 in the FoV 120 along the path 114 may move the virtual object 140 from the position pv5 corresponding to the position pf5 to the position pv6 in the screen 130 along the path 114.

Referring to FIG. 1B, the posture of the hand 112 may be changed from the pinch gesture to another posture (e.g., an open posture of all fingers) that is different from the pinch gesture, at the position pf4 outside of the FoV 120. In case that the hand 112 having the other posture moves into the FoV 120 through the position pf5 of the edge of the FoV 120, the wearable device 101 may identify the other posture of the hand 112. Based on identifying the other posture which is different from the pinch gesture of the hand 112 before being moved out of the FoV 120, the wearable device 101 may not change the virtual object 140 displayed according to the position pv3 of the hand 112 before being moved out of the FoV 120 according to the position of the hand 112. For example, while the hand 112 having the other posture which is different from the pinch gesture moves from the position pf5 of the edge of the FoV 120 to the position pf6 in the FoV 120, independent of displaying the virtual object 142 (e.g., an avatar representing the hand of the user 110) moved from the position pv5 in the screen 130 corresponding to the position pf5 to the position pv6 in the screen 130 corresponding to the position pf6, the wearable device 101 may maintain displaying the virtual object 140 in the position pv3.

As described above, according to an embodiment, the wearable device 101 may identify a user 110's gesture performed independently of a detectable range (e.g., the FoV 120) by the camera and/or the sensor of the wearable device 101. The gesture may include a gesture performed by the hand 112 moved along the path 114. For example, the wearable device 101 that identifies the path 114 of the hand 112 discontinuously recognized as it moves out of the FoV 120 may continuously execute a function (e.g., a function of moving the virtual object 140) executed by the hand 112, based on whether the posture of the hand 112 is maintained in the preset posture.

Hereinafter, referring to FIG. 2, one or more hardware included in the wearable device 101 and/or a software application executed by the wearable device 101 to perform the operation of the wearable device 101 described above with reference to FIGS. 1A and 1B is described in greater detail.

FIG. 2 is a block diagram illustrating an example configuration of a wearable device 101 according to an embodiment. The wearable device 101 of FIGS. 1A and 1B may be an example of the wearable device 101 described with reference to FIG. 2.

According to an embodiment, the wearable device 101 may include at least one of a processor (e.g., including processing circuitry) 210, a memory 215, a display 220, a camera 225, a sensor 230, and/or a communication circuit 240. The processor 210, the memory 215, the display 220, the camera 225, the sensor 230, and the communication circuit 240 may be electronically and/or operably coupled with each other by an electronical component such as a communication bus 202. Hereinafter, that hardware is operably coupled with each other may refer, for example, to a direct connection or an indirect connection between hardware being established by wire or wirelessly so that second hardware is controlled by first hardware among hardware. Although illustrated based on different blocks, the disclosure is not limited thereto, and some (e.g., at least some of the processor 210, the memory 215, and the communication circuit 240) of the hardware of FIG. 2 may be included in a single integrated circuit such as a system on a chip (SoC). A type and/or the number of hardware included in the wearable device 101 is not limited to that illustrated in FIG. 2. For example, the wearable device 101 may include only some of the hardware illustrated in FIG. 2.

In an embodiment, the processor 210 of the wearable device 101 may include hardware for processing data based on one or more instructions. The hardware for processing data may include, for example, may include an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, quad core, or hexa core. The processor 210 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment, the memory 215 of the wearable device 101 may include hardware for storing data and/or an instruction that are input and/or output to the processor 210 of the wearable device 101. The memory 215 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, hard disk, compact disk, solid state drive (SSD), and embedded multi media card (eMMC).

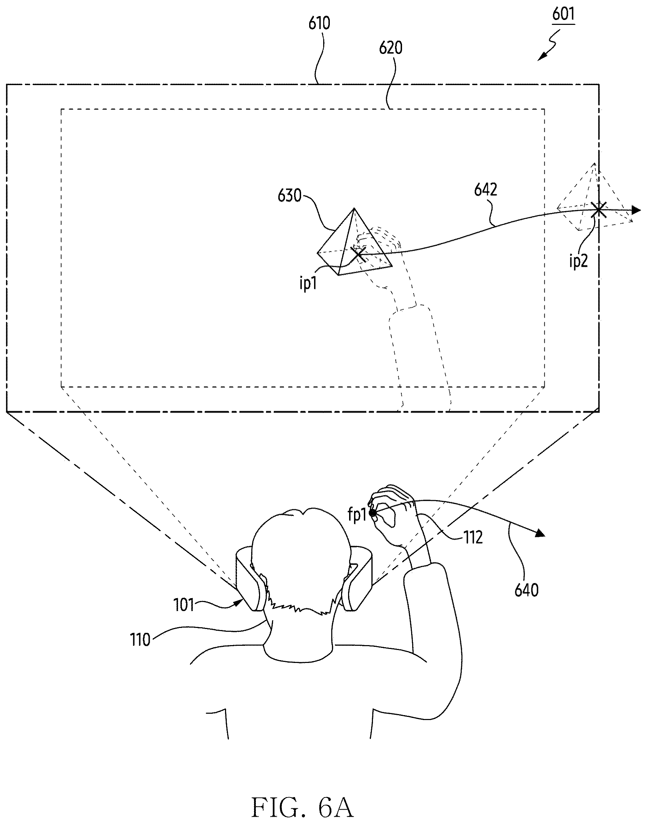

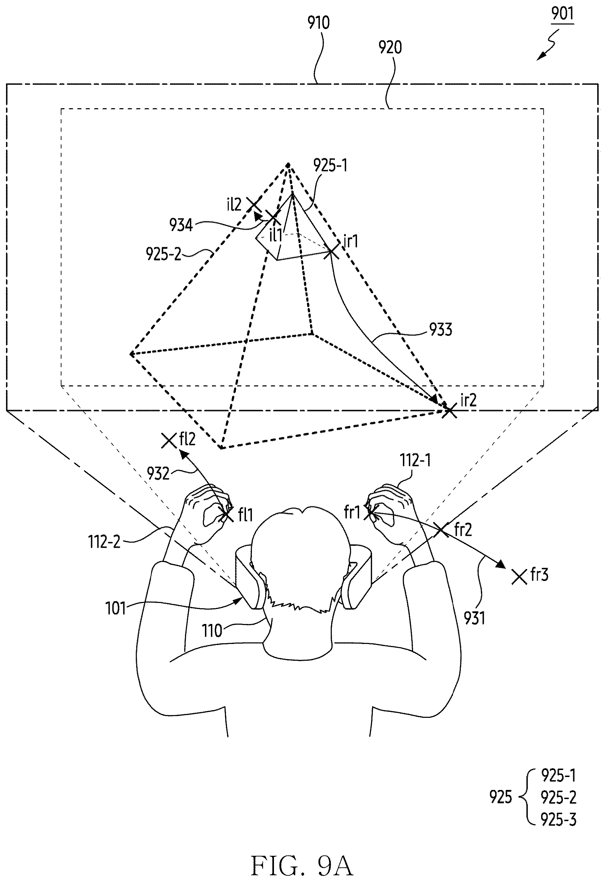

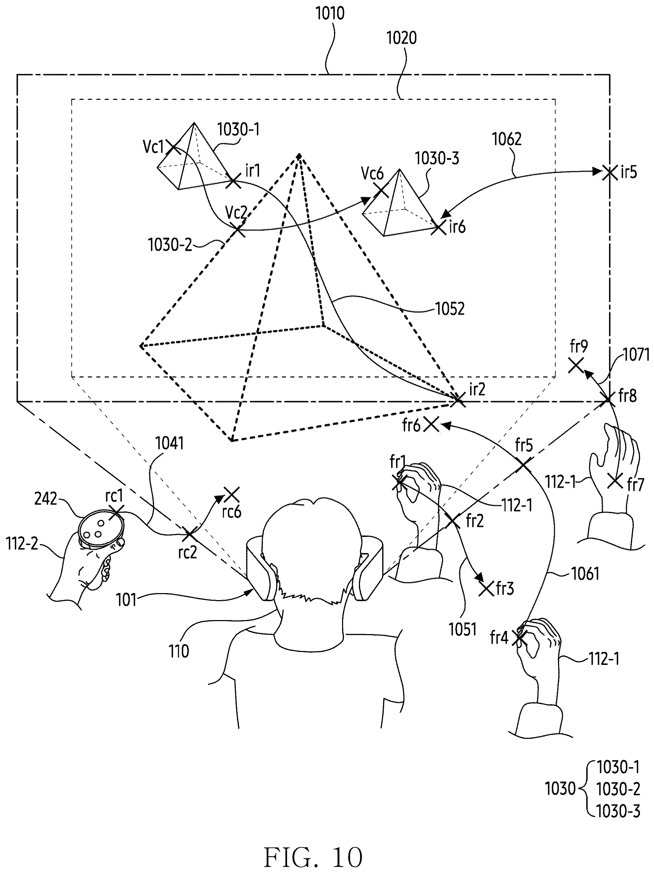

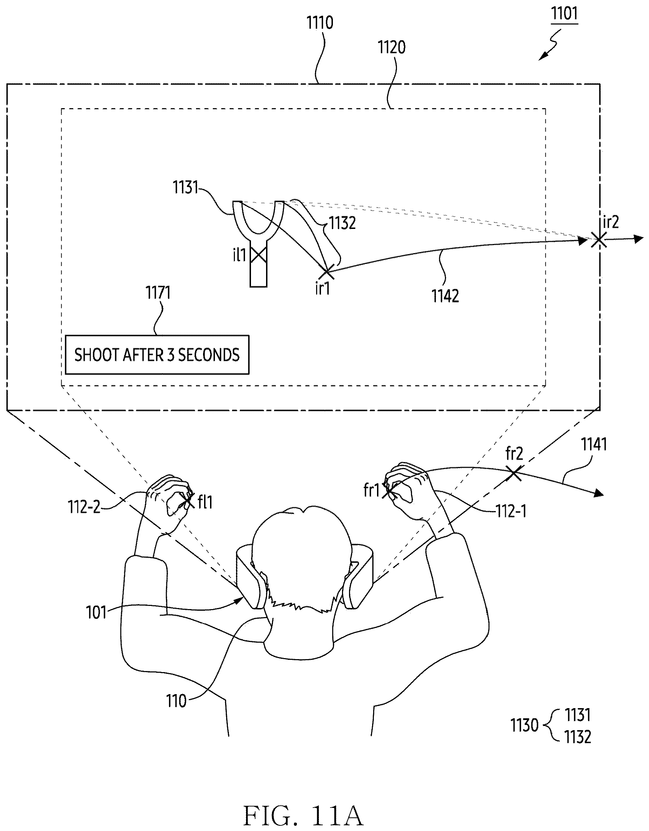

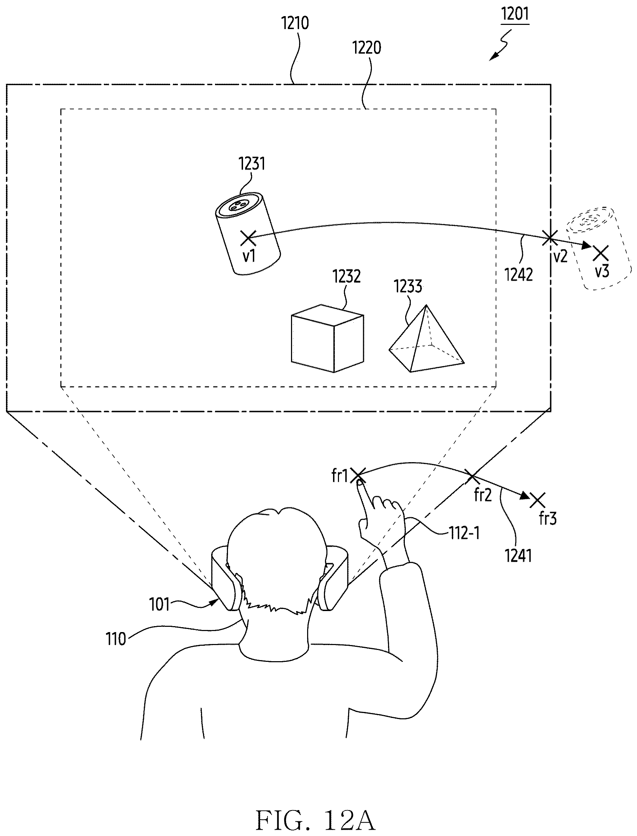

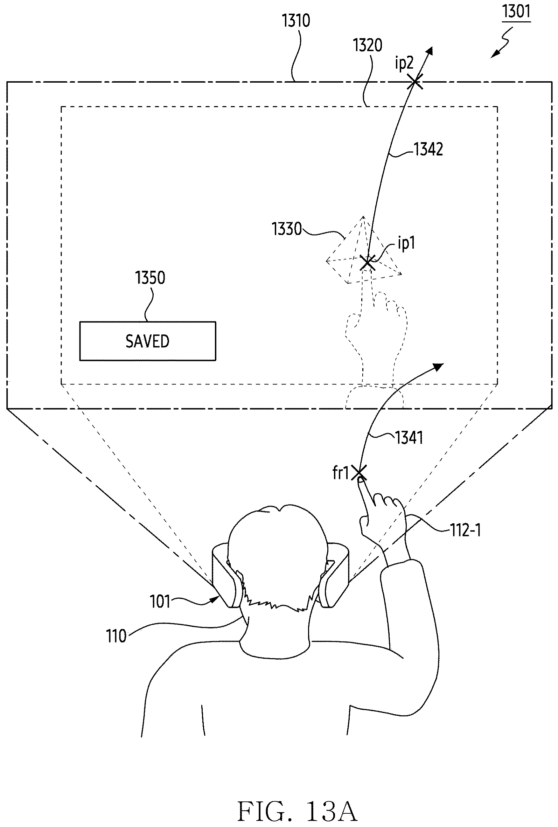

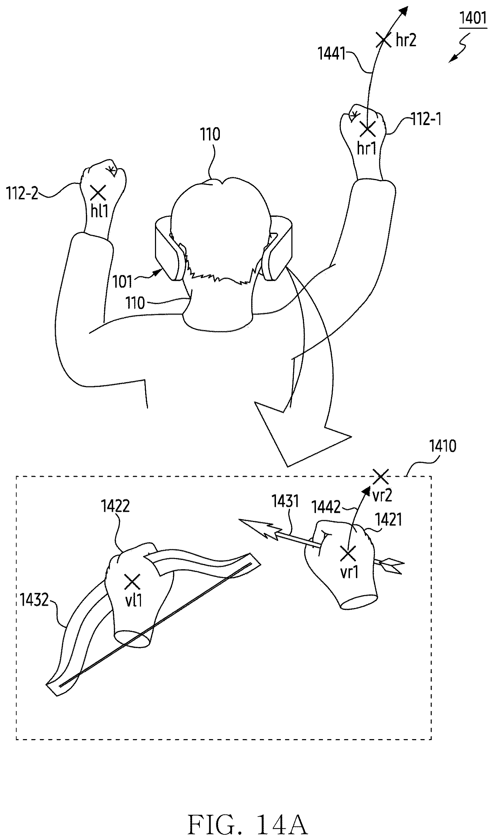

In an embodiment, the display 220 of the wearable device 101 may output visualized information (e.g., a screen 130 of FIGS. 1A and 1B, 4, and 5, a screen 620 of FIGS. 6A to 6C, a screen 720 of FIGS. 7A to 7C, a screen 920 of FIGS. 9A to 9C, a screen 1020 of FIG. 10, a screen 1120 of FIGS. 11A to 11C, a screen 1220 of FIGS. 12A to 12B, a screen 1320 of FIGS. 13A to 13C, and a screen 1410 of FIGS. 14A to 14C) to a user (e.g., a user 110 of FIGS. 1A to 1B, 4, 5, 6A to 6C, 7A to 7C, 9A to 9C, 10, 11A to 11C, 12A to 12B, 13A to 13C, and 14A to 14C). For example, the display 220 may output the visualized information to the user by being controlled by the processor 210 including a circuit such as a graphic processing unit (GPU). The display 220 may include a flexible display, a flat panel display (FPD), and/or an electronic paper. The flexible display may have a deformable structure by an external force. The FPD may include a liquid crystal display (LCD), a plasma display panel (PDP), and/or one or more light emitting diodes (LEDs). The LED may include an organic LED (OLED). The display 220 of FIG. 2 may include at least one display 1650 and 1750, which will be described in greater detail below with reference to FIGS. 16A and 16B and/or 17A and 17B.

According to an embodiment, the camera 225 of the electronic device 101 may include one or more optical sensors (e.g., a charged coupled device (CCD) sensor, a complementary metal oxide semiconductor (CMOS) sensor) that generate an electrical signal indicating a color and/or brightness of light. A plurality of optical sensors included in the camera 225 may be disposed in a form of a 2 dimensional array. The camera 225 may generate 2 dimensional frame data that corresponds to light reaching optical sensors of the 2 dimensional array, by obtaining the electrical signals of each of the plurality of optical sensors substantially simultaneously. For example, photo data captured using the camera 240 may refer, for example, to a 2 dimensional frame data obtained from the camera 225. For example, video data captured using the camera 225 may refer, for example, to a sequence of a plurality of 2 dimensional frame data obtained from the camera 225 according to a frame rate. The camera 225 may be disposed toward a direction in which the camera 225 receives light, and may further include a flash light for outputting light toward the direction.

According to an embodiment, the sensor 230 of the wearable device 101 may generate electronic information that may be processed by the processor 210 and/or the memory 215 of the wearable device 101 from non-electronic information related to the wearable device 101. The information may be referred to as sensor data. The sensor 230 may include a global positioning system (GPS) sensor for detecting a geographic location of the wearable device 101, an image sensor, an illuminance sensor, and/or a time-of-flight (ToF) sensor, and an inertial measurement unit (IMU) for detecting a physical motion of the wearable device 101. In an embodiment, the IMU may include at least one of an acceleration sensor, a gyro sensor, or a gravity sensor. Using the IMU, the processor 210 of the wearable device 101 may identify a motion of the wearable device 101 based on 6 degree of freedom (DoF). The motion of the wearable device 101 based on the 6 degree of freedom (DoF) may include movement and rotation (e.g., roll, pitch, and yaw) of the wearable device 101 on three axes (e.g., x-axis, y-axis, and z-axis) perpendicular to each other.

In an embodiment, the communication circuit 240 of the wearable device 101 may include a hardware component for supporting transmission and/or reception of an electrical signal between the wearable device 101 and an external electronic device (e.g., a remote controller 242). The communication circuit 240 may include, for example, at least one of a MODEM, an antenna, and an optic/electronic (O/E) converter. The communication circuit 240 may support transmission and/or reception of the electrical signal based on various types of protocols, such as ethernet, local area network (LAN), wide area network (WAN), wireless fidelity (WiFi), Bluetooth, bluetooth low energy (BLE), ZigBee, long term evolution (LTE), 5G new radio (NR), and/or 6G.

Referring to FIG. 2, according to an embodiment, the wearable device 101 may receive a signal for executing at least one function supported by the wearable device 101 from the remote controller 242 connected through the communication circuit 240. For example, the remote controller 242 may include one or more buttons, a joystick, and/or a touch sensor for receiving user input. Based on the signal, the processor 210 of the wearable device 101 may execute the at least one function.

Although not illustrated, according to an embodiment, the wearable device 101 may include an output means for outputting information in a form other than a visualized form. For example, the wearable device 101 may include a speaker for outputting an acoustic signal. For example, the wearable device 101 may include a motor for providing haptic feedback based on vibration.

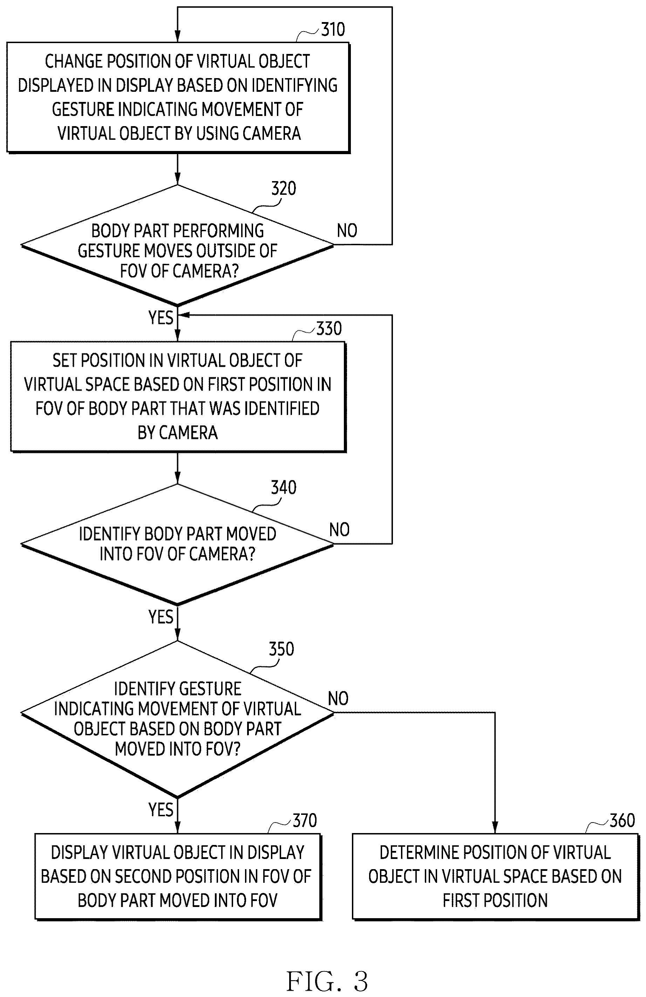

Referring to FIG. 2, according to an embodiment, one or more instructions (or commands) indicating a calculation and/or operation to be performed by the processor 210 of the wearable device 101 on data may be stored in the memory 215 of the wearable device 101. A set of one or more instructions may be referred to as a program, firmware, operating system, process, routine, sub-routine, and/or application, or the like. Hereinafter, that the application is installed in an electronic device (e.g., the wearable device 101) may refer, for example, to one or more instructions provided in a form of the application being stored in the memory 215, and the one or more applications are stored in an executable format (e.g., a file having an extension specified by an operating system of the electronic device 101) by the processor of the electronic device. According to an embodiment, the wearable device 101 may, for example, perform an operation of FIGS. 3, 8, and/or 15, by executing one or more instructions stored in the memory 215.

Referring to FIG. 2, programs installed on the wearable device 101 may be classified into any one layer among different layers including an application layer 260, a framework layer 270, and/or a hardware abstraction layer (HAL) 250, based on a target. For example, in the hardware abstraction layer 250, programs (e.g., drivers) designed to target the hardware (e.g., the display 220, the camera 225, the sensor 230, and/or the communication circuit 240) of the wearable device 101 may be classified. For example, in the framework layer 270, programs (e.g., an eye tracker 271, a gesture tracker 272, a motion tracker 273, an external space recognizer 274, and/or a virtual space manager 275) designed to target at least one of the hardware abstraction layer 250 and/or the application layer 260 may be classified. Programs classified as the framework layer 270 may provide an application programming interface (API) executable based on another program.

Referring to FIG. 2, a program designed to target a user (e.g., the user 110 of FIGS. 1A to 1B) who controls the wearable device 101 may be classified in the application layer 260. For example, a program classified as the application layer 260 may include at least one of an application 261 for a VR-based game, an application 262 for playing and/or streaming video, an application 263 for reading media content (e.g., an image and/or a video) of the memory 215, or an application 264 for a call connection. The disclosure is not limited thereto. For example, the program classified as the application layer 260 may cause the execution of a function supported by programs classified as the framework layer 270 based on a call of the API.

Referring to FIG. 2, according to an embodiment, the processor 210 may process information related to a gaze of a user wearing the wearable device 101 based on the execution of the eye tracker 271 in the framework layer 270. For example, the processor 210 may obtain an image including the user's eyes from a first camera disposed toward the user's eyes, in a state worn by the user. Based on a position and/or a direction of a pupil included in the image, the processor 210 may identify the direction of the user's gaze.

Referring to FIG. 2, according to an embodiment, the processor 210 may identify a motion of a preset body part including a hand based on execution of the gesture tracker 272 in the framework layer 270. For example, the processor 210 may obtain an image and/or video including the body part from the second camera. Based on the motion and/or posture of the preset body part, represented by the image and/or video, the processor 210 may identify a gesture performed by the preset body part.

Referring to FIG. 2, according to an embodiment, the processor 210 may identify the motion of the wearable device 101 based on execution of the motion tracker 273 in the framework layer 270. In a state in which the wearable device 101 is worn by the user, the motion of the wearable device 101 may be related to a motion of the user's head. For example, the processor 210 may identify a direction of the wearable device 101 that substantially matches a direction of the head. The processor 210 may identify the motion of the wearable device 101 based on sensor data of the sensor 230 including the IMU.

Referring to FIG. 2, according to an embodiment, the processor 210 may obtain information on an external space including the wearable device 101 based on execution of the external space recognizer 274 in the framework layer 270. The information on the external space may include a shape and/or position of one or more external objects (e.g., a wall structure) included in the external space. The information on the external space may include a position relationship with respect to the wearable device 101 of one or more external objects. Based on the execution of the external space recognizer 274, the processor 210 of the wearable device 101 may obtain or generate the information representing the external space in three dimensions.

Referring to FIG. 2, according to an embodiment, the processor 210 may perform rendering on the virtual space based on execution of the virtual space manager 275 in the framework layer 270. In a state in which the virtual space manager 275 is executed, the processor 210 may identify a virtual space including at least one virtual object provided from at least one software application in the application layer 260. In an embodiment, based on the external space recognizer 274 and/or the virtual space manager 275, the processor 210 may identify a virtual space mapped to the external space. The processor 210 may determine a reference position in the virtual space based on a position and/or direction of the wearable device 101 in the external space identified based on data of the sensor 230. The reference position may correspond to the position of the wearable device 101 in the virtual space. In an embodiment, the processor 210 may perform simultaneous localization and mapping (SLAM) for recognizing the external space and recognizing a position of the wearable device 101 in the external space based on the reference position. Based on the SLAM, the processor 210 may generate or obtain the virtual space including the information on the external space.

According to an embodiment, the processor 210 of the wearable device 101 may identify a body part (e.g., a hand 112 of FIGS. 1A and 1B) of the user wearing the wearable device 101 using the camera 225. Even if the body part is moved out of FoV (e.g., FoV 120 in FIGS. 1A and 1B) of the camera 225, the processor 210 may re-execute a function that was executed before being moved out of the FoV based on a posture of the body part moved into the FoV. For example, in case that the posture of the body part moved into the FoV corresponds to the posture of the body part before being moved out of the FoV, the processor 210 may execute a function corresponding to the posture of the body part moved into the FoV based on a state in which the function was executed based on the body part before being moved out of the FoV.

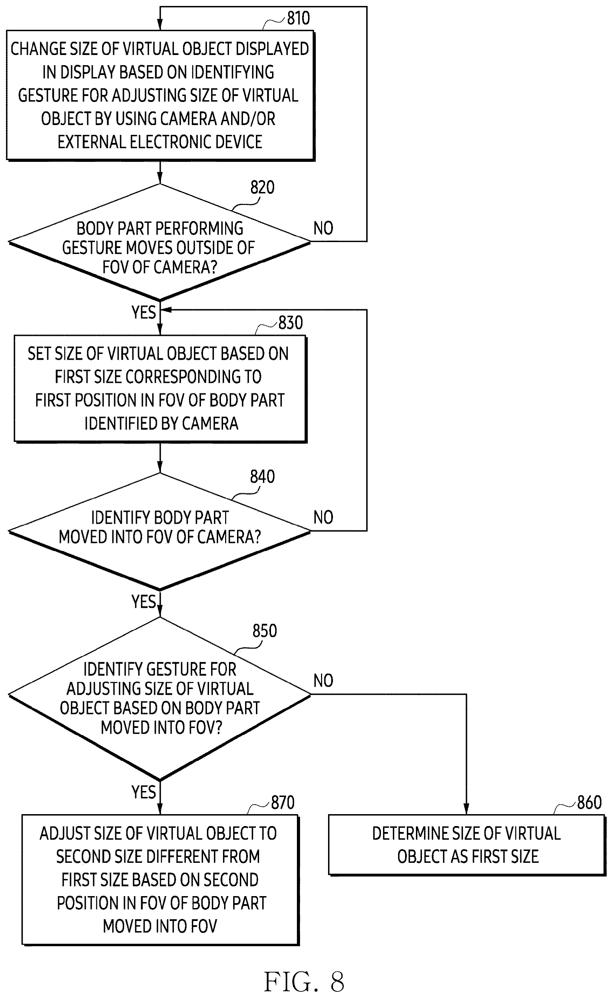

For example, as described in greater detail below with reference to FIGS. 3 to 7C, in a state of moving a virtual object displayed on the display 220 by a body part in a preset posture, the processor 210 may move the virtual object again based on the body part being moved back into the FoV, even if the body part is moved out of the FoV. For example, as described in greater detail below with reference to FIGS. 8 to 10, in a state of adjusting a size of the virtual object by one or more body parts, the processor 210 may adjust the size of the virtual object again based on the one or more body parts moved back into the FoV even though the one or more body parts are moved out of the FoV. The disclosure is not limited thereto, and as described in greater detail below with reference to FIGS. 11A to 15, the processor 210 may display the virtual object hidden by the body part which was moved out of the FoV again based on the posture of the body part moved into the FoV.

Hereinafter, an operation performed by the wearable device 101 of FIG. 2 is described in greater detail with reference to FIG. 3.

FIG. 3 is a flowchart illustrating example operations of a wearable device according to an embodiment. The wearable device 101 of FIGS. 1A and 1B, FIG. 2, and/or a processor 210 of FIG. 2 may perform operations described with reference to FIG. 3.

Referring to FIG. 3, in operation 310, according to an embodiment, a processor of the wearable device may change a position of a virtual object displayed in the display based on identifying a gesture indicating movement of the virtual object using a camera. The camera of the operation 310 may include a camera 225 of FIG. 2. Although operation of the wearable device and/or processor based on the camera is described, the disclosure is not limited thereto. For example, the processor of the wearable device may identify the gesture of the operation 310 using a depth sensor included in the wearable device.

In an embodiment, the processor may identify a body part (e.g., a hand 112 of FIGS. 1A and 1B) moved in FoV (e.g., FoV 120 of FIGS. 1A and 1B) of the camera using an image and/or video obtained from the camera. The processor may identify the body part by performing object recognition on the image and/or the video. For example, the processor may identify a visual object corresponding to the body part in the image and/or video, based on the object recognition. Based on a posture (e.g., a posture of a pinch gesture illustrated in FIGS. 1A and 1B) of the body part identified based on the visual object, the processor may identify the gesture of the operation 310. The disclosure is not limited thereto, and the processor may identify the gesture of the operation 310 based on a software application executed by the processor. For example, a gesture indicating the movement of the virtual object may correspond to a posture defined by the software application.

In an embodiment, the processor that identified the gesture indicating the movement of the virtual object of the operation 310 may change a position of the virtual object (e.g., a virtual object 140 of FIGS. 1A to 1B) in the screen (e.g., a screen 130 of FIGS. 1A to 1B) displayed on the display. The processor may change the position of the virtual object in the virtual space based on the gesture of the operation 310. The processor may change the position of the virtual object in the display, based on a position in the FoV of a body part performing the gesture of the operation 310. A relationship between the FoV of the camera and a screen displayed on the display is described in greater detail below with reference to FIG. 4.

Referring to FIG. 3, in operation 320, according to an embodiment, the processor of the wearable device may identify whether the body part performing the gesture moves outside of the FoV of the camera. Before the body part is moved out of the FoV, or while the body part is moving in the FoV (320-No), the processor may change the position of the virtual object based on the operation 310. While the body part is moving in the FoV, the processor may change the position of the virtual object based on a path (e.g., a path 114 of FIG. 1A) of the body part that performed the gesture of the operation 310. While moving the virtual object 140 of FIG. 1A based on the operation 310, the processor may move the virtual object 140 along the path 141.

Referring to FIG. 3, based on identifying a body part moved out of the FoV of the camera based on the operation 320 (320-Yes), the processor of the wearable device may perform operation 330. In the operation 330, the processor may set a position in the virtual object of the virtual space based on a first position in the FoV of the body part that was identified by the camera. The processor may determine the position of the virtual object based on the first position in the FoV of the body part before being moved out of the FoV. The processor may dispose the virtual object at a position in a virtual space corresponding to the first position. For example, a virtual object that was being moved in the display and/or virtual space based on the operation 310 may be disposed at the first position of the body part last identified by the camera based on the operation 330.

In an embodiment, the processor may set the position of the virtual object in the virtual space based on a relative position relationship between the wearable device and the first position. For example, based on the position relationship between the first position and the wearable device at timing when the body part is moved out of the FoV, the processor may set the position of the virtual object in the virtual space. In the above example, in case that the user wearing the wearable device moves, the processor may move the virtual object in the virtual space using the position relationship. In the above example, the user who sees the virtual object moved in the virtual space according to the position relationship may recognize that the virtual object follows the user. For example, the position of the virtual object set based on the operation 330 may be interlocked with a position of the wearable device.

Referring to FIG. 3, after setting the position of the virtual object based on the first position of the operation 330, the processor may obtain information on the external space using the camera. In operation 340 of FIG. 3, according to an embodiment, the processor of the wearable device may identify a body part moved into the FoV of the camera. Before identifying the body part in the FoV (340-No), or in case that the body part is not identified in the FoV, the processor may maintain the position of the virtual object in the virtual space set based on the operation 330. Based on identifying the body part moved into the FoV of the camera (340-Yes), the processor may perform operation 350. For example, at the timing when the hand 112 of FIG. 1A moves from a position pf5 of an edge of the FoV 120 into the FoV 120, the processor may perform the operation 350.

Referring to FIG. 3, in the operation 350, according to an embodiment, the processor of the wearable device may identify the gesture indicating the movement of the virtual object based on the body part moved into the FoV. For example, the processor may identify whether the body part identified using the camera corresponds to (or matches) a body part which was moved out of the FoV. For example, the processor may identify whether the posture of the body part moved into the FoV corresponds to the gesture of the operation 310. The gesture of the operation 350 is not identified (350-No), or before the gesture of the operation 350 is identified, the processor may perform operation 360. For example, in case that the posture of the body part moved into the FoV does not correspond to the gesture of the operation 310, the processor may perform the operation 360. Based on identifying the gesture of the operation 350 from the body part moved into the FoV (350-Yes), the processor may perform operation 370.

Referring to FIG. 3, in operation 360, according to an embodiment, the processor of the wearable device may determine the position of the virtual object in the virtual space based on the first position. The processor may determine the last position of the virtual object that was changed based on the operation 310 as the position of the virtual object. The processor may determine the position of the virtual object in the virtual space independent of the body part moved into the FoV based on identifying a gesture different from the gesture of the operation 350. The processor that disposed the virtual object at the first position interlocked with the position of the wearable device based on the operation 330 may disable interlocking between the position of the wearable device and the position in the virtual space of the virtual object based on the first position, by performing the operation 360. For example, based on the operation 360, the processor may set the position of the virtual object in the virtual space to coordinate values in the virtual space corresponding to the first position.

Referring to FIG. 3, in the operation 370, according to an embodiment, the processor of the wearable device may display the virtual object in the display based on a second position in the FoV of the body part moved into the FoV. Similar to the operation 310, the processor may resume changing the position of the virtual object based on the second position. Based on the operation 370, the processor may move a virtual object disposed at a position in the virtual space corresponding to the first position to the second position of the body part moved into the FoV. For example, that the processor changes the position of the virtual object based on the operation 370 may be performed similarly to the operation 310.

As described above, according to an embodiment, the processor of the wearable device may identify whether a first posture (or a first gesture) of the body part corresponds to a second posture (or a second gesture) of the body part that was identified before re-entry, based on the re-entry of the body part to the FoV. In case that the first posture corresponds to the second posture, the processor may re-execute a function (e.g., a function of changing the position of the virtual object of the operation 310) that was executed based on the second posture. For example, the processor may re-execute the function, which was interrupted by a mismatch between the range in which the body part may move and the FoV.

Hereinafter, an example operation of the wearable device identifying the gesture performed by the body part, such as operations 310, 340, and 350 of FIG. 3 is described in greater detail with reference to FIGS. 4 and/or 5.

FIG. 4 is a diagram illustrating an example operation performed by a wearable device 101 to identify a body part. The wearable device 101 of FIGS. 1A and 1B, FIG. 2, and/or a processor 210 of FIG. 2 may perform an operation described with reference to FIG. 4. An operation of the wearable device 101 described with reference to FIG. 4 may be related to at least one of operations of FIG. 3.

Referring to FIG. 4, an example state 401 of the wearable device 101 that has identified a body part (e.g., a hand 112) in the FoV 120 is illustrated. Using an image and/or video obtained from a camera (e.g., a camera 225 of FIG. 2) of the wearable device 101, the wearable device 101 may identify the body part (e.g., the hand 112) in the FoV 120. For example, the wearable device 101 may identify a portion 410 corresponding to the hand 112 in the image obtained from the camera. According to an embodiment, the wearable device 101 may identify a gesture performed by the hand 112 using the portion 410 of the image corresponding to the hand 112.

According to an embodiment, the wearable device 101 may identify a posture of the hand 112 based on one or more feature points included in the portion 410. The disclosure is not limited thereto, and the wearable device 101 may identify the posture of the hand 112 using a neural network trained to identify the hand 112. The neural network may, for example, and without limitation, have a structure based on a convolutional neural network (CNN).

Referring to FIG. 4, portions 411, 412, and 413 of an image corresponding to the hand 112 in different postures illustrated by way of non-limiting example. In case that an image including the portion 411 is identified, the wearable device 101 may identify a pinch gesture indicated by a thumb and index finger of the hand 112 connected in a form of a ring. In case of identifying the image including the portion 412, the wearable device 101 may identify a pointing gesture indicated by an unfolded index finger and the other folded fingers. In case of identifying the image including the portion 412, the wearable device 101 may identify a clenched gesture indicated by five folded fingers.

In an embodiment, the wearable device 101 that has identified the hand 112 in the FoV 120 may execute a function corresponding to a gesture of the hand 112. The function may include a function for moving a virtual object (e.g., a virtual object 140 of FIGS. 1A and 1B), which is described with reference to FIGS. 1A and 1B. A pair of the gesture of the hand 112 and a function matching the gesture may be set by a software application executed by the wearable device 101. The wearable device 101 may execute a function for moving the virtual object based on identifying a gesture of holding an object (e.g., the gesture of the hand 112 identified by the portions 411, 412, and 413), or pointing to the object (e.g., the gesture of the hand 112 identified by the portion 412) that illustrated based on the portions 411, 412, and 413.

According to an embodiment, in a state of executing the function for moving the virtual object, the wearable device 101 may adjust a position of the virtual object based on a reference point of the body part (e.g., the hand 112) in the FoV 120. The wearable device 101 identifying the image including the portion 411 may adjust the position of the virtual object based on the position a1 in the image of fingertips of the hand 112 in contact with each other. The wearable device 101 identifying the image including the portion 412 may adjust the position of the virtual object based on a position a2 of a fingertip of the unfolded finger in the image. The wearable device 101 that has identified an image including the portion 413 may adjust the position of the virtual object based on a position a3 in the image corresponding to a center of the hand 112.

According to an embodiment, the wearable device 101 may display a screen 130 based on AR, VR, and/or VST. A size of the screen 130 displayed through a display (e.g., a display 220 of FIG. 2) of the wearable device 101 may be adjusted by a software application executed by a processor (e.g., the processor 210 of FIG. 2) of the wearable device 101. For example, the size of the screen 130 may be adjusted independently of the size of the FoV 120 of the camera of the wearable device 101. Referring to FIG. 4, the FoV 120 formed toward a direction df corresponding to a front direction of a user 110 wearing the wearable device 101 and the example state 401 of the screen 130 displayed to the user 110 are illustrated.

In the example state 401 of FIG. 4, the wearable device 101 may display the screen 130 having a size smaller than the size of the FoV 120 to the user 110. In case that the wearable device 101 moves the virtual object in the screen 130 based on the position of the hand 112 in the FoV 120, the wearable device 101 may identify the position in the screen 130 corresponding to the position of the hand 112 based on the relationship between the FoV 120 and the screen 130. While providing a user experience based on the VST, the wearable device 101 may display an image obtained through the camera on the screen 130. Based on an image for the FoV 120, the user 110 wearing the wearable device 101 may recognize an external environment of the direction df (e.g., the front direction). The wearable device 101 may display the screen 130 in which the virtual object and the external environment are mixed to the user 110, by synthesizing the virtual object on the image.

In an embodiment, in the screen 130 in which the virtual object and the external environment are mixed, the wearable device 101 may display the virtual object (e.g., a virtual object 142 of FIG. 1) by overlapping the hand 112 visible to the user 110 through the image. The wearable device 101 that has identified an input for moving the virtual object based on the hand 112, may move the virtual object based on the position of the hand 112 visible through the screen 130. For example, while the hand 112 moves in the FoV 120, the wearable device 101 may adjust a position of the virtual object in the screen 130 based on the position of the hand 112 in the FoV 120. While the hand 112 moves in an area r1 in which the FoV 120 and the screen 130 overlap each other, the user 110 wearing the wearable device 101 may simultaneously see the hand 112 and the virtual object moved based on the hand 112 through the screen 130. While the hand 112 moves in an area r2 of the FoV 120 outside of the screen 130, the user 110 wearing the wearable device 101 may not see the hand 112 through the screen 130, but may see a virtual object moved based on the hand 112. While the hand 112 moves in an area r3 outside of the FoV 120, the user 110 wearing the wearable device 101 may not see the hand 112 and may see that the virtual object moved by the hand 112 is stopped.

According to an embodiment, the wearable device 101 may re-execute a function that was executed by the gesture of the hand 112 based on re-entry of the hand 112 moved to the area r3 outside of the FoV 120. The wearable device 101 may identify whether the hand 112 moved into the FoV 120 corresponds to a body part that was moved out of the FoV 120 based on the posture and/or gesture of the hand 112 identified using the image of the camera.

Hereinafter, an operation performed by the wearable device 101 that has identified the hand 112 moved into the FoV 120 is described in greater detail below with reference to FIG. 5.

FIG. 5 is a diagram illustrating an example operation performed by a wearable device 101 to obtain information on a body part. The wearable device 101 of FIGS. 1A and 1B, FIG. 2, and/or a processor 210 of FIG. 2 may perform an operation described with reference to FIG. 5. An operation of the wearable device 101 described with reference to FIG. 5 may be related to at least one (e.g., operation 340 of FIG. 3) of operations of FIG. 3.

Referring to FIG. 5, an embodiment of the wearable device 101 for identifying a body part (e.g., a hand 112) based on a camera (e.g., a camera 225 of FIG. 2) is illustrated. The wearable device 101 may obtain information on an area in which the body part may move using the camera. For example, the wearable device 101 may identify or measure a range (or area) in which the hand 112 may move, using an image and/or video for the FoV 120 of the camera. For example, the wearable device 101 may obtain information for distinguishing the hand 112 using the image and/or the video. The wearable device 101 may obtain the information based on a shape, skin color, and size of the hand 112 and/or one or more accessories attached to the hand 112.

In an embodiment, the information obtained by the wearable device 101 may be used to identify a sameness of body parts (e.g., the hand 112) identified at different time intervals. For example, the wearable device 101 that has obtained information on the hand 112 that was moved in the FoV 120 in a first time interval may identify whether the body part and the hand 112 match each other using the information, based on identifying the body part moving into the FoV 120 in a second time interval after the first time interval.

Referring to FIG. 5, in case that the wearable device 101 that has obtained information on the hand 112 of the user 110 identifies hands of different users included in the FoV 120, the hand 112 of the user 110 may be identified based on the information. For example, the wearable device 101 may identify an area in which the hand 112 may move, identified from the information. The wearable device 101 may determine one hand included in the area among the plurality of hands as the hand 112 of the user 110. The wearable device 101 may identify the hand 112 of the user 110 from among the plurality of hands based on the shape, the skin color, and/or the size of the hand 112 identified from the information in the area. The wearable device 101 may identify the hand 112 of the user 110 from among the plurality of hands based on one or more accessories attached to the hand 112 identified from the information in the area.

Referring to FIG. 5, an example state of the wearable device 101 identifying the hand 112 is illustrated. According to an embodiment, the wearable device 101 may output a message to the user 110 for obtaining information on an area of the FoV 120 in which the hand 112 may move. For example, the message may include preset text for obtaining an image and/or video for the area in which the hand 112 may move, such as "Spin your arm wide.". While outputting the message, the wearable device 101 may identify a path and/or range of the hand 112 moved along any one of a position ph1 of the hand 112 of the user 110 and directions dh1, dh2, dh3, and dh4, using the image and/or video for the FoV 120. The wearable device 101 may identify the hand 112 displayed at a position ih1 corresponding to the position ph1 in the image and/or video and moved along directions id1, id2, id3, and id4 corresponding to each of the directions dh1, dh2, dh3, and dh4. Based on the image and/or the video, the wearable device 101 may identify the position ph1 of the hand 112 and/or positions j1 and j2 of one or more joints connected to the hand 112. The one or more joints may be included in an arm of the user 110.

Referring to FIG. 5, according to an embodiment, the wearable device 101 may identify a range 510 in the FoV 120 in which the hand 112 of the user 110 may move based on movement of the hand 112 in the FoV 120. Based on identifying the hand 112 moved to the range 510 of the FoV 120 outside of the FoV 120, the wearable device 101 may determine the identified hand 112 as the hand 112 of the user 110. According to an embodiment, the wearable device 101 may identify whether the hand 112 identified based on the range 510 of the FoV 120 is the hand 112 of the user 110, based on a direction v1 of the hand 112 with respect to the arm. For example, the wearable device 101 may identify, by comparing a direction iv1 identified from the image for the FoV 120 and a direction av of the hand 112 with respect to the arm of the user 110 in the external space, whether the hand 112 included in the image is the hand 112 of the user 110.

As described above, according to an embodiment, the wearable device 101 may determine whether a body part identified from the image and/or video for the FoV 120 corresponds to the body part that was moved out of the FoV 120. The wearable device 101 may identify whether the body part in the FoV 120 is a preset body part (e.g., the hand 112 of the user 110) for identifying a gesture using information on the area (e.g., the range 510) in which the body part may move. In the example state of FIG. 5, the wearable device 101 identifying the hand 112 of the user 110 may identify an input for controlling at least one virtual object displayed through the display (e.g., the display 220 of FIG. 2) of the wearable device 101 based on the posture and/or gesture of the hand 112.

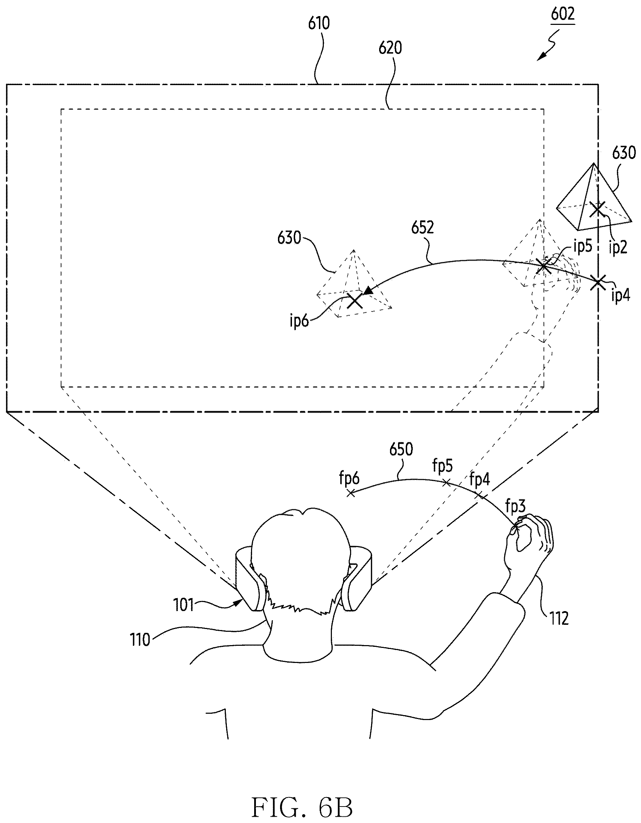

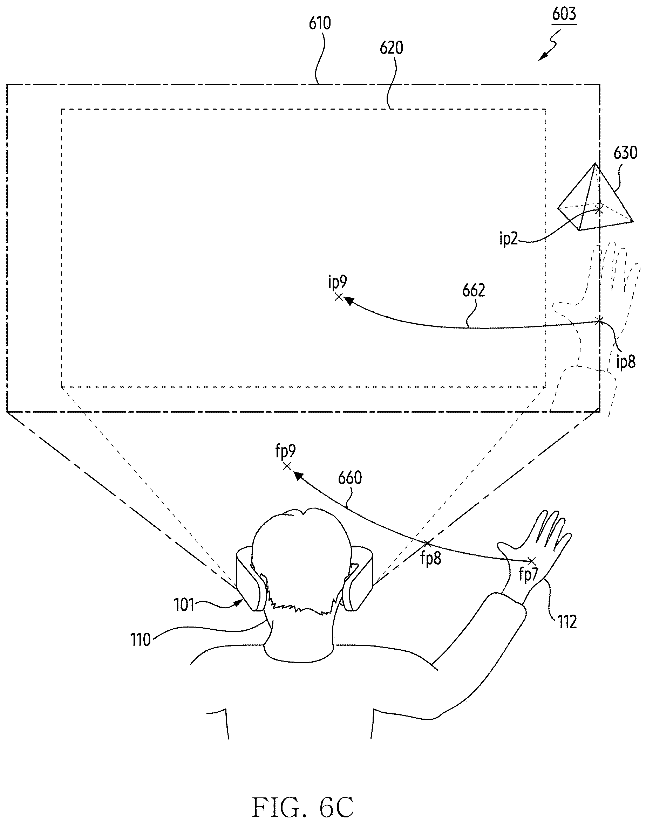

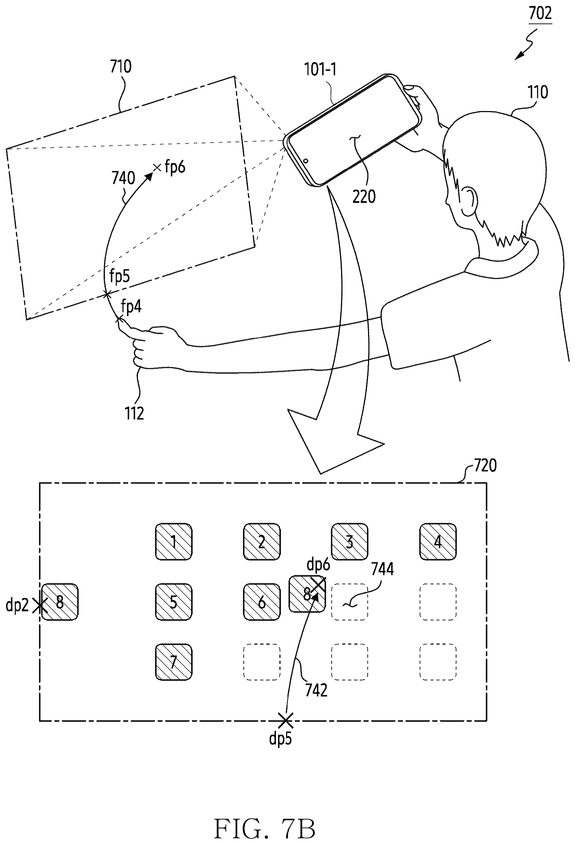

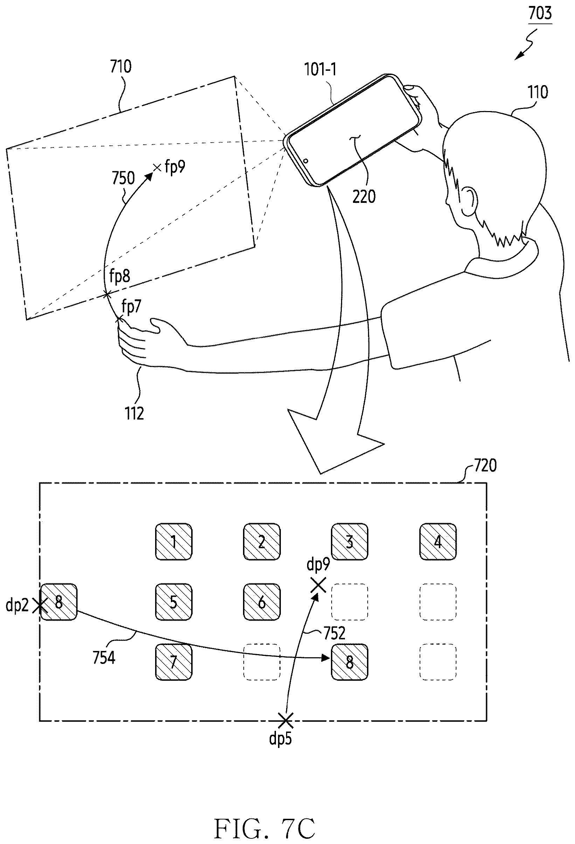

Hereinafter, an example operation of the wearable device 101 related to a path of the hand 112 identified based on the FoV 120 is described in greater detail below with reference to FIGS. 6A, 6B, 6C and/or 7A, 7B and 7C.

FIGS. 6A, 6B and 6C are diagrams illustrating an example operation of a wearable device 101 performed based on movement of a body part. The wearable device 101 of FIGS. 1A and 1B and FIG. 2 and/or a processor 210 of FIG. 2 may perform an operation described with reference to FIGS. 6A, 6B and 6C. An operation of the wearable device 101 described with reference to FIGS. 6A, 6B and 6C may be related to at least one of operations of FIG. 3.

Referring to FIGS. 6A, 6B and 6C, example states 601, 602, and 603 of the wearable device 101 that have identified a hand 112 of a user 110 in FoV 610 of one or more cameras (e.g., a camera 225 of FIG. 2) disposed toward a direction (e.g., a front direction of the wearable device 101) of the wearable device 101 are illustrated. According to an embodiment, the wearable device 101 may identify a body part such as the hand 112 using an image and/or video corresponding to the FoV 120.

In a state 601 of FIG. 6A, the wearable device 101 may display a screen 620 including a virtual object 630 on a display (e.g., a display 220 of FIG. 2). In case that the wearable device 101 displays the screen 620 based on VST, the wearable device 101 may display the screen 620 including all of an image of the FoV 120 and the virtual object 630. In case that the wearable device 101 displays the VR-based screen 620, the wearable device 101 may display the screen 620 representing a virtual environment that completely covers an external space.

In the state 601 of FIG. 6A, the wearable device 101 may identify a gesture of the hand 112 indicating movement of the virtual object 630 in the screen 620. The wearable device 101 may identify a pinch gesture of the hand 112 performed in the FoV 610 based on the operation described above with reference to FIGS. 4 to 5. Although an operation of the wearable device 101 based on the pinch gesture is described, the disclosure is not limited thereto. For example, the wearable device 101 may perform an operation of FIGS. 6A, 6B and 6C based on identifying a pointing gesture. For example, based on identifying the hand 112 including one finger unfolded toward a position fp1 in the FoV 610, the wearable device 101 may identify the pinch gesture performed by the hand 112. The wearable device 101 may identify a position ip1 in the screen 620 corresponding to the position fp1 in the FoV 610 corresponding to a fingertip of the unfolded finger. Based on identifying the overlapping position ip1 on the virtual object 630, the wearable device 101 may identify an input indicating the movement of the virtual object 630.

Referring to FIG. 6A, in the state 601 of identifying the input indicating the movement of the virtual object 630 based on the pinch gesture, the wearable device 101 may identify a path 640 along which the hand 112 moves in the FoV 610. The wearable device 101 may change a position of the virtual object 630 in the display based on the path 640. In the state 601 of FIG. 6A, the wearable device 101 may move the virtual object 630 along the path 642 corresponding to the path 640 of the hand 112, based on identifying the hand 112 which is moved from the position fp1 along the path 640 and maintains the pinch gesture. For example, the wearable device 101 may move the virtual object 630 along the path 642 from the position ip1 in the screen 620. A shape of the path 642 along which the virtual object 630 moves in the screen 620 may match the path 640 along which the hand 112 moves in the FoV 610. For example, the wearable device 101 may provide a user experience such as the virtual object 630 being connected to the hand 112 moved in the FoV 610.

In the state 601 of FIG. 6A, the wearable device 101 may cease the movement of the virtual object 630 based on disabling the pinch gesture performed by the hand 112. For example, in case that a posture of the hand 112 moved in the FoV 610 is changed to a posture different from a posture of the pinch gesture, the wearable device 101 may cease to move the virtual object 630 based on a position and/or path of the hand 112 in the FoV 610. In the above example, a position of the virtual object 630 in the screen 620 may be fixed to the position in the FoV 610 of the hand 112 at timing when the posture of the hand 112 is changed to the different posture.

Referring to FIG. 6A, as the hand 112 moves out of the FoV 610 along the path 640, the wearable device 101 may display the virtual object 630 based on a position ip2 of an edge of the FoV 610. The position ip2 in the FoV 610 corresponding to the position in the screen 620 of the virtual object 630 may correspond to the position in the FoV 610 of the hand 112, which was last identified before being moved out of the FoV 610. For example, the wearable device 101 may display the virtual object 630 on the screen 620 based on the position of the hand 112 in the FoV 610 at timing when the hand 112 moves out of the FoV 610. The wearable device 101 may display the virtual object 630 based on the position ip2 of an intersection of the path 640 of the hand 112 and the edge of the FoV 610.

According to an embodiment, the wearable device 101 may display the virtual object 630 at a position connected to the external space in the state 601 in which the virtual object 630 is displayed based on the virtual space mapped to the external space. As the position of the virtual object 630 is interlocked with the external space, the wearable device 101 may move the virtual object 630 in the screen 620 similar to being fixed to a specific position of the external space. In the state 601, based on identifying the hand 112 having the posture of the pinch gesture, the wearable device 101 may disable the connection between the virtual object 630 and the external space. For example, based on the hand 112 moved along the path 640, the wearable device 101 may display the virtual object 630 moved along the path 642. In the state 601 of displaying the virtual object 630 based on the position ip2 of the edge of the FoV 610 by the hand 112 moved out of the FoV 610, the wearable device 101 may display the virtual object 630 independently of a position (e.g., an absolute position of the virtual object 630 with respect to the external space) of the virtual object 630 with respect to the external space. For example, the wearable device 101 may display the virtual object 630 based on the position (e.g., a relative position of the virtual object 630 with respect to the wearable device 101) of the virtual object 630 in the screen 620.

Referring to FIG. 6B, in the state 602 after the state 601 of FIG. 6A, the wearable device 101 may identify the body part (e.g., the hand 112) moved into the FoV 610 of the camera. For example, the user 110 may move the hand 112 having the posture of the pinch gesture from a position fp3 outside of the FoV 610 into the FoV 610 along the path 650. At timing when the hand 112 moves into the FoV 610 through a position fp4 of the edge of the FoV 610 along the path 650, the wearable device 101 may identify the hand 112 based on an image and/or video for the FoV 610. At the timing of being moved into the FoV 610, the wearable device 101 may identify the virtual object 630 that was connected to the hand 112 before the timing, in the state 602 of identifying the hand 112 in a preset posture indicating the movement of the virtual object 630. For example, the wearable device 101 may identify the virtual object 630 that was moved by the hand 112 in the state 601 before the state 602.

In the state 602 of FIG. 6B, the wearable device 101, which has identified the virtual object 630 that was moved by the hand 112, may display the virtual object 630 based on the position of the hand 112 in the FoV 610. For example, the wearable device 101 may display the virtual object 630 moved in the screen 620 based on the path of the hand 112 in the FoV 610. For example, the wearable device 101, which has identified the hand 112 moved into the FoV 610 at the position fp4 along the path 650, may move the virtual object 630 to a position ip4 in the screen 620 corresponding to the position fp4. Based on identifying the path 650 in the FoV 610 of the hand 112, the wearable device 101 may move the virtual object 630 moved to the position ip4 along a path 652 in the screen 620 corresponding to the path 650. Referring to FIG. 6B, while the hand 112 sequentially passes through the positions fp4, fp5, and fp6 on the path 650, the wearable device 101 may move the virtual object 630 along the positions ip4, ip5, and ip6 in the screen 620 corresponding to each of the positions fp4, fp5, and fp6.

Based on the states 601 and 602 of FIGS. 6A and 6B, an operation of the wearable device 101 with respect to the hand 112 once moved out of the FoV 610 has been described, but the disclosure is not limited thereto. For example, in case that the hand 112 is repeatedly moved at the edge of the FoV 610 (e.g., a gesture to shake the hand 112), the wearable device 101 may maintain executing a function corresponding to the posture and/or gesture of the hand 112 based on whether the posture and/or gesture of the hand 112 is maintained.

Referring to FIG. 6C, in a state 603 after the state 601 of FIG. 6A, the wearable device 101 may identify the body part moved into the FoV 610 of the camera. In the state 603 after the hand 112 having the posture of the pinch gesture is moved out of the FoV 610, the wearable device 101 may identify the hand 112 having a posture different from the posture of the pinch gesture. For example, in case that the user 110 moves the fully unfolded hand 112 into the FoV 610 along a path 660 from a position fp7 outside of the FoV 610, the wearable device 101 may execute another function different from a function corresponding to the pinch gesture based on the posture of the hand 112.

For example, at timing of identifying the hand 112 moved into the FoV 610 through a position fp8 of the edge of the FoV 610 along the path 660, the wearable device 101 may display a virtual object representing the hand 112 at a position ip8 in the screen 620 corresponding to the position fp8. While the hand 112 moves from the position fp8 to a position fp9 along the path 660, the wearable device 101 may move the virtual object displayed at the position ip8 to a position ip9 in the screen 620 corresponding to the position fp9 along a path 662 corresponding to the path 660. Since the other function different from the function corresponding to the pinch gesture is executed, the wearable device 101 may not move the virtual object 630 displayed on the position ip2 in the screen 620 based on the path 660 of the hand 112.

Referring to FIG. 6C, in case that re-entry of the hand 112 moved out of the FoV 610 is identified, and the posture of the hand 112 is different from the posture of the hand 112 before being moved out of the FoV 610, the wearable device 101 may determine the position of the virtual object 630 as the position ip2 moved by the hand 112 before being moved out of the FoV 610. The disclosure is not limited to thereto, and the wearable device 101 may determine the position of the virtual object 630 as the position of the virtual object 630 before being moved by the hand 112 before being moved out of the FoV 610. In case that the posture of the hand 112 is different from a preset posture for moving the virtual object 630, the wearable device 101 may display the virtual object 630 by interlocking with the external space. In the state 603 of FIG. 6C, the wearable device 101 may display the virtual object 630 based on a position in the external space corresponding to the position ip2 in the screen 620.

As described above, the wearable device 101 that tracks the hand 112 in the FoV 610 may continuously execute a function that was executed by the tracking of the hand 112 based on the re-entry of the hand 112 to the FoV 610 after the hand 112 cease to track the hand 112 as the hand 112 moves out of the FoV 610. Although the wearable device 101 having a form of an HMD wearable on the user 110's head is described by way of example, the disclosure is not limited thereto. Hereinafter, an operation of tracking the body part to move the virtual object 630 based on an electronic device having a form factor different from that of the HMD is described.

FIGS. 7A, 7B and 7C are diagrams illustrating example operations of a wearable device 101-1 performed based on movement of a body part. The electronic device 101-1 of FIGS. 7A, 7B and 7C may perform an operation of the wearable device 101 described with reference to FIGS. 1A to 6C. For example, an operation of the electronic device 101-1 described with reference to FIGS. 7A, 7B and 7C may be related to at least one of operations of the wearable device of FIG. 3. The electronic device 101-1 described with reference to FIGS. 7A, 7B and 7C may include one or more hardware described with reference to FIG. 2. The electronic device 101-1 described with reference to FIGS. 7A, 7B and 7C may execute one or more programs described with reference to FIG. 2.

Referring to FIGS. 7A, 7B and 7C, example states 701, 702, and 703 of the electronic device 101-1 that identified a hand 112 of a user 110 are illustrated in the FoV 710 of one or more cameras (e.g., a camera 225 of FIG. 2) disposed on another surface (e.g., a rear surface of the electronic device 101-1) of the electronic device 101-1 opposite to one surface (e.g., a front surface of the electronic device 101-1) of the electronic device 101-1 in which the display 220 is disposed. According to an embodiment, the electronic device 101-1 may identify a body part such as the hand 112 using an image and/or video corresponding to the FoV 710.

In the state 701 of FIG. 7A, the electronic device 101-1 may display a screen 720 including one or more icons on the display 220. Referring to FIG. 7A, the icon included in the screen 720 is represented as a square filled with consecutive slashes. A number written in the icon is written to refer to the icon for convenience of explanation and do not limit the disclosure. A form of an icon that the electronic device 101-1 may display through the screen 720 is not limited to an example form of FIGS. 7A, 7B and 7C. The electronic device 101-1 may display the icon based on an image (e.g., a raster image and/or a vector image) set by a software application installed in memory (e.g., a memory 215 of FIG. 2).

According to an embodiment, the electronic device 101-1 may arrange a plurality of icons based on a grid formed in the screen 720. Referring to FIG. 7A, in the example state 701 of displaying eight icons, the electronic device 101-1 may dispose the eight icons based on a grid including three rows formed along a first direction (e.g., vertical direction) of the screen 720 and four columns formed along a second direction (e.g., horizontal direction) perpendicular to the first direction. The number of rows and/or columns of the grid is an example and does not limit the disclosure. Referring to FIG. 7A, the electronic device 101-1 may dispose the eight icons using 12 slots formed in the screen 720 based on an example grid. Among the slots, a slot (e.g., an empty slot) in which the icon is not disposed may be illustrated as a square of a dashed line in the screen 720. Since the electronic device 101-1 displays icons based on the grid, intervals (e.g., horizontal intervals) of the icons (e.g., icons including numbers 1, 2, 3, and 4) in the second direction in the screen 720 may be the same each other. Similarly, in the first direction in the screen 720, the intervals (e.g., vertical intervals) of the icons (e.g., icons including the numbers 1, 5, and 7) may be the same each other.

In the state 701 of FIG. 7A, the electronic device 101-1 may identify a gesture of the hand 112 indicating movement of the icon in the screen 720. The electronic device 101-1 may identify a pointing gesture of the hand 112 performed in the FoV 710 based on the operation described above with reference to FIGS. 4 to 5. For example, based on identifying the hand 112 including a finger unfolded toward the position fp1 in the FoV 710, the electronic device 101-1 may identify an input indicating movement of an icon (e.g., an icon including the number 8) in the screen 720 corresponding to the position fp1. The electronic device 101-1 may identify the input indicating the movement of the icon based on an icon (e.g., the icon including the number 8) displayed on a position dp1 in the screen 720 corresponding to the position fp1. The electronic device 101-1 that identified the input may change a position of an icon corresponding to the input in the screen 720 based on a path 730 of the hand 112 moved in the FoV 710.

Referring to FIG. 7A, the electronic device 101-1 that identified the hand 112 moved along the path 730 in the FoV 710 may move an icon corresponding to the hand 112 along a path 732 in the screen 720 corresponding to the path 730. As the hand 112 moves out of the FoV 710 along the path 730, the electronic device 101-1 may display the icon based on a position fp2 of an edge of the FoV 710. Referring to FIG. 7A, the electronic device 101-1 may display an icon that was moved along the path 732 at a position dp2 in the screen 720 corresponding to the position fp2. After the hand 112 is moved out of the FoV 710 through the position fp2 of the edge of the FoV 710, the electronic device 101-1 may cease tracking or monitoring the hand 112. For example, while the hand 112 moves from the position fp2 to a position fp3 outside of the FoV 710, the electronic device 101-1 may not move the icon corresponding to the hand 112.

Referring to FIG. 7A, after the hand 112 is moved out of the FoV 710, the position dp2 at which an icon that was moved corresponding to the hand 112 is displayed is a position corresponding to the position fp2 of the edge of the FoV 710, and may not correspond to a grid and/or slots formed for alignment of icons in the screen 720. For example, at timing of identifying the hand 112 moved outside of the FoV 710, the electronic device 101-1 may fix a position of an icon moved in response to the hand 112 to the position dp2 in the screen 720 corresponding to the position fp2 of the hand 112 identified at the timing. After displaying the icon at the position dp2, the electronic device 101-1 may move the icon again based on re-entry of the hand 112 to the FoV 710.

In the state 702 of FIG. 7B after the state 701 of FIG. 7A, the user 110 may move the hand 112 having a posture of the pointing gesture into the FoV 710 along a path 740. For example, the hand 112 may be moved into the FoV 710 through a position fp5 of the edge of the FoV 710 from a position fp4 outside of the FoV 710. At timing of identifying the hand 112 of the position fp5 of the edge of the FoV 710, the electronic device 101-1 may identify an input for resuming movement of an icon (e.g., the icon including the number 8) that was moved from the state 701 before the state 702 based on the posture of the hand 112. For example, in case that a gesture indicated by the hand 112 identified at the timing matches the gesture (e.g., the pointing gesture) that was identified in the state 701, the electronic device 101-1 may resume the movement of the icon.

Referring to FIG. 7B, the electronic device 101-1 identifying the hand 112, which has the posture of the pointing gesture and is moved into the FoV 710 through the position fp5, may move the icon that was displayed in the position dp2 in the screen 720, along the path 740 of the hand 112 in the FoV 710. For example, the electronic device 101-1 may move the icon along a path 742 in the screen 720 corresponding to the path 740. While the hand 112 moves from the position fp5 to a position fp6 along the path 740, the electronic device 101-1 may move the icon including the number 8 from a position dp5 to a position dp6 along the path 742.

According to an embodiment, the electronic device 101-1 may identify the hand 112 that changes to a posture different from the pointing gesture in the state 702 of moving the icon based on the hand 112 having the posture of the pointing gesture. The electronic device 101-1, which has identified the hand 112 changing to the different posture, may cease moving the icon. The electronic device 101-1, which has identified the hand 112 changing to the different posture, may determine a position of the icon based on the grid formed in the screen 720. Referring to FIG. 7B, at the position fp6, in case that the posture of the hand 112 changes to a posture different from the posture of the pointing gesture, the electronic device 101-1 may move an icon displayed at the position dp6 in the screen 720 corresponding to the position fp6 to an empty slot 744 adjacent to the icon among slots in the screen 720 formed by the grid. Based on displaying the icon based on the empty slot 744, the electronic device 101-1 may complete the movement of the icon using the hand 112.

Referring to FIG. 7C, in the state 703 after the state 701 of FIG. 7A, the user 110 may move the hand 112 having a posture of a gesture different from the pointing gesture into the FoV 710. Based on identifying the hand 112 moved into the FoV 710 through a position fp8 of the edge of the FoV 710 from a position fp7 outside of the FoV 710, the electronic device 101-1 may compare the posture of the hand 112 with a preset posture indicating the movement of the icon. Based on identifying the hand 112 having a posture different from the preset posture, the electronic device 101-1 may move a position of the icon in the screen 720 to a position of the icon before the state 701. Referring to FIG. 7C, independent of the hand 112 moved from the position fp8 of the edge of the FoV 710 to a position fp9 along a path 750, the electronic device 101-1 may move the icon that was displayed on the position dp2 in the screen 720 along a path 754. According to an embodiment, the wearable device 101 may display a pointer (e.g., a cursor) moved from the position dp5 to a position dp9 along a path 752 corresponding to the path 750 in the screen 720, based on identifying the hand 112 moved from the position fp8 to the position fp9 along the path 750. Based on an icon moved along the path 754, the electronic device 101-1 may move the icon to a position before the state 701 in which the gesture indicating the movement of the icon was identified.

In FIGS. 6A, 6B and 6C and 7A, 7B and 7C, an operation of the electronic device 101-1 and/or the wearable device 101 for moving the icon and/or the virtual object 630 based on the pointing gesture have been described, but the disclosure is not limited thereto. For example, the electronic device 101-1 may identify a gesture for moving the icon in the screen 720 based on the pinch gesture and/or a clench gesture described with reference to FIG. 4.

As described above, the electronic device 101-1 that tracks the hand 112 in the FoV 710 may track the hand 112 again based on re-entry of the hand 112 to the FoV 710 after tracking the hand 112 is ceased by the finite FoV 710. The electronic device 101-1 may re-execute a function that was executed before tracking the hand 112 is ceased, using the posture and/or gesture of the hand 112. An operation of the electronic device 101-1 and/or the wearable device 101 that re-executes the movement of the icon (e.g., the icon including the number 8 of FIGS. 7A to 7C) and/or a virtual object (e.g., the virtual object 630 of FIGS. 6A to 6C) based on the re-entry of the hand 112 to the FoV 710 has been described, but the disclosure is not limited thereto. Hereinafter, an operation of the electronic device 101-1 and/or the wearable device 101 that re-executes a function of adjusting a size of the virtual object is described in greater detail below with reference to FIG. 8.

FIG. 8 is a flowchart illustrating example operations of a wearable device according to an embodiment. A wearable device 101 of FIGS. 1A to 2 and/or a processor 210 of FIG. 2 may perform an operation described with reference to FIG. 8. The electronic device 101-1 described with reference to FIGS. 7A, 7B and 7C may perform the operation described with reference to FIG. 8. An operation of a wearable device described with reference to FIG. 8 may be related to or performed similarly to at least one of operations of FIG. 3.

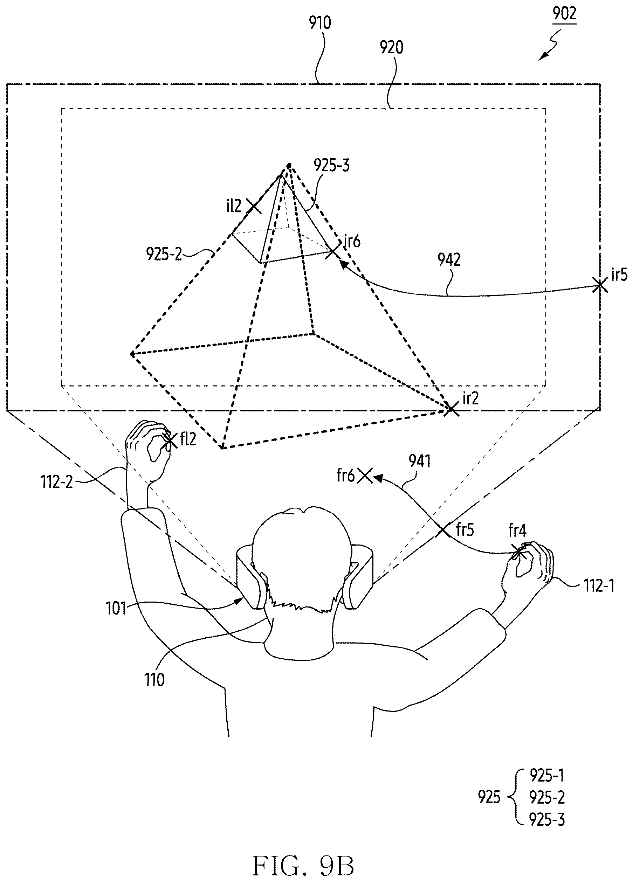

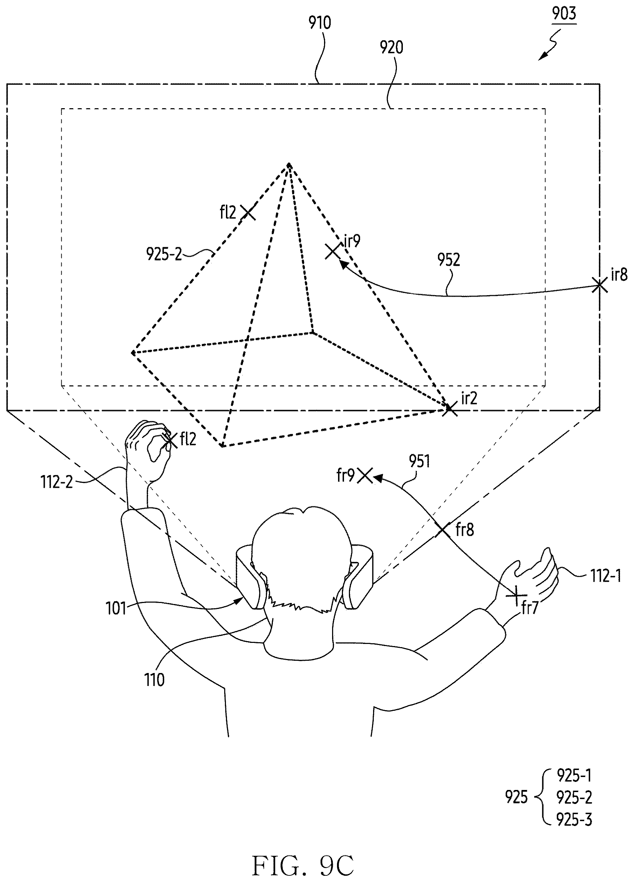

Referring to FIG. 8, in operation 810, according to an embodiment, a processor of the wearable device may change a size of the virtual object displayed in a display based on identifying a gesture for adjusting the size of the virtual object using a camera and/or an external electronic device. The camera of the operation 810 may include a camera 225 of FIG. 2. The external electronic device of the operation 810 may include a remote controller 242 of FIG. 2. The wearable device may identify the gesture of the operation 810 using a sensor (e.g., a sensor 230 of FIG. 2) (e.g., a depth sensor) different from the camera. The gesture performed to change the size of the virtual object may be performed using both hands of a user, as described in greater detail below with reference to FIGS. 9A, 9B and 9C. The gesture performed to change the size of the virtual object may be identified through all the external electronic device held by one hand of the user and the other hand of the user, as described in greater detail below with reference to FIG. 10. For example, the gesture for adjusting the size of the virtual object may require movement of all two external objects (e.g., the hand and/or the external electronic device) identifiable by the wearable device. The gesture for adjusting the size of the virtual object in the operation 810 may be set by a software application executed by the processor.

Referring to FIG. 8, in operation 820, according to an embodiment, the processor of the wearable device may identify whether a body part performing the gesture moves outside of FoV of the camera. The processor may perform the operation 820, similar to operation 320 of FIG. 3. For example, before the body part performing the gesture is moved out of the FoV or while it is moved in the FoV (820-No), the processor may change the size of the virtual object based on the operation 810. In a state in which the body part moved out of the FoV is identified (820-Yes), the processor may perform operation 830. After the body part of the operation 820 is moved out of the FoV, the processor may perform the operation 830.

Referring to FIG. 8, in the operation 830, according to an embodiment, the processor of the wearable device may set the size of the virtual object based on a first size corresponding to a first position in the FoV of the body part identified by the camera. The first size of the operation 830 may be related to the position in the FoV of the body part last identified before being moved out of the FoV. In a state in which the size of the virtual object is set to the first size based on the body part before being moved out of the FoV, the processor may perform operation 840.

Referring to FIG. 8, in the operation 840, according to an embodiment, the processor of the wearable device may identify a body part moved into the FoV of the camera. Before identifying the body part moved into the FoV (840-No), the processor may maintain displaying the virtual object based on the first size of the operation 830. Based on identifying the body part moved into the FoV (840-Yes), the processor may perform operation 850. The processor may perform the operation 840 similar to operation 340 of FIG. 3.

Referring to FIG. 8, in the operation 850, according to an embodiment, the processor of the wearable device may identify the gesture for adjusting the size of the virtual object based on the body part moved into the FoV. The gesture of the operation 850 may match the gesture of the operation 810. For example, the processor may identify whether the gesture performed by the body part moved into the FoV corresponds to the gesture of the operation 810. The gesture of the operation 850 is not identified (850-No), or before the gesture of the operation 850 is identified, the processor may perform operation 860 of FIG. 8. For example, in case that a gesture different from the gesture of the operation 850 is identified, the processor may perform the operation 860. Based on identifying the gesture of the operation 850 from the body part moved into the FoV (850-Yes), the processor may perform operation 870. The processor may perform the operation 850 similar to operation 350 of FIG. 3.

Referring to FIG. 8, in the operation 860, according to an embodiment, the processor of the wearable device may determine the size of the virtual object as the first size of the operation 830. The processor may determine the size of the virtual object that was changed based on the operation 810 as the size of the virtual object.

Referring to FIG. 8, in the operation 870, according to an embodiment, the processor of the wearable device may adjust the size of the virtual object to a second size different from the first size based on a second position in the FoV of the body part moved into the FoV. Similar to the operation 810, the processor may change the size of the virtual object based on the second position. For example, the processor may resume changing the size of the virtual object after the operation 830, based on the operation 870.

As described above, according to an embodiment, the processor of the wearable device may re-execute a function executed by the body part before the re-entry, based on the re-entry of the body part to the FoV. For example, the processor may re-execute a function of changing the size of the virtual object displayed through the display.

Hereinafter, an example operation of the wearable device for changing the size of a virtual object based on the operation of FIG. 8 is described in greater detail with reference to FIGS. 9A, 9B and 9C and/or 10.

FIGS. 9A, 9B and 9C are diagrams illustrating an example operation of a wearable device 101 performed based on movement of body parts. The wearable device 101 of FIGS. 1A to 1B and FIG. 2 and/or a processor 210 of FIG. 2 may perform an operation described with reference to FIGS. 9A to 9C. The operation of the wearable device 101 described with reference to FIGS. 9A, 9B and 9C may be related to at least one of operations of FIG. 8.

Referring to FIGS. 9A, 9B and 9C, example states 901, 902, and 903 of the wearable device 101 identifying the hands 112-1 and 112-2 of a user 110 in the FoV 910 of one or more cameras (e.g., a camera 225 of FIG. 2) are illustrated. According to an embodiment, the wearable device 101 may identify the hands 112-1 and 112-2 using an image and/or video corresponding to the FoV 910. In the state 901 of FIG. 9A, the wearable device 101 may display a screen 920 including a virtual object 925 on a display (e.g., a display 220 of FIG. 2). Referring to FIGS. 9A, 9B and 9C, virtual objects 925-1, 925-2, and 925-3 in different states switched by an input for changing a size of the virtual object 925 indicated by the hands 112-1 and 112-2 are illustrated.

In the state 901 of FIG. 9A, the wearable device 101 may identify an input indicating a change in the size of the virtual object 925, based on the hands 112-1 and 112-2 moved in the FoV 910. The wearable device 101 may identify a pinch gesture of the hands 112-1 and 112-2 performed in the FoV 910 based on the operation described above with reference to FIGS. 4 to 5. For example, based on identifying the pinch gesture of the hands 112-1 and 112-2 disposed at positions fr1 and fl1 in the FoV 910 corresponding to different positions ir1 and il1 of the virtual object 925-1 of a first state of the screen 920, the wearable device 101 may change the size of the virtual object 925 according to a distance between the hands 112-1 and 112-2 maintaining the pinch gesture. The wearable device 101 that changes the size of the virtual object 925 in response to the hands 112-1 and 112-2 having the pinch gesture may provide a user experience such as holding the virtual object 925 based on the pinch gesture to the user 110 wearing the wearable device 101.

In the example state 901 of FIG. 9A, while the hand 112-1 having a posture of the pinch gesture moves along a path 931, and the hand 112-2 having the posture of the pinch gesture moves along a path 932, the wearable device 101 may enlarge or reduce the virtual object 925 based on a distance between the hands 112-1 and 112-2. For example, in case that the hand 112-1 having the pinch gesture is moved from the position fr1 to the position fr2 in the FoV 910 along the path 931, and the hand 112-2 having the pinch gesture is moved from the position fl1 to a position fl2 in the FoV 910 along the path 932, the wearable device 101 may enlarge the virtual object 925 based on a distance between the positions fr2 and fl2. For example, the wearable device 101 may move a point of the virtual object 925 corresponding to the hand 112-1 along a path 933 in the screen 920 corresponding to the path 931, and may move a point of the virtual object 925 corresponding to the hand 112-2 along a path 934 in the screen 920 corresponding to the path 932. For example, the wearable device 101 may display a virtual object 925-2 in an enlarged second state based on positions ir1 and ir2 in the screen 920 corresponding to each of the positions fr2 and fl2.

Referring to FIG. 9A, in the state 901 of changing the size of the virtual object 925 based on the hands 112-1 and 112-2 of the pinch gesture, the wearable device 101 may cease changing the size of the virtual object 925 based on whether a posture of at least one of the hands 112-1 and 112-2 is changed to a posture different from the posture of the pinch gesture. For example, in response to identifying that the pinch gesture performed by the at least one of the hands 112-1 and 112-2 is disabled, the wearable device 101 may cease changing the size of the virtual object 925 based on a position and/or path of the hands 112-1 and 112-2 in the FoV 910. In the above example, the size of the virtual object 925 may be fixed based on positions in the FoV 910 of the hands 112-1 and 112-2 at timing when disabling pinch gesture is identified.

Referring to FIG. 9A, based on the at least one of the hands 112-1 and 112-2 performing the pinch gesture to change the size of the virtual object 925 being moved out of the FoV 910, the wearable device 101 may at least temporarily cease changing the size of the virtual object 925. For example, based on the hand 112-1 moved along the path 931 being moved out of the FoV 910 (e.g., a position fr3) through the position fr2 of the edge of the FoV 910, the wearable device 101 may cease changing the size of the virtual object 925. For example, after the hand 112-1 is moved out of the FoV 910 through the position fr2, the wearable device 101 may maintain displaying the virtual object 925 based on the position ir2 in the screen 920 corresponding to the position fr2.

According to an embodiment, after identifying the hand 112-1 moved out of the FoV 910, the wearable device 101 may re-execute a function of changing the size of the virtual object 925 based on re-entry of the hand 112-1 to the FoV 910. Referring to FIG. 9B, in the state 902 after the state 901, the user 110 may move the hand 112-1 of a position fr4 outside of the FoV 910 into the FoV 910 through a position fr5 of the edge of the FoV 910 along a path 941. The wearable device 101 may identify the re-entry of the hand 112-1 to the FoV 910, from timing when the hand 112-1 moved along the path 941 into the FoV 910 through the position fr5 of the edge of the FoV 910. The wearable device 101, which has identified the re-entry of the hand 112-1 to the FoV 910 may re-execute a function for changing the size of the virtual object 925 based on whether the posture of the hand 112-1 has a preset posture (e.g., the posture of the pinch gesture) for changing the size of the virtual object 925. In the example state 902 of FIG. 9B, based on identifying the hand 112-1 having the posture of the pinch gesture moved into the FoV 910, the wearable device 101 may change the size of the virtual object 925 using the path 941 of the hand 112-1.

In the example state 902 of FIG. 9B, the wearable device 101 may change the size of the virtual object 925 in the screen 920 using the position and/or path of the hands 112-1 and 112-2 moved in the FoV 910. In the state 902, the wearable device 101 may change the size of the virtual object 925 along a path 942 in the screen 920 corresponding to the path 941 of the hand 112-1 in the FoV 910. The wearable device 101, which displayed the virtual object 925 having a size based on the position ir2, may display the virtual object 925 using a position ir5 in the screen 920 corresponding to the position fr5 of the edge of the FoV 910 of the hand 112-1 and a position il2 in the screen 920 corresponding to the position fl2 in the FoV 910 of the hand 112-2 maintaining the pinch gesture. At timing when the hand 112-1 is moved to a position fr6 in the FoV 910 along the path 941, the wearable device 101 may display a virtual object 925-3 in a third state having a changed size based on the positions ir6 and il2 in the screen 920 corresponding to the positions fr6 and fl2 of the hands 112-1 and 112-2.

Referring to FIG. 9C, in the state 903 after the state 901, the user 110 may move the hand 112-1 having the posture different from the posture of the pinch gesture into the FoV 910 along the path 951 from a position fr7 outside of the FoV 910. The wearable device 101, which has identified the hand 112-1 at a position fr8 of the edge of the FoV 910 may execute a function different from changing the size of the virtual object 925 based on the different posture of the hand 112-1. For example, even though the posture of the hand 112-2 maintains the pinch gesture, the wearable device 101, which has identified the hand 112-1 having the posture different from the posture of the pinch gesture may not change the size of the virtual object 925 based on the path 951 (e.g., the path 951 connecting the positions fr8 and fr9) in the FoV 910 of the hand 112-1. For example, the virtual object 925 may be enlarged or may not be reduced by a path 952 (e.g., the path 952 connecting positions ir8 and ir9) in the screen 920 corresponding to the path 951. For example, the wearable device 101 may determine that the function of changing the size of the virtual object 925 is completed at timing when the hand 112-1 is moved out of the FoV 910.

As described above, in case that the at least one of the hands 112-1 and 112-2 is moved out of the FoV 910, the wearable device 101 tracking the hands 112-1 and 112-2 in the FoV 910 may temporarily cease a function that was executed based on the gesture of the hands 112-1 and 112-2. In case that at least one hand that was moved out of the FoV 910 is moved into the FoV 910 with a preset posture indicating the gesture, the wearable device 101 may re-execute the function that was temporarily ceased (e.g., a state of FIG. 9B after the state 901 of FIG. 9A)). In case that the at least one hand that was moved out of the FoV 910 is moved into the FoV 910 with a posture different from the preset posture, the wearable device 101 may complete the function that was temporarily stopped.

Hereinafter, an operation of the wearable device 101 for changing the size of the virtual object 925 based on a combination of an external electronic device such as a remote controller and a hand is described.

FIG. 10 is a diagram illustrating an example operation of a wearable device 101 performed based on movement of body parts. The wearable device 101 of FIGS. 1A and 1B, FIG. 2, and/or a processor 210 of FIG. 2 may perform an operation described with reference to FIG. 10. An operation of the wearable device 101 described with reference to FIG. 10 may be related to at least one of operations of FIG. 8.

Referring to FIG. 10, an example state of the wearable device 101 that has identified an input for changing a size of a virtual object 1030 in a screen 1020 is illustrated using one or more cameras (e.g., a camera 225 of FIG. 2) and a communication circuit (e.g., a communication circuit 240 of FIG. 2). The wearable device 101 may identify a hand 112-1 included in FoV 1010 formed by the one or more cameras. The wearable device 101 may transmit or receive a wireless signal to or from the remote controller 242 through the communication circuit. Referring to FIG. 10, the wearable device 101 may display the screen 1020 including the virtual object 1030. Referring to FIG. 10, virtual objects 1030-1, 1030-2, and 1030-3 in different states switched by an input for changing the size of the virtual object 1030 indicated by the hand 112-1 and the remote controller 242 are illustrated.

In an example state of FIG. 10, the wearable device 101 may identify an input indicating the change in the size of the virtual object 1030 based on the hand 112-1 moved in the FoV 1010 and a signal received through the remote controller 242. The wearable device 101 may identify a pinch gesture of the hand 112-1 performed in the FoV 1010 based on the operation described above with reference to FIGS. 4 to 5. For example, while identifying the pinch gesture of the hand 112-1 disposed in a position fr1 in the FoV 1010 corresponding to a position ir1 of the virtual object 1030, from the remote controller 242 disposed at a position rc1 corresponding to a position vc1 of the virtual object 1030, based on receiving a signal for notifying pressing of a preset button of the remote controller 242, the wearable device 101 may identify the input for changing the size of the virtual object 1030. The preset button may include a button formed in the remote controller 242 to receive an input indicating selection of the virtual object 1030, such as a click button.

Referring to FIG. 10, while the hand 112-1 having a posture of the pinch gesture is moved along a path 1051, and the remote controller 242 is moved along a path 1041 by the hand 112-2, the wearable device 101 may perform at least one of movement, enlargement, and/or reduction of the virtual object 1030 based on the positions of the remote controller 242 and the hand 112-1. For example, in case that the hand 112-1 is moved from the position fr1 to a position fr2 along the path 1051, and the remote controller 242 is moved from the position rc1 to a position rc2 along the path 1052, the wearable device 101 may display a virtual object 1030-2 having a size based on positions vc2 and ir2 in the screen 1020 corresponding to the positions fr2 and rc2.

In an embodiment, in an example state of FIG. 10 of changing the size of the virtual object 1030 using the hand 112-1 and the remote controller 242, the wearable device 101 may cease disabling the pinch gesture based on the posture of the hand 112-1 and/or changing the size of the virtual object 1030 based on at least one of a signal received from the remote controller 242. For example, in case that the posture of the hand 112-1 is changed to another posture that is different from the posture of the pinch gesture, the wearable device 101 may cease changing the size of the virtual object 1030. For example, in case of receiving a signal indicating that the push of the preset button by the hand 112-2 is disabled, from the remote controller 242, the wearable device 101 may cease changing the size of the virtual object 1030.

Referring to FIG. 10, based on the hand 112-1 performing the pinch gesture to change the size of the virtual object 1030 being moved out of the FoV 1010, outside the FoV 1010, the wearable device 101 may at least temporarily cease changing the size of the virtual object 1030. For example, based on the hand 112-1 moved along the path 1051 being moved out of the FoV 1010 through the position fr2 of the edge of the FoV 1010, the wearable device 101 may cease changing the size of the virtual object 1030. For example, after the hand 112-1 is moved out of the FoV 1010 through the position fr2 of the edge of the FoV 1010, the wearable device 101 may maintain displaying the virtual object 1030 based on the position ir2 in the screen 1020 corresponding to the position fr2. For example, while the hand 112-1 is moved from the position fr2 to the position fr3 of the edge of the FoV 1010 along the path 1051, the wearable device 101 may maintain the virtual object 1030 in a state having a size based on the position ir2 in the screen 1020.

According to an embodiment, after the hand 112-1 is moved out of the FoV 1010 through the position fr2 of the edge of the FoV 1010, the wearable device 101 may re-execute a function of changing the size of the virtual object 1030 based on re-entry of the hand 112-1 to the FoV 1010. For example, based on identifying the hand 112-1 moved into the FoV 1010 through position fr5 of the edge of the FoV 1010 from the position fr4 outside of the FoV 1010 along a path 1061, the wearable device 101 may identify the re-entry of the hand 112-1. The wearable device 101, which has identified the re-entry of the hand 112-1, may re-execute a function for changing the size of the virtual object 1030, based on whether the posture of the hand 112-1 has a preset posture (e.g., the posture of the pinch gesture) for changing the size of the virtual object 1030. For example, the wearable device 101, which has identified the hand 112-1 having the posture of the pinch gesture moved into the FoV 1010 may change the size of the virtual object 1030, based on the hand 112-1 moved in the FoV 1010 along the path 1061 from the position fr5 of the edge of the FoV 1010. For example, in case that the hand 112-1 is moved from the position fr5 to a position fr6 in the FoV 1010 along the path 1061, and the remote controller 242 is moved from the position rc2 to a position rc6 along the path 1041, the wearable device 101 may display a virtual object 1030-3 in a state having a size based on positions ir6 and vc6 corresponding to each of the positions fr6 and rc6 in the screen 1020. For example, the wearable device 101 may change the size of the virtual object based on a path 1062 in the screen 1020 corresponding to the path 1061 of the hand 112-1 and/or the path 1041 identified by the remote controller 242.

According to an embodiment, after the hand 112-1 is moved out of the FoV 1010 through the position fr2 of the edge of the FoV 1010, the wearable device 101 may identify hand 112-1 moved into the FoV 1010 along a path 1071 from a position fr7 outside of the FoV 1010. Based on identifying the hand 112-1 having a posture different from the pinch gesture for changing the virtual object 1030, the wearable device 101 may execute another function different from changing the size of the virtual object 1030. For example, despite receiving a signal notifying that the preset button is pushed from the remote controller 242, the wearable device 101 that has identified the hand 112-1 having a posture different from the posture of the pinch gesture may cease the hand 112-1 changing the size of the virtual object 1030 along the path 1071 in the FoV 1010. For example, even though the hand 112-1 having the posture different from the posture of the pinch gesture moves from a position fr8 to the position fr9 along the path 1071, the wearable device 101 may maintain displaying the virtual object 1030-2 in a state having the size based on the position ir2 in the screen 1020 corresponding to the position fr2.

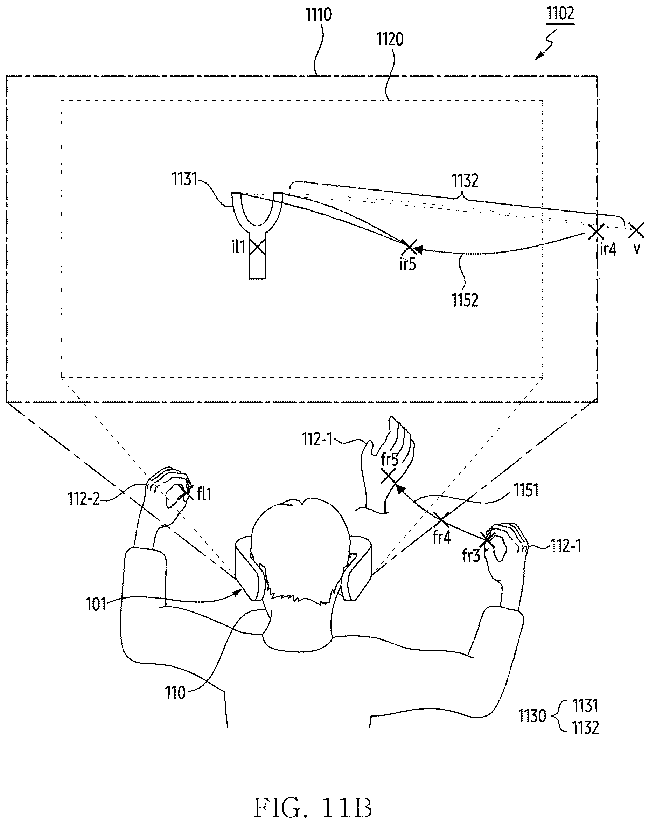

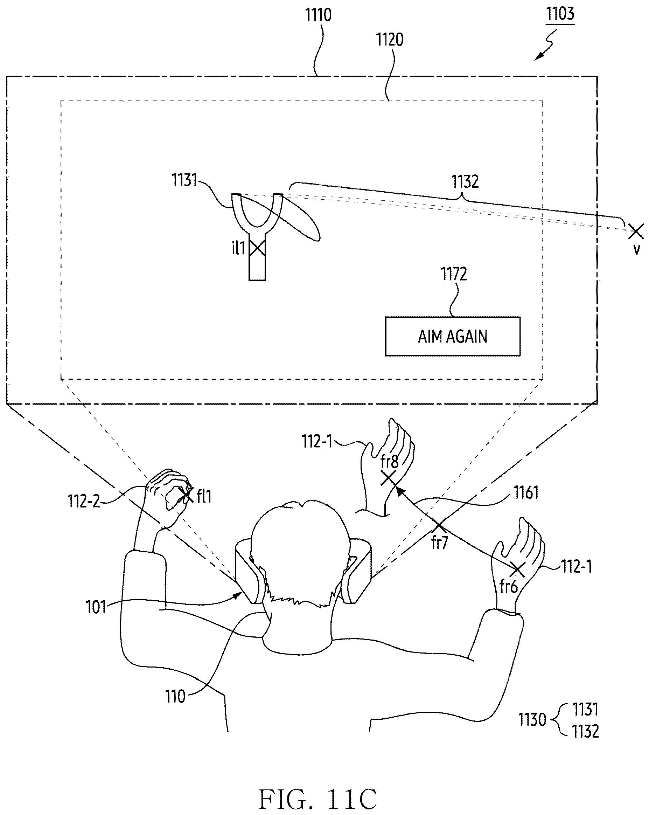

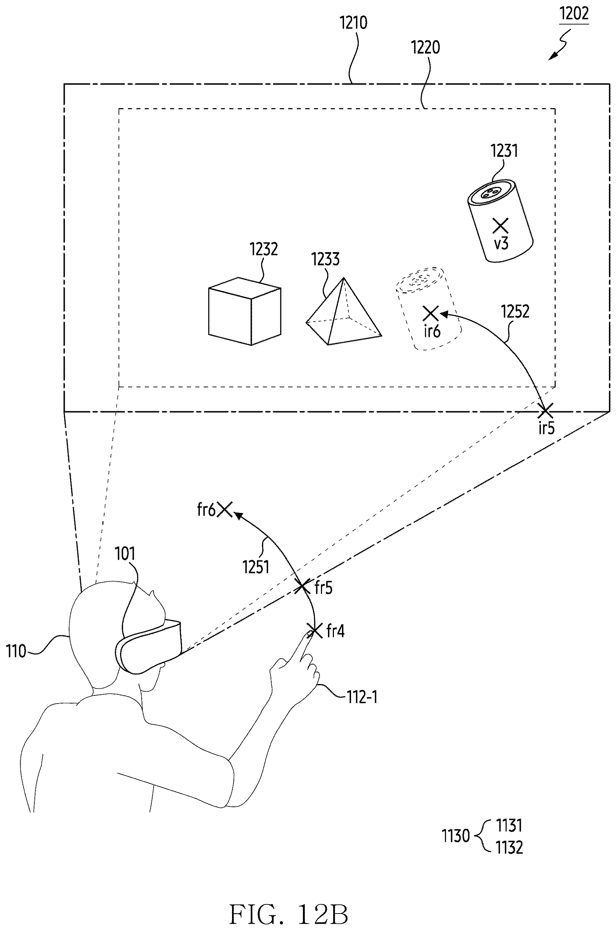

Hereinafter, an operation of the wearable device 101 that has identified a speed and/or velocity of the hand 112-1 moved at the edge of the FoV 1010 is described in greater detail below with reference to FIGS. 11A, 11B and 11C and/or 12A and 12B.

FIGS. 11A, 11B and 11C are diagrams illustrating example operations of a wearable device 101 performed based on movement of body parts according to various embodiments. The wearable device 101 of FIGS. 1A and 1B and FIG. 2 and/or a processor 210 of FIG. 2 may perform an operation described with reference to FIGS. 11A, 11B and 11C.

Referring to FIGS. 11A, 11B and 11C, example states 1101, 1102, and 1103 of the wearable device 101 that has identified hands 112-1 and 112-2 of a user 110 in FoV 1110 of one or more cameras (e.g., a camera 225 of FIG. 2) are illustrated. According to an embodiment, the wearable device 101 may identify the hands 112-1 and 112-2 using an image and/or video corresponding to the FoV 1110. In the state 1101 of FIG. 11A, the wearable device 101 may display a screen 1120 including a virtual object 1130 on a display (e.g., a display 220 of FIG. 2). Referring to FIGS. 11A, 11B and 11C, the example states 1101, 1102, and 1103 of the wearable device 101 displaying the virtual object 1130 having a form of a slingshot are illustrated. The virtual object 1130 having the form of the slingshot may be provided from a software application executed by the wearable device 101.

In the state 1101 of FIG. 11A, the wearable device 101 may identify an input indicating control of the virtual object 1130 based on the hands 112-1 and 112-2 moved in the FoV 1110. The wearable device 101 may identify a pinch gesture of the hands 112-1 and 112-2 performed in the FoV 1110 based on the operation described above with reference to FIGS. 4 to 5. For example, based on identifying the pinch gesture of the hands 112-1 and 112-2 disposed at positions fr1 and fl1 corresponding to positions ir1 and il1 on the virtual object 1130 in the screen 1120, the wearable device 101 may change display of the virtual object 1130 according to a distance between the hands 112-1 and 112-2 maintaining the pinch gesture. In the example state 1101 of FIG. 11A, based on identifying that in the virtual object 1130, the position fl1 of the hand 112-2 corresponds to a position il1 of a part 1131 representing a handle of the slingshot, and the position fr1 of the hand 112-1 corresponds to the position ir1 of a part 1132 representing an elastic body of the slingshot, the wearable device 101 may initiate changing the display of the virtual object 1130 according to the distance between the hands 112-1 and 112-2.

In the example state 1101 of FIG. 11A, while the hand 112-1 having a posture of the pinch gesture moves along a path 1141, the wearable device 101 may change the display of the virtual object 1130 based on the distance between the hands 112-1 and 112-2. For example, in case that the hand 112-1 having the pinch gesture moves from the position fr1 to a position fr2 in the FoV 1110 along the path 1141, the wearable device 101 may extend a portion 1132 of the virtual object 1130 corresponding to the elastic body based on a distance between the positions fr2 and fl1. For example, the wearable device 101 may move the position ir1 corresponding to the hand 112-1 in the portion 1132 along a path 1142.

Referring to FIG. 11A, in the state 1101 of changing the display of the virtual object 1130 based on the hands 112-1 and 112-2 of the pinch gesture, the wearable device 101 may execute a function based on the virtual object 1130 having a changed shape based on whether a posture of at least one of the hands 112-1 and 112-2 is changed to a posture different from the posture of the pinch gesture. For example, in response to identifying that the pinch gesture performed by the hand 112-1 is disabled, the wearable device 101 may execute a function based on the changed shape of the virtual object 1130. For example, the wearable device 101 may execute a pitching function related to the virtual object 1130.

Referring to FIG. 11A, based on at least one of the hands 112-1 and 112-2 performing the pinch gesture to change the size of the virtual object 1130 being moved out of the FoV 1110, the wearable device 101 may at least temporarily cease changing the display of the virtual object 1130. For example, based on the hand 112-1 moved along the path 1141 being moved out of the FoV 1110 through the position fr2 of the edge of the FoV 1110, the wearable device 101 may cease changing the portion 1132 of the virtual object 1130 according to the path 1141 of the hand 112-1. For example, after the hand 112-1 is moved out of the FoV 1110 through the position fr2, the wearable device 101 may maintain displaying the portion 1132 of the virtual object 1130 based on a position ir2 in the screen 1120 corresponding to the position fr2.

In an embodiment, the wearable device 101 may change the display of the virtual object 1130, based on the speed and/or velocity of the hand 112-1 being moved out of the FoV 1110, based on the hand 112-1 being moved out of the FoV 1110 through the position fr2 of the edge of the FoV 1110. For example, the wearable device 101 may change the display of the virtual object 1130 based on the speed of the hand 112-1 that was moved in the FoV 1110. In the above example, even though tracking the hand 112-1 is ceased as the hand 112-1 is moved out of the FoV 1110, the wearable device 101 may continuously extend the portion 1132 of the virtual object 1130 based on the velocity. In addition, the wearable device 101 may continuously extend the portion 1132 of the virtual object 1130 based on at least one of a path of hand 112-1 before being moved out of FoV 1110 (in the FoV 1110), information on an area in which the hand 112-1 may move, and moving speed of the hand 112-1.

Referring to FIG. 11A, after the hand 112-1 is moved out of the FoV 1110, the wearable device 101 may display a visual object 1171 for guiding the hand 112-1 to move into the FoV 1110. For example, in case that the wearable device 101 does not move the hand 112-1 into the FoV 1110 for a preset period of time, it may display the visual object 1171 including a preset text (e.g., "after 3 seconds, fire") notifying that a preset function (e.g., a pitching function) related to the virtual object 1130 is executed. The disclosure is not limited thereto, and the wearable device 101 may guide the user 110 to change a color of the virtual object 1130 or move the hand 112-1 into the FoV 1110 based on a visual effect such as blink.

According to an embodiment, after a state 1101 of identifying the hand 112-1 moved out of the FoV 1110, the wearable device 101 may re-execute a function of changing the display of the virtual object 1130 based on re-entry of the hand 112-1 to the FoV 1110. Referring to FIG. 11B, in the state 1102 after the state 1101, the user 110 may move the hand 112-1 of the position fr3 outside of the FoV 1110 into the FoV 1110 through a position fr4 of the edge of the FoV 1110 along a path 1151. The wearable device 101 may identify the re-entry of the hand 112-1 to the FoV 1110 from timing when the hand 112-1 moved along the path 1151 into the FoV 1110 through the position fr4 of the edge of the FoV 1110. The wearable device 101 that has identified the re-entry of the hand 112-1 to the FoV 1110 may re-execute a function for changing the display of the virtual object 1130 based on whether the posture of the hand 112-1 has the preset posture (e.g., the posture of the pinch gesture) for changing the size of the virtual object 1130. Based on identifying the hand 112-1 having the posture of the pinch gesture moved into the FoV 1110 in the example state 1102 of FIG. 11B, the wearable device 101 may change the size of the virtual object 1130 using the path 1151 of the hand 112-1.

In the example state 1102 of FIG. 11B, the wearable device 101 may change the display of the portion 1132 of the virtual object 1130 in the screen 1120 using the position and/or path of the hand 112-1 moved in the FoV 1110. In the state 1102, the wearable device 101 may change the portion 1132 of the virtual object 1130 along a path 1152 in the screen 1120 corresponding to the path 1151 of the hand 112-1 in the FoV 1110. The wearable device 101 may change the display of the portion 1132 along the path 1152 in the screen 1120 corresponding to the path 1151, from a position ir4 in the screen 1120 corresponding to the position fr4 of the edge of the FoV 1110 of the hand 112-1.

In the example state 1102 of FIG. 11B, the wearable device 101 may identify that the posture of the hand 112-1 moved to the position fr5 in the FoV 1110 is changed to a posture (e.g., a posture unfolding fingers exceeding a specified number) different from the pinch gesture. Based on identifying the hand 112-1 that has changed to the posture different from the pinch gesture, the wearable device 101 may execute the pitching function of the virtual object 1130 based on the position fr5. For example, the wearable device 101 may execute the pitching function on the virtual object 1130 based on a position ir5 in the screen 1120 corresponding to the position fr5.

Referring to FIG. 11C, in the state 1103 after the state 1101, the user 110 may move the hand 112-1 having the posture different from the posture of the pinch gesture from a position fr6 outside of the FoV 1110 into the FoV 1110 along a path 1161. The wearable device 101 that has identified the hand 112-1 at the position fr7 of the edge of the FoV 1110 may execute a function different from that of changing the display of the virtual object 1130 based on the different posture of the hand 112-1. For example, even though the posture of the hand 112-2 maintains the pinch gesture, the wearable device 101 that has identified the hand 112-1 having the posture different from the posture of the pinch gesture may not change the display of the portion 1132 of the virtual object 1130 based on the path 1161 in the FoV 1110 of the hand 112-1. For example, the wearable device 101 may display a visual object 1172 for guiding an input related to the virtual object 1130. The visual object 1171 may include, for example, preset text such as "Aim again". In the state 1103 of FIG. 11C, even though the hand 112-1 moves to a position fr8 in the FoV 1110 along the path 1161, the wearable device 101 may not change the display of the virtual object 1130 based on the position fr8.

As described above, according to an embodiment, the wearable device 101 may execute a function related to the virtual object 1130 provided from the software application based on the position of the hand 112-1 in the FoV 1110. Despite the hand 112-1 being moved out of the FoV 1110, the wearable device 101 may re-execute the function based on the re-entry of the hand 112-1 to the FoV 1110.

FIGS. 12A and 12B are diagrams illustrating example operations of a wearable device 101 performed based on movement of body parts. The wearable device 101 of FIGS. 1A to 1B and FIG. 2 and/or a processor 210 of FIG. 2 may perform an operation described with reference to FIGS. 12A and 12B.

Referring to FIGS. 12A and 12B, example states 1201 and 1202, of the wearable device 101 that has identified a hand 112-1 of a user 110 in FoV 1210 of one or more cameras (e.g., a camera 225 of FIG. 2) are illustrated. According to an embodiment, the wearable device 101 may identify the hand 112-1 using an image and/or video corresponding to the FoV 1210. In the state 1201 of FIG. 12A, the wearable device 101 may display a screen 1220 including virtual objects 1231, 1232, and 1233 on a display (e.g., a display 220 of FIG. 2). The wearable device 101 may display the virtual objects 1231, 1232, and 1233 included in a virtual space mapped to an external space. Positions of the virtual objects 1231, 1232, and 1233 in the screen 1220 may be interlocked with the external space based on the virtual space mapped to the external space. For example, the wearable device 101 may change the positions of the virtual objects 1231, 1232, and 1233 in the screen 1220 based on the rotation and/or movement of a head of the user 110 wearing the wearable device 101.

In the state 1201 of FIG. 12A, the wearable device 101 may identify an input indicating movement of the virtual object 1231 based on the hand 112-1 moved in the FoV 1210. The wearable device 101 may identify a pointing gesture of the hand 112-1 performed in the FoV 1210 based on the operation described above with reference to FIGS. 4 to 5. For example, based on identifying the pointing gesture of the hand 112-1 disposed in the position fr1 in the FoV 1210 corresponding to a position v1 of the virtual object 1231 in the screen 1220, the wearable device 101 may change a position of the virtual object 1231 in the screen 1220 based on a path 1241 in the FoV 1210 of the hand 112-1 maintaining the pointing gesture. In the example state 1201 of FIG. 12A, the wearable device 101 may move the position of the virtual object 1231 in the screen 1220 from the position v1 corresponding to the position fr1 to a position v2 along a path 1242, based on identifying the hand 112-1 moved from the position fr1 to a position fr2 along the path 1241 in the FoV 1210.

Referring to FIG. 12A, in the state 1201 of changing the position of the virtual object 1231 based on the hand 112-1 of the pointing gesture, the wearable device 101 may cease changing the position of the virtual object 1231 based on whether a posture of the hand 112-1 is changed to a posture different from a posture of the pointing gesture. For example, in response to identifying that the pointing gesture performed by the hand 112-1 is disabled, the wearable device 101 may cease moving the virtual object 1231 based on the path 1241 in the FoV 1210 of the hand 112-1.

Referring to FIG. 12A, tracking the hand 112-1 may be ceased, based on the hand 112-1 performing the pointing gesture for the movement of the virtual object 1231 being moved out of the FoV 1210. In case that tracking the hand 112-1 is ceased, the wearable device 101 may move the virtual object 1231 based on velocity of the hand 112-1 moved in the FoV 1210. For example, based on identifying the hand 112-1 moved out of the FoV 1210 at a first velocity at the position fr2 of an edge of the FoV 1210, the wearable device 101 may move the virtual object 1231 using the first velocity. Referring to FIG. 12A, independently of the hand 112-1 being moved to a position fr3 outside of the FoV 1210 through the position fr2, the wearable device 101 may move the virtual object 1231 displayed on the position v2 in the screen 1220 corresponding to the position fr2 based on the velocity of the hand 112-1 at the position fr2. A position v3 of the virtual object 1231 moved by the wearable device 101 may be a position moved by the velocity, independent of the position fr2.

In an embodiment, after the hand 112-1 is moved out of the FoV 1210, the wearable device 101 may move the virtual object 1231 using the velocity of the hand 112-1 identified in the FoV 1210 based on a preset period and/or distance. For example, the wearable device 101 may move the virtual object 1231 based on an external space in which the hand 112-1 may move. For example, the wearable device 101 may move the virtual object 1231 in a portion in the virtual space corresponding to the external space in which the hand 112-1 may move, based on the virtual space mapped to the external space.

Referring to FIG. 12B, a state 1202 in which the user 110 rotates the head toward a direction different from a direction of the head in the state 1201 after the hand 112-1 is moved out of the FoV 1210 is illustrated. Based on identifying the rotation of the head, the wearable device 101 may display the screen 1220 based on the direction of the head. The virtual objects 1232 and 1233 may be displayed based on positions mapped to the external space. The virtual object 1231 that was moved by the hand 112-1 before being moved out of the FoV 1210 may be displayed at the position v3 that was moved by the velocity of the hand 112-1 before being moved out of the FoV 1210. The disclosure is not limited thereto, and the wearable device 101 may maintain moving the virtual object 1231 in the screen 1220 based on the velocity.

According to an embodiment, the wearable device 101 may re-execute a function of moving the virtual object 1231 based on re-entry of the hand 112-1 to the FoV 1210 after a state identifying the hand 112-1 that has moved out of the FoV 1210. Referring to FIG. 12B, in the state 1202 after the state 1201, the user 110 may move the hand 112-1 of a position fr4 outside of the FoV 1210 into the FoV 1210 through a position fr5 of the edge of the FoV 1210 along a path 1251. The wearable device 101 may identify the re-entry of the hand 112-1 to the FoV 1210 from timing when the hand 112-1 moved along the path 1251 into the FoV 1210 through the position fr5 of the edge of the FoV 1210.

Referring to FIG. 12B, the wearable device 101 that has identified the re-entry of the hand 112-1 to the FoV 1210 may re-execute a function for the movement of the virtual object 1231, based on whether the posture of the hand 112-1 has a posture (e.g., the posture of the pointing gesture) for the movement of the virtual object 1231. In the example state 1202 of FIG. 12B, based on identifying the hand 112-1 having the posture of the pointing gesture moved into the FoV 1210, the wearable device 101 may move the virtual object 1231 using the path 1251 of the hand 112-1. For example, the wearable device 101 may move the virtual object 1232 from a position ir5 in the screen 1220 corresponding to the position fr5 to a position ir6 in the screen 1220 corresponding to the position fr6 along a path 1252 corresponding to the path 1251, based on identifying hand 112-1 moved from the position fr5 in the FoV 1210 to a position fr6 along the path 1251.

As described above, according to an embodiment, the wearable device 101 may move the virtual object 1231 based on the velocity of the hand 112-1 even after the hand 112-1 moves out of the FoV 1210. Since the virtual object 1231 is moved based on the velocity, the wearable device 101 may display the virtual object 1231 based on a position where the hand 112-1 is expected to be moved, even if tracking the hand 112-1 moved out of the FoV 1210 is ceased.

Hereinafter, with reference to FIGS. 13A, 13B and 13C, FIGS. 14A, 14B and 14C and/or FIG. 15, an operation of the wearable device 101 that executes a function for storing a virtual object corresponding to the hand 112-1 based on the hand 112-1 moved out of the FoV 1210 is described in greater detail.

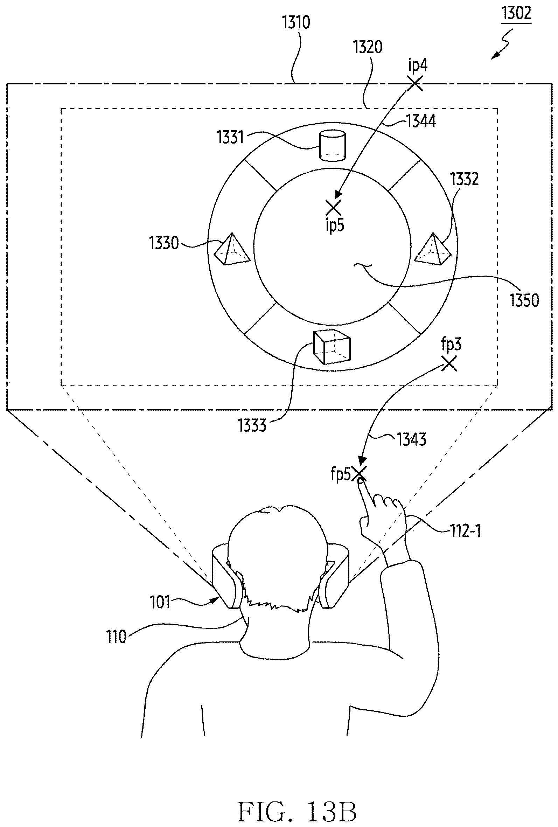

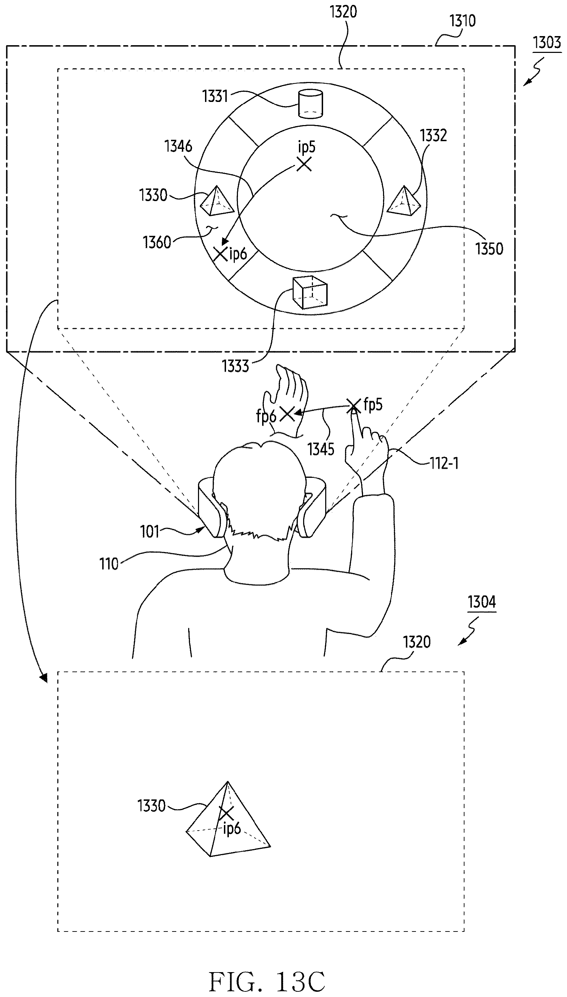

FIGS. 13A, 13B and 13C are diagrams illustrating example operations of a wearable device 101 performed based on movement of body parts. The wearable device 101 of FIGS. 1A to 1B and FIG. 2 and/or a processor 210 of FIG. 2 may perform an operation described with reference to FIGS. 13A, 13B and 13C.

Referring to FIGS. 13A, 13B and 13C, example states 1301, 1302, and 1303 of the wearable device 101 identifying a hand 112-1 of a user 110 in FoV 1310 of one or more cameras (e.g., a camera 225 of FIG. 2) are illustrated. According to an embodiment, the wearable device 101 may identify the hand 112-1 using an image and/or video corresponding to the FoV 1310. In the state 1301 of FIG. 13A, the wearable device 101 may display a screen 1320 including a virtual object 1330 on a display (e.g., a display 220 of FIG. 2).

In the state 1301 of FIG. 13A, the wearable device 101 may identify an input indicating a change in a size of the virtual object 1330 based on the hand 112-1 moved in the FoV 1310. The wearable device 101 may identify a pointing gesture of the hand 112-1 performed in the FoV 1310 based on the operation described above with reference to FIGS. 4 to 5. For example, based on identifying the pointing gesture of the hand 112-1 disposed at a position fr1 in the FoV 1310 corresponding to a position ip1 in the virtual object 1330 in the screen 1320, the wearable device 101 may move the virtual object 1330 along a path 1341 of the hand 112-1 maintaining the pointing gesture. The wearable device 101 that moves the virtual object 1330 in response to the hand 112-1 having the pointing gesture may provide a user experience such as dragging the virtual object 1330 by the hand 112-1 to the user 110 wearing the wearable device 101.

In the example state 1301 of FIG. 13A, while the hand 112-1 having a posture of the pointing gesture moves along the path 1341, the wearable device 101 may move the virtual object 1330 based on a path 1342 in the screen 1320 corresponding to the path 1341. For example, based on the path 1341 of the hand 112-1 having the pointing gesture, the wearable device 101 may move the virtual object 1330 displayed at the position ip1 in the screen 1320 to a position ip2 along the path 1342 corresponding to the path 1341.

Referring to FIG. 13A, in the state 1301 of moving the virtual object 1330 based on the hand 112-1 of the pointing gesture, the wearable device 101 may cease moving the virtual object 1330 based on whether the posture of the hand 112-1 is changed to a posture different from the posture of the pointing gesture. For example, in response to identifying that the pointing gesture performed by the hand 112-1 is disabled, the wearable device 101 may cease moving the position of the virtual object 1330 based on a position and/or path 1341 in the FoV 1310 of the hand 112-1. In the above example, the position of the virtual object 1330 may be fixed based on the position in the FoV 1310 of the hand 112-1 at timing when the disabling of the pointing gesture is identified.

Referring to FIG. 13A, based on the hand 112-1 performing the pointing gesture to change the size of the virtual object 1330 being moved out of the FoV 1310, the wearable device 101 may store information related to the virtual object 1330 in memory (e.g., a memory 215 of FIG. 2) of the wearable device 101. In response to identifying the hand 112-1 moved out of the FoV 1310, the wearable device 101 may cease displaying the virtual object 1330 corresponding to the hand 112-1.

In an embodiment, a function of storing information related to the virtual object 1330 in the memory by the wearable device 101 may correspond to a function (e.g., a copy function and/or a cut function) for storing the virtual object 1330, such as a clipboard (or inventory). The clipboard may be formed by the wearable device 101 to correspond to a preset area of the memory of the wearable device 101 and support copying and/or movement of information by the user 110. The wearable device 101 may store information on a graphic object displayed in three dimensions in the screen 1320, like the virtual object 1330, in the memory based on the clipboard. The disclosure is not limited thereto, and the wearable device 101 may store a link (e.g., text with a uniform resource indicator (URL) format) for executing multimedia content such as an image and/or video, contact text, and/or a software application, in the memory, based on the clipboard.

Referring to FIG. 13A, the wearable device 101 may cease displaying the virtual object 1320 and may display the visual object 1350 for notifying that information on the virtual object 1320 is stored in the memory based on identifying the hand 112-1 moved out of the FoV 1310. In the state 1301 identifying the hand 112-1 moved out of the FoV 1310 along the path 1341, the wearable device 101 may remove the virtual object 1330 displayed based on the position ip2 corresponding to an edge of the FoV 1310 overlapping the path 1341, from the screen 1320. A visual object 1350 including preset text (e.g., "saved") for indicating that the information has been stored in the memory is illustrated as an example, but the disclosure is not limited thereto.

According to an embodiment, the wearable device 101 may re-execute a function related to the virtual object 1330 stored in the memory based on re-entry of the hand 112-1 to the FoV 1310 after a state identifying the hand 112-1 moved out of the FoV 1310. Referring to FIG. 13B, in the state 1302 after the state 1301, the user 110 may move the hand 112-1 of a position fp3 outside of the FoV 1310 into the FoV 1310 along a path 1343. The wearable device 101 may identify the re-entry of the hand 112-1 to the FoV 1310 from timing when the hand 112-1 moved along the path 1341 is moved into the FoV 1310. The wearable device 101 that has identified the re-entry of the hand 112-1 to the FoV 1310 may identify whether the posture of the hand 112-1 has a preset posture for calling the clipboard (or the inventory) in which information on the virtual object 1330 is stored.

Referring to FIG. 13B, based on identifying the hand 112-1 having the posture of the pointing gesture, the wearable device 101 may execute a function for displaying at least one virtual object (e.g., the virtual object 1330 that was stored in the state 1301 of FIG. 13A) based on information stored in the memory. In an embodiment of FIG. 13B, the user 110's action of moving the hand 112-1 having the pointing gesture from outside of the FoV 1310 into the FoV 1310 may correspond to an input indicating the display of the information stored in the memory. In response to the input, the wearable device 101 may display at least one virtual object corresponding to the information, on the screen 1320.

Referring to FIG. 13B, based on identifying the hand 112-1 moved into the FoV 1310 along the path 1343 from outside of the FoV 1310, the wearable device 101 may display a list of information stored in the memory based on the clipboard in the screen 1320. The wearable device 101, which identifies the hand 112-1 being moved into the FoV 1310 along the path 1343, may display a virtual object (e.g., a virtual object 142 of FIG.1) being moved along a path 1344 corresponding to the path 1343. The list may include one or more virtual objects arranged along a shape of a circle. Referring to FIG. 13B, in an example state 1302 in which four virtual objects 1330, 1331, 1332, and 1333 are stored based on the clipboard, the wearable device 101 may display the four virtual objects 1330, 1331, 1332, and 1333 in the screen 1320 according to the shape of the circle. The center of the circle may correspond to a position ip5 in the screen 1320 that corresponds to a position fp5 in the FoV 1310 of the hand 112-1 moved into the FoV 1310.

Although an embodiment of displaying the virtual objects 1330, 1331, 1332, and 1333 stored in the wearable device 101 based on the shape of the circle is illustrated, the disclosure is not limited thereto. The wearable device 101 may display a virtual object (e.g., the virtual object 1330 that was stored in the memory in the state 1301 of FIG. 13A before the state 1302 of FIG. 13B) corresponding to information last stored in the memory based on the clipboard. The wearable device 101 may display information corresponding to a software application displayed through the screen 1320 among information stored in the memory based on the clipboard.

Referring to FIG. 13B, in the state 1302 of displaying the list of information stored in the memory based on the clipboard in the screen 1320, the wearable device 101 may cease displaying the list based on the position, path, and/or posture of the hand 112-1 in the FoV 1310. For example, based on identifying the hand 112-1 that changes to the posture different from the posture of the pointing gesture in an area 1350, which includes the center of the virtual objects 1330, 1331, 1332, and 1333 arranged along the shape of the circle, the wearable device 101 may cease displaying the list.

Referring to FIG. 13B, in the state 1302 of displaying the list of information stored in the memory based on the clipboard in the screen 1320, the wearable device 101 may display at least one of the virtual objects 1330, 1331, 1332, and 1333 included in the list based on the position, path, and/or posture of the hand 112-1 in the FoV 1310. Referring to FIG. 13C, the wearable device 101 that has identified the hand 112-1 moved from the position fp5 to a position fp6 in the FoV 1310 along a path 1345 may determine that the hand 112-1 is moved from the position ip5 to a position ip6 in the screen 1320 in which the virtual object 1330 is displayed along a path 1346 in the screen 1320 corresponding to the path 1345.

In the state 1303 of FIG. 13C, based on identifying that the posture of the hand 112-1 disposed at the position fp6 in the FoV 1310 is changed to the posture different from the posture of the pointing gesture, the wearable device 101 may display the virtual object 1330 corresponding to the position fp6 on the screen 1320. The position fp6 may correspond to the position ip6 in an area 1360 related to the virtual object 1330 in the screen 1320. For example, the wearable device 101 that is identified the hand 112-1 that is changed to a posture in which all fingers are unfolded may switch the virtual object 1330 to a state 1304 of displaying the virtual object 1330 on the screen 1320. Referring to FIG. 13C, in the state 1304, the wearable device 101 may display a virtual object 1330 at the position ip6 in the screen 1320 corresponding to the position fp6.

Although, among the edges of the FoV 1310, an operation of the wearable device 101 based on the hand 112-1 entering the FoV 1310 through an edge corresponding to a top of the FoV 1310 has been described, the disclosure is not limited thereto.

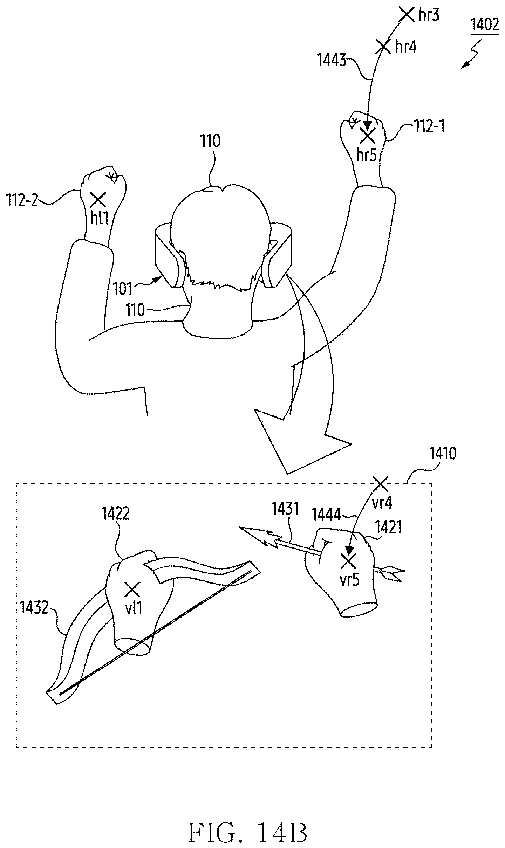

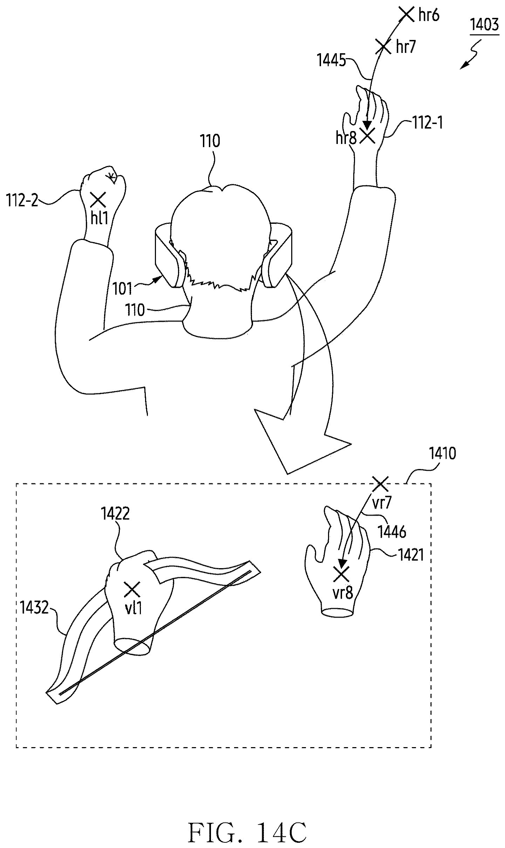

Hereinafter, with reference to FIGS. 14A, 14B and 14C, an operation of the wearable device 101 adding one or more virtual objects to the screen 1320 based on the hand 112-1 moved from outside of the FoV 1310 into the FoV 1310 is described.

FIGS. 14A, 14B and 14C are diagrams illustrating different example states of a screen displayed by a wearable device 101 based on a position of a body part with respect to field-of-view (FoV) of a camera. The wearable device 101 of FIGS. 1A and 1B and FIG. 2 and/or a processor 210 of FIG. 2 may perform operations described with reference to FIGS. 14A, 14B and 14C.

Referring to FIGS. 14A, 14B and 14C, example states 1401, 1402, and 1403 of the wearable device 101 that has identified hands 112-1 and 112-2 of a user 110 on the FoV of one or more cameras (e.g., a camera 225 of FIG. 2) are illustrated. According to an embodiment, the wearable device 101 may identify the hands 112-1 and 112-2 using an image and/or video corresponding to the FoV.

In the state 1401 of FIG. 14A, the wearable device 101 may display a screen 1410 including virtual objects 1431 and 1432 on a display (e.g., a display 220 of FIG. 2). The virtual objects 1431 and 1432 may be displayed based on a software application (e.g., a game application) executed by the wearable device 101. The wearable device 101 may display virtual objects 1421 and 1422 corresponding to each of the hands 112-1 and 112-2 in the screen 1410. For example, the wearable device 101 may display the virtual object 1421 corresponding to the hand 112-1 based on a position of the hand 112-1 in the FoV. For example, the wearable device 101 may display the virtual object 1422 corresponding to the hand 112-2 based on a position of the hand 112-2 in the FoV.

In the state 1401 of FIG. 14A, the wearable device 101 may change the display of the virtual objects 1421, 1422, 1431, and 1432 displayed on the screen 1410 based on gestures performed by each of the hands 112-1 and 112-2. For example, the wearable device 101 identifying the hand 112-2 having a posture of a clench gesture at a position hl1 in the FoV may display the virtual object 1422 having the same shape as holding the virtual object 1432 displayed at a position vl1 in the screen 1410 corresponding to the position hl1. For example, the wearable device 101 identifying the hand 112-1 having the posture of the clench gesture at a position hr1 in the FoV may display the virtual object 1421 having the same shape as holding the virtual object 1431 displayed at a position vr1 corresponding to the position hr1.

In the state 1401 of FIG. 14A, the wearable device 101 may identify an input indicating movement of the virtual object 1431 based on the hand 112-1 moved in the FoV. Based on the operation described above with reference to FIGS. 4 to 5, the wearable device 101 that has identified the clench gesture of the hand 112-1 that was performed in the FoV may move the virtual objects 1421 and 1431 along a path 1441 of the hand 112-1 maintaining the clench gesture. The wearable device 101 that moves the virtual objects 1421 and 1431 in response to the hand 112-1 having the clench gesture may provide a user experience such as moving the virtual object 1431 by the hand 112-1 to the user 110 wearing the wearable device 101.

In the example state 1401 of FIG. 14A, while the hand 112-1 having the posture of the clench gesture moves along the path 1441, the wearable device 101 may move the virtual objects 1421 and 1431 based on a path 1442 in a screen 1420 corresponding to the path 1441. For example, based on the path 1441 of the hand 112-1 having the clench gesture, the wearable device 101 may move the virtual objects 1421 and 1431 displayed on the position vr1 in the screen 1420 to a position vr2 along the path 1442 corresponding to the path 1441.

Referring to FIG. 14A, in the state 1401 of moving the virtual objects 1421 and 1431 based on the hand 112-1 of the clench gesture, the wearable device 101 may cease moving the virtual objects 1421 and 1431 based on whether the posture of the hand 112-1 is changed to a posture different from posture of the clench gesture. For example, in response to identifying that the clench gesture performed by the hand 112-1 is disabled, the wearable device 101 may cease moving a position of the virtual object 1431 based on the location and/or path 1441 in the FoV of the hand 112-1. In the above example, the position of the virtual object 1431 may be fixed based on the position in the FoV of the hand 112-1 at timing when the disabling of the clench gesture was identified. In the above example, the virtual object 1421 for indicating the position of the hand 112-1 may be moved based on the position of the hand 112-1 by the wearable device 101 even after the clench gesture is disabled.

Referring to FIG. 14A, based on the hand 112-1 performing the clench gesture to change a size of the virtual object 1431 being moved out of the FoV, the wearable device 101 may store information related to the virtual object 1431 in a memory (e.g., a memory 215 of FIG. 2) of the wearable device 101. In response to identifying the hand 112-1 moved out of the FoV through a position hr2 overlapping an edge of the FoV, the wearable device 101 may cease displaying the virtual object 1431.

According to an embodiment, the wearable device 101 may re-execute a function related to the virtual object 1431 stored in the memory based on re-entry of the hand 112-1 to the FoV after the state 1401 of FIG. 14A identifying the hand 112-1 moved out of the FoV. Referring to FIG. 14B, in the state 1402 after the state 1401, the user 110 may move the hand 112-1 of a position hr3 outside of the FoV into the FoV along a path 1443. The wearable device 101 may identify the re-entry of the hand 112-1 to the FoV, from timing when the hand 112-1 moved along the path 1443 is moved into the FoV. The wearable device 101 that has identified the re-entry of the hand 112-1 to the FoV may identify whether the posture of the hand 112-1 has a preset posture for resuming display of the virtual object 1431.

Referring to FIG. 14B, based on identifying the hand 112-1 having the posture of the clench gesture, the wearable device 101 may execute a function for resuming the display of the virtual object 1431. In an embodiment of FIG. 14B, an action of the user 110 moving the hand 112-1 having the clench gesture from outside of the FoV into the FoV may correspond to an input of resuming the display of the virtual object 1431. In response to the input, the wearable device 101 may display the virtual object 1431 on the screen 1410.

Referring to FIG. 14B, based on identifying the hand 112-1 moved into the FoV along the path 1443 from outside of the FoV, the wearable device 101 may display the virtual object 1431 in the screen 1420. Based on a path 1444 corresponding to the path 1443 of the hand 112-1 moved into the FoV, the wearable device 101 may display the virtual object 1421 and the virtual object 1431 corresponding to the hand 112-1. In case that the hand 112-1 moves from the position hr3 outside of the FoV to the position hr5 along the path 1443 by passing through a position hr4 of the edge of the FoV, the wearable device 101 may display the virtual objects 1421 and 1431 moved from a position vr4 in the screen 1410 corresponding to the position hr4 to a position vr5 in the screen 1410 corresponding to the position hr5 along the path 1444.

Referring to FIG. 14C, in the state 1403 after the state 1401 of ceasing the display of the virtual object 1431 based on FIG. 14A, in case that the posture of the hand 112-1 moved into the FoV is different from the preset posture for resuming the display of the virtual object 1431, the wearable device 101 may maintain ceasing the display of the virtual object 1431. For example, based on the hand 112-1 having a posture (e.g., a posture with all fingers is unfolded) different from a posture for the clench gesture being moved into the FoV, the wearable device 101 may not display the virtual object 1431 independent of a path 1445 of the hand 112-1. In the state 1403 of not displaying the virtual object 1431, the wearable device 101 may display the virtual object 1421 corresponding to the hand 112-1 in the screen 1410. For example, the wearable device 101 may move the virtual object 1421 in the screen 1410 along a path 1446 in the screen 1410 corresponding to the path 1445 of the hand 112-1. For example, in case that the hand 112-1 moves from a position hr6 outside of the FoV to a position hr8 along the path 1445 by passing through a position hr7 of the edge of the FoV, the wearable device 101 may display the virtual object 1421 moved from a position vr7 in the screen 1410 corresponding to the position hr7 to a position vr8 in the screen 1410 corresponding to the position hr8 along the path 1446.

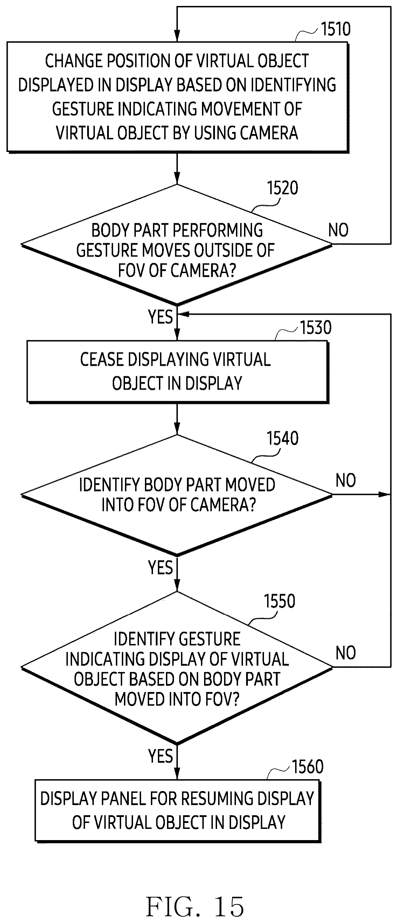

Hereinafter, with reference to FIG. 15, an operation of the wearable device 101 described with reference to FIGS. 12A and 12B and/or FIGS. 14A, 14B and 14C is described.

FIG. 15 is a flowchart illustrating example operations of a wearable device according to various embodiments. A wearable device 101 of FIGS. 1A and 1B and FIG. 2 and/or a processor 210 of FIG. 2 may perform an operation of the wearable device described with reference to FIG. 15. The operation of the wearable device described with reference to FIG. 15 may be related to or may be performed similarly to at least one of operations of FIGS. 3 and/or 8.

Referring to FIG. 15, in operation 1510, according to an embodiment, a processor of the wearable device may change a position of a virtual object displayed in a display based on identifying a gesture indicating movement of the virtual object using a camera. The camera of the operation 1510 may include a camera 225 of FIG. 2. The display of the operation 1510 may include a display 220 of FIG. 2. The wearable device may change the position of the virtual object based on a path of a body part (e.g., a hand 112-1 of FIGS. 13A to 13C and/or 14A to 14C) maintaining the gesture.

Referring to FIG. 15, in operation 1520, according to an embodiment, the processor of the wearable device may identify whether the body part performing the gesture moves outside of FoV of the camera. The processor may perform the operation 1520 similar to operation 320 of FIG. 3 and/or operation 820 of FIG. 8. For example, before the body part performing the gesture is moved outside of the FoV, or while it is moved in the FoV (1520-No), the processor may change the position of the virtual object based on the operation 1510. In a state of identifying the body part moved outside of the FoV (1520-Yes), the processor may perform operation 1530.

Referring to FIG. 15, in the operation 1530, according to an embodiment, the processor of the wearable device may cease displaying the virtual object in the display. The processor may store information for resuming display of the virtual object in memory (e.g., a memory 215 in FIG. 2). After ceasing the display of the virtual object based on the body part being moved out of the FoV, the processor may identify re-entry of the body part.

Referring to FIG. 15, in operation 1540, according to an embodiment, the processor of the wearable device may identify a body part being moved into the FoV of the camera. Before identifying the body part being moved into the FoV (1540-No), the processor may not display the virtual object based on the operation 1530. Based on identifying the body part being moved into the FoV (1540-Yes), the processor may perform operation 1550. The processor may perform the operation 1540 of FIG. 15, similar to operation 340 of FIG. 3 and/or operation 840 of FIG. 8.

Referring to FIG. 15, in the operation 1550, according to an embodiment, the processor of the wearable device may identify a gesture indicating the display of the virtual object based on body part moved into the FoV. The gesture of the operation 1550 may match the gesture of the operation 1510. For example, the processor may identify whether the gesture performed by the body part moved into the FoV corresponds to the gesture of operation 1510. If the gesture of the operation 1550 has not been identified (1550-No), or before identifying the gesture of the operation 1550, the processor may maintain limiting the display of the virtual object based on the operation 1530. Based on identifying the gesture of the operation 1550 (1550-Yes), the processor may perform operation 1560.

Referring to FIG. 15, in the operation 1560, according to an embodiment, the processor of the wearable device may display a panel for resuming the display of the virtual object in the display. The panel may include a list including one or more virtual objects described with reference to FIG. 13B. Based on the panel, the processor may identify an input for resuming display of the virtual object of the operation 1530. Based on the input, the processor may display the virtual object.

As described above, according to an embodiment, the processor of the wearable device may execute a function for controlling the virtual object using a finite range of a camera and/or a sensor for detecting the body part such as a hand. The function may be re-executed based on re-entry of a body part moved out of the range.

Hereinafter, an example of a form factor of the wearable device 101 according to an embodiment is described with reference to FIGS. 16A and 16B and/or 17A and 17B.

FIG. 16A is a perspective view illustrating an example wearable device 1600 according to an embodiment. FIG. 16B is a perspective view illustrating an example configuration of one or more hardware (or pieces of hardware) disposed in a wearable device 1600 according to an embodiment. The wearable device 1600 of FIGS. 16A and 16B may include the wearable device 101 of FIGS. 1A and 1B and/or FIG. 2. As shown in FIG. 16A, according to an embodiment, the wearable device 1600 may include at least one display 1650 and a frame supporting the at least one display 1650.

According to an embodiment, the wearable device 1600 may be wearable on a portion of the user's body. The wearable device 1600 may provide augmented reality (AR), virtual reality (VR), or mixed reality (MR) combining the augmented reality and the virtual reality to a user wearing the wearable device 1600. For example, the wearable device 1600 may output a virtual reality image to a user through the at least one display 1650 in response to a user's preset gesture obtained through a motion recognition camera 1640-2 of FIG. 16B.

According to an embodiment, the at least one display 1650 in the wearable device 1600 may provide visual information to a user. The at least one display 1650 may include the display 220 of FIG. 2. For example, the at least one display 1650 may include a transparent or translucent lens 1609(e.g., a lens 1609-1 corresponding to user's left eye and a lens 1609-2 corresponding to user's right eye). The at least one display 1650 may include a first display 1650-1 and/or a second display 1650-2 spaced apart from the first display 1650-1. For example, the first display 1650-1 and the second display 1650-2 may be disposed at positions corresponding to the user's left and right eyes, respectively.

Referring to FIG. 16B, the at least one display 1650 may provide another visual information, which is distinct from the visual information, together with the visual information included in the ambient light passing through the lens, to a user wearing the wearable device 1600, by forming a displaying area on the lens. The lens may be formed based on at least one of a fresnel lens, a pancake lens, or a multi-channel lens. For example, the displaying area formed by the at least one display 1650 may be formed on the second surface 1632 among the first surface 1631 and the second surface 1632 of the lens. When the user wears the wearable device 1600, the ambient light may be transmitted to the user by being incident on the first surface 1631 and being penetrated through the second surface 1632. For another example, the at least one display 1650 may display the virtual reality image to be combined with a real screen transmitted through the ambient light. The virtual reality image output from the at least one display 1650 may be transmitted to the user's eyes through the one or more hardware (e.g., optical devices 1682 and 1684, and/or at least one waveguides 1633 and 1634)) included in the wearable device 1600.

According to an embodiment, the wearable device 1600 may include the waveguides 1633 and 1634 that diffract light transmitted from the at least one display 1650 having been relayed by the optical devices 1682 and 1684 and transmits it to the user. The waveguides 1633 and 1634 may be formed based on at least one of glass, plastic, or polymer. A nano pattern may be formed on at least a portion of the outside or inside of the waveguides 1633 and 1634. The nano pattern may be formed based on a grating structure having a polygonal or curved shape. Light incident to one end of the waveguides 1633 and 1634 may be propagated to the other end of the waveguides 1633 and 1634 by the nano pattern. The waveguides 1633 and 1634 may include at least one of at least one diffraction element (e.g., a diffractive optical element (DOE), a holographic optical element (HOE)), and a reflection element (e.g., a reflection mirror). For example, the waveguides 1633 and 1634 may be disposed in the wearable device 1600 to guide a screen displayed by the at least one display 1650 to the user's eyes. For example, the screen may be transmitted to the user's eyes based on total internal reflection (TIR) generated in the waveguides 1633 and 1634.

According to an embodiment, the wearable device 1600 may analyze an object included in a real image collected through a photographing camera 1640-1, combine a virtual object corresponding to an object that became a subject of augmented reality provision among the analyzed object, and display them on the at least one display 1650. The virtual object may include at least one of text and images for various information associated with the object included in the real image. The wearable device 1600 may analyze the object based on a multi-camera such as a stereo camera. For the object analysis, the wearable device 1600 may execute time-of-flight (ToF) and/or simultaneous localization and mapping (SLAM) supported by the multi-camera. The user wearing the wearable device 1600 may watch an image displayed on the at least one display 1650.

According to an embodiment, the frame may be configured with a physical structure in which the wearable device 1600 may be worn on the user's body. According to an embodiment, the frame may be configured so that when the user wears the wearable device 1600, the first display 1650-1 and the second display 1650-2 may be positioned corresponding to the user's left and right eyes. The frame may support the at least one display 1650. For example, the frame may support the first display 1650-1 and the second display 1650-2 to be positioned at positions corresponding to the user's left and right eyes.

Referring to FIG. 16A, according to an embodiment, the frame may include an area 1620 at least partially in contact with the portion of the user's body in case that the user wears the wearable device 1600. For example, the area 1620 in contact with the portion of the user's body of the frame may include an area contacting a portion of the user's nose, a portion of the user's ear, and a portion of the side of the user's face that the wearable device 1600 contacts. According to an embodiment, the frame may include a nose pad 1610 that contacts the portion of the user's body. When the wearable device 1600 is worn by the user, the nose pad 1610 may be contacted on the portion of the user's nose. The frame may include a first temple 1604 and a second temple 1605 that is contacted on another portion of the user's body that is distinct from the (nose) portion of the user's body.

For example, the frame may include a first rim 1601 surrounding at least a portion of the first display 1650-1, a second rim 1602 surrounding at least a portion of the second display 1650-2, a bridge 1603 disposed between the first rim 1601 and the second rim 1602, a first pad 1611 disposed along a portion of the edge of the first rim 1601 from one end of the bridge 1603, a second pad 1612 disposed along a portion of the edge of the second rim 1602 from the other end of the bridge 1603, the first temple 1604 extending from the first rim 1601 and fixed to a portion of the wearer's ear, and the second temple 1605 extending from the second rim 1602 and fixed to a portion of the ear opposite to the ear. The first pad 1611 and the second pad 1612 may be in contact with the portion of the user's nose, and the first temple 1604 and the second temple 1605 may be in contact with a portion of the user's face and the portion of the user's ear. The temples 1604 and 1605 may be rotatably connected to the rim through hinge units 1606 and 1607 of FIG. 16B. The first temple 1604 may be rotatably connected with respect to the first rim 1601 through the first hinge unit 1606 disposed between the first rim 1601 and the first temple 1604. The second temple 1605 may be rotatably connected with respect to the second rim 1602 through the second hinge unit 1607 disposed between the second rim 1602 and the second temple 1605. According to an embodiment, the wearable device 1600 may identify an external object (e.g., a user's fingertip) touching the frame and/or a gesture performed by the external object using a touch sensor, a grip sensor, and/or a proximity sensor formed on at least a portion of the surface of the frame.

According to an embodiment, the wearable device 1600 may include hardware (e.g., hardware described above based on the block diagram of FIG. 2) that performs various functions. For example, the hardware may include a battery module 1670, an antenna module 1675, the optical devices 1682 and 1684, speakers 1692-1 and 1692-2, microphones 1694-1, 1694-2, and 1694-3, a light emitting module (not illustrated), and/or a printed circuit board 1690. Various hardware may be disposed in the frame.

According to an embodiment, the microphone 1694-1, 1694-2, and 1694-3 of the wearable device 1600 may obtain a sound signal, by being disposed on at least a portion of the frame. The first microphone 1694-1 disposed on the nose pad 1610, the second microphone 1694-2 disposed on the second rim 1602, and the third microphone 1694-3 disposed on the first rim 1601 are illustrated in FIG. 16B, but the number and disposition of the microphone 1694 are not limited to an embodiment of FIG. 16B. In case that the number of the microphone 1694 included in the wearable device 1600 is two or more, the wearable device 1600 may identify the direction of the sound signal using a plurality of microphones disposed on different portions of the frame.

According to an embodiment, the optical devices 1682 and 1684 may transmit the virtual object transmitted from the at least one display 1650 to the waveguides 1633 and 1634. For example, the optical devices 1682 and 1684 may be a projector. The optical devices 1682 and 1684 may be disposed adjacent to the at least one display 1650 or may be included in the at least one display 1650 as portion of the at least one display 1650. The first optical device 1682 may correspond to the first display 1650-1, and the second optical device 1684 may correspond to the second display 1650-2. The first optical device 1682 may transmit the light output from the first display 1650-1 to the first waveguide 1633, and the second optical device 1684 may transmit light output from the second display 1650-2 to the second waveguide 1634.

In an embodiment, a camera 1640 may include an eye tracking camera (ET CAM) 1640-1, the motion recognition camera 1640-2, and/or the photographing camera 1640-3. The photographing camera 1640-3, the eye tracking camera 1640-1, and the motion recognition camera 1640-2 may be disposed at different positions on the frame and may perform different functions. The photographing camera 1640-3, the eye tracking camera 1640-1, and the motion recognition camera 1640-2 may be an example of the camera 225 of FIG. 2. The eye tracking camera 1640-1 may output data indicating the gaze of the user wearing the wearable device 1600. For example, the wearable device 1600 may detect the gaze from an image including the user's pupil obtained through the eye tracking camera 1640-1. An example in which the eye tracking camera 1640-1 is disposed toward the user's right eye is illustrated in FIG. 16B, but the disclosure is not limited thereto, and the eye tracking camera 1640-1 may be disposed alone toward the user's left eye or may be disposed toward two eyes.

In an embodiment, the photographing camera 1640-3 may photograph a real image or background to be matched with a virtual image in order to implement the augmented reality or mixed reality content. The photographing camera may photograph an image of a specific object existing at a position viewed by the user and may provide the image to the at least one display 1650. The at least one display 1650 may display one image in which a virtual image provided through the optical devices 1682 and 1684 is overlapped with information on the real image or background including an image of the specific object obtained using the photographing camera. In an embodiment, the photographing camera may be disposed on the bridge 1603 disposed between the first rim 1601 and the second rim 1602.

In an embodiment, the eye tracking camera 1640-1 may implement a more realistic augmented reality by matching the user's gaze with the visual information provided on the at least one display 1650 by tracking the gaze of the user wearing the wearable device 1600. For example, when the user looks at the front, the wearable device 1600 may naturally display environment information associated with the user's front on the at least one display 1650 at the position where the user is positioned. The eye tracking camera 1640-1 may be configured to capture an image of the user's pupil in order to determine the user's gaze. For example, the eye tracking camera 1640-1 may receive gaze detection light reflected from the user's pupil and may track the user's gaze based on the position and movement of the received gaze detection light. In an embodiment, the eye tracking camera 1640-1 may be disposed at a position corresponding to the user's left and right eyes. For example, the eye tracking camera 1640-1 may be disposed in the first rim 1601 and/or the second rim 1602 to face the direction in which the user wearing the wearable device 1600 is positioned.

In an embodiment, the motion recognition camera 1640-2 may provide a specific event to the screen provided on the at least one display 1650 by recognizing the movement of the whole or portion of the user's body, such as the user's torso, hand, or face. The motion recognition camera 1640-2 may obtain a signal corresponding to the gesture by recognizing the user's gesture, and may provide a display corresponding to the signal to the at least one display 1650. The processor may identify a signal corresponding to the operation and may perform a preset function based on the identification. In an embodiment, the motion recognition camera 1640-2 may be disposed on the first rim 1601 and/or the second rim 1602.

In an embodiment, the camera 1640 included in the wearable device 1600 is not limited to the above-described eye tracking camera 1640-1 and the motion recognition camera 1640-2. For example, the wearable device 1600 may identify an external object included in the FoV using the photographing camera 1640-3 disposed toward the user's FoV. The wearable device 1600 identifying the external object may be performed based on a sensor for identifying a distance between the wearable device 1600 and the external object, such as a depth sensor and/or a time of flight (ToF) sensor. The camera 1640 disposed toward the FoV may support an autofocus function and/or an optical image stabilization (OIS) function. For example, the wearable device 1600 may include the camera 1640 (e.g., a face tracking (FT) camera) disposed toward the face in order to obtain an image including the face of the user wearing the wearable device 1600.

Although not illustrated, the wearable device 1600 according to an embodiment may further include a light source (e.g., LED) that emits light toward a subject (e.g., user's eyes, face, and/or an external object in the FoV) photographed using the camera 1640. The light source may include an LED having an infrared wavelength. The light source may be disposed on at least one of the frame, and the hinge units 1606 and 1607.

According to an embodiment, the battery module 1670 may supply power to electronic components of the wearable device 1600. In an embodiment, the battery module 1670 may be disposed in the first temple 1604 and/or the second temple 1605. For example, the battery module 1670 may be a plurality of battery modules 1670. The plurality of battery modules 1670, respectively, may be disposed on each of the first temple 1604 and the second temple 1605. In an embodiment, the battery module 1670 may be disposed at an end of the first temple 1604 and/or the second temple 1605.

In an embodiment, the antenna module 1675 may transmit the signal or power to the outside of the wearable device 1600 or may receive the signal or power from the outside. The antenna module 1675 may be electronically and/or operably connected to a communication circuit (e.g., the communication circuit 235 of FIG. 2) of the wearable device 1600. In an embodiment, the antenna module 1675 may be disposed in the first temple 1604 and/or the second temple 1605. For example, the antenna module 1675 may be disposed close to one surface of the first temple 1604 and/or the second temple 1605.

In an embodiment, the speakers 1692-1 and 1692-2 may output a sound signal to the outside of the wearable device 1600. A sound output module may be referred to as a speaker. In an embodiment, the speakers 1692-1 and 1692-2 may be disposed in the first temple 1604 and/or the second temple 1605 in order to be disposed adjacent to the ear of the user wearing the wearable device 1600. For example, the wearable device 1600 may include the second speaker 1692-2 disposed adjacent to the user's left ear by being disposed in the first temple 1604, and the first speaker 1692-1 disposed adjacent to the user's right ear by being disposed in the second temple 1605.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 1600 to the user. For example, in a case that the wearable device 1600 needs charging, it may repeatedly emit red light at a preset timing. In an embodiment, the light emitting module may be disposed on the first rim 1601 and/or the second rim 1602.

Referring to FIG. 16B, according to an embodiment, the wearable device 1600 may include the printed circuit board (PCB) 1690. The PCB 1690 may be included in at least one of the first temple 1604 or the second temple 1605. The PCB 1690 may include an interposer disposed between at least two sub PCBs. On the PCB 1690, one or more hardware (e.g., hardware illustrated by the blocks described above with reference to FIG. 2) included in the wearable device 1600 may be disposed. The wearable device 1600 may include a flexible PCB (FPCB) for interconnecting the hardware.

According to an embodiment, the wearable device 1600 may include at least one of a gyro sensor, a gravity sensor, and/or an acceleration sensor for detecting the posture of the wearable device 1600 and/or the posture of a body part (e.g., a head) of the user wearing the wearable device 1600. Each of the gravity sensor and the acceleration sensor may measure gravity acceleration, and/or acceleration based on preset 16-dimensional axes (e.g., x-axis, y-axis, and z-axis) perpendicular to each other. The gyro sensor may measure angular velocity of each of preset 16-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1600 may identify the user's motion and/or gesture performed to execute or stop a specific function of the wearable device 1600 based on the IMU.

FIGS. 17A and 17B are perspective views illustrating an example appearance of a wearable device 1700 according to various embodiments. The wearable device 1700 of FIGS. 17A and 17B may include the wearable device 101 of FIGS. 1A and 1B and/or FIG. 2. According to an embodiment, an example of an appearance of a first surface 1710 of the housing of the wearable device 1700 may be illustrated in FIG. 17A, and an example of an appearance of a second surface 1720 opposite to the first surface 1710 may be illustrated in FIG. 17B.

Referring to FIG. 17A, according to an embodiment, the first surface 1710 of the wearable device 1700 may have an attachable shape on the user's body part (e.g., the user's face). Although not illustrated, the wearable device 1700 may further include a strap for being fixed on the user's body part, and/or one or more temples (e.g., a first temple 1604 and/or a second temple 1605 of FIGS. 16A to 16B). A first display 1750-1 for outputting an image to the left eye among the user's two eyes and a second display 1750-2 for outputting an image to the right eye among the user's two eyes may be disposed on the first surface 1710. The wearable device 1700 may be formed on the first surface 1710 and may further include rubber or silicon packing for preventing/reducing interference by light (e.g., ambient light) different from the light emitted from the first display 1650-1 and the second display 1650-2.

According to an embodiment, the wearable device 1700 may include cameras 1740-1 and 1740-2 for photographing and/or tracking two eyes of the user adjacent to each of the first display 1750-1 and the second display 1750-2. The cameras 1740-1 and 1740-2 may be referred to as ET cameras. According to an embodiment, the wearable device 1700 may include cameras 1740-3 and 1740-4 for photographing and/or recognizing the user's face. The cameras 1740-3 and 1740-4 may be referred to as FT cameras.

Referring to FIG. 17B, a camera (e.g., cameras 1740-5, 1740-6, 1740-7, 1740-8, 1740-9, and 1740-10), and/or a sensor (e.g., a depth sensor 1730) for obtaining information associated with the external environment of the wearable device 1700 may be disposed on the second surface 1720 opposite to the first surface 1710 of FIG. 17A. For example, the cameras 1740-5, 1740-6, 1740-7, 1740-8, 1740-9, and 1740-10 may be disposed on the second surface 1720 in order to recognize an external object different from the wearable device 1700. For example, using cameras 1740-9, and 1740-10, the wearable device 1700 may obtain an image and/or video to be transmitted to each of the user's two eyes. The camera 1740-9 may be disposed on the second surface 1720 of the wearable device 1700 to obtain an image to be displayed through the second display 1750-2 corresponding to the right eye among the two eyes. The camera 1740-10 may be disposed on the second surface 1720 of the wearable device 1700 to obtain an image to be displayed through the first display 1750-1 corresponding to the left eye among the two eyes.

According to an embodiment, the wearable device 1700 may include the depth sensor 1730 disposed on the second surface 1720 in order to identify a distance between the wearable device 1700 and the external object. Using the depth sensor 1730, the wearable device 1700 may obtain spatial information (e.g., a depth map) about at least a portion of the FoV of the user wearing the wearable device 1700.

Although not illustrated, a microphone for obtaining sound output from the external object may be disposed on the second surface 1720 of the wearable device 1700. The number of microphones may be one or more depending on embodiments.

In an embodiment, after a body part is moved out of a detectable range by a camera and/or a sensor of a wearable device, a method of identifying re-entry of the body part to the range may be required. As described above, according to an example embodiment, the wearable device (e.g., a wearable device 101 of FIGS. 1A and 1B and 2 and/or an electronic device 101-1 of FIGS. 7A to 7C) may comprise: a camera (e.g., a camera 225 of FIG. 2), a display (e.g., a display 220 of FIG. 2), and at least one processor, comprising processing circuitry (e.g., a processor 210 of FIG. 2). At least one processor, individually and/or collectively, may be configured to: identify, while displaying a virtual object (e.g., a virtual object 140 of FIGS. 1A to 1B, a virtual object 630 of FIGS. 6A to 6C, a virtual object 925 of FIGS. 9A to 9C, a virtual object 1030 of FIG. 10, a virtual object 1130 of FIGS. 11A to 11C, a virtual object 1231 of FIGS. 12A to 12B, a virtual object 1330 of FIGS. 13A to 13C, and the virtual objects 1421, 1422, 1431, and 1432 of FIGS. 14A to 14C) within a virtual space through the display, a body part in field-of-view (FoV) (e.g., FoV 120 of FIGS. 1A to 1B and FIGS. 4 to 5, FoV 610 of FIGS. 6A to 6C, FoV 710 of FIGS. 7A to 7C, FoV 910 of FIGS. 9A to 9C, FoV 1010 of FIG. 10, FoV 1110 of FIGS. 11A to 11C, FoV 1210 of FIGS. 12A to 12B, FoV 1310 of FIGS. 13A to 13C) of the camera. At least one processor, individually and/or collectively, may be configured to control a display to display, based on identifying the body part in a specified posture for moving the virtual object, the virtual object moved along a path (e.g., a path 642 of FIG. 6A) of the body part moved in the FoV. At least one processor, individually and/or collectively, may be configured to in a state moving the virtual object along the path, control the display to display, based on identifying the body part moved outside of the FoV through a first position of an edge of the FoV, the virtual object in a second position in the virtual space corresponding to the first position using the camera. At least one processor, individually and/or collectively, may be configured to, based on displaying the virtual object in the second position, control the display to display, based on identifying the body part in the specified posture moved inside of the FoV, the virtual object moved from the second position and moved along a path (e.g., a path 652 of FIG. 6B) of the body part within the FoV. According to an embodiment, based one the body part being moved outside the FoV (or the detectable range by the sensor) of the camera, the wearable device may re-execute a function related to the virtual object which was matched to the body part, based on the re-entry of the body part to the FoV.

For example, at least one processor, individually and/or collectively, may be configured to, based on displaying the virtual object in the second position, determine, using information with respect to an area where the body part moved outside of the FoV is movable, whether the body part moved inside of the FoV identified using the camera corresponds to the body part which was moved outside of the FoV.

For example, at least one processor, individually and/or collectively, may be configured to, while displaying the virtual object connected to an external space of an area currently displayed through the display in the virtual space, disable a connection between the virtual object and the external space based on identifying that the body part of the specified posture is moved inside of the FoV. At least one processor, individually and/or collectively, may be configured to, while the body part is moved outside of the FoV, maintain the second position in the display of the virtual object independently from movement of the wearable device to the external space from the currently displayed area.

For example, at least one processor, individually and/or collectively, may be configured to, based on displaying the virtual object in the second position, change, based on identifying the body part having a distinct posture different from the specified posture within the FoV, a position of the virtual object from the second position to a third position of the external space based on at least one of information with respect to an area where the body part is movable, a movement speed of the body part.

For example, the wearable device the wearable device may further comprise a memory (e.g., a memory 215 of FIG. 2). At least one processor, individually and/or collectively, may be configured to, based on displaying the virtual object in the second position, cease to display the virtual object in the second position based on identifying the body part having a distinct posture different from the specified posture in the FoV. At least one processor, individually and/or collectively, may be configured to store information with respect to the virtual object in the memory.

For example, at least one processor, individually and/or collectively, may be configured to, based on a posture of the body part moved inside of the FoV, display the virtual object corresponding to the information in the display based on identifying an input indicating to display the information stored in the memory.

For example, at least one processor, individually and/or collectively, may be configured to, based on identifying that the body part is moved outside of the FoV from the first position with a first speed, move the virtual object using the first speed.

For example, at least one processor, individually and/or collectively, may be configured to identify the specified posture based on an application executed by at least one processor.

As described above, according to an example embodiment, a method of a wearable device may comprise, while displaying a virtual object within a virtual space through a display of the wearable device, identifying, based on a video obtained from a camera of the wearable device, a body part in field-of-view(FoV) of the camera. The method may comprise displaying, based on identifying the body part in a specified posture for moving the virtual object, the virtual object moved along a path of the body part moved in the FoV. The method may comprise, in a state moving the virtual object along the path, displaying, from the video, based on identifying the body part moved outside of the FoV through a first position of an edge of the FoV, the virtual object in a second position within the virtual space corresponding to the first position. The method may comprise, based on displaying the virtual object in the second position, displaying, based on identifying the body part in the specified posture moved inside of the FoV, the virtual object moved from the second position and moved along a path of the body part within the FoV.

For example, the displaying the virtual object moved from the second position may comprise, based on displaying the virtual object in the second position, determining, using information with respect to an area where the body part moved outside of the FoV is movable, whether the body part moved inside of the FoV identified using the camera is corresponding to the body part which was moved outside of the FoV.

For example, the identifying may comprise: while displaying the virtual object connected to an external space of an area currently displayed through the display in the virtual space, disabling connection between the virtual object and the external space based on identifying that the body part of the specified posture is moved inside of the FoV. The method may comprise: while the body part is moved outside of the FoV, maintaining the second position in the display of the virtual object independently from movement of the wearable device to the external space from the currently displayed area.

For example, the method may comprise: based on displaying the virtual object in the second position, changing, based on identifying the body part having a distinct posture different from the specified posture within the FoV, a position of the virtual object from the second position to a third position of the external space based on at least one of a path before the body part is moved outside of the FoV, information with respect to an area where the body part is movable, a movement speed of the body part.

For example, the method may comprise: based on displaying the virtual object in the second position, ceasing to display the virtual object in the second position based on identifying the body part having a distinct posture different from the specified posture in the FoV. The method may comprise storing information with respect to the virtual object in the memory of the wearable device.

For example, the method may comprise: based on a posture of the body part moved inside of the FoV, displaying the virtual object corresponding to the information in the display based on identifying an input indicating to display the information stored in the memory.

For example, the displaying the virtual object in the second position may comprise: based on identifying that the body part is moved outside of the FoV from the first position with a first speed, moving the virtual object using the first speed.

For example, the identifying may comprise identifying the specified posture based on an application executed by the processor of the wearable device.

As described above, according to an example embodiment, a wearable device may comprise: a camera, a display, and at least one processor, comprising processing circuitry. At least one processor, individually and/or collectively, may be configured to, based on the camera, identify a body part moved into the field-of-view(FoV) of the camera at a first timing . At least one processor, individually and/or collectively, may be configured to, based on identifying that a posture of the body part moved into the FoV at the first timing corresponding to a specified posture, identify at least one virtual object which was connected to the body part at a second timing before the first timing . At least one processor, individually and/or collectively, may be configured to control the display to display, based on a position of the body part in the FoV, the at least one virtual object in the display.

For example, at least one processor, individually and/or collectively may be configured to, using information with respect to an area where the body part is movable, identify the posture of the body part is corresponding to the specified posture.

For example, at least one processor, individually and/or collectively, may be configured to, based on identifying the body part moved outside of the FoV at the second timing, display the at least one virtual object in an edge of the FoV where the body part is moved.

For example, at least one processor, individually and/or collectively, may be configured to, based on the camera, identify a path where the body part is moved within the FoV. At least one processor, individually and/or collectively, may be configured to change a position of the at least one virtual object in the display based on the path.

As described above, according to an example embodiment, a method of a wearable device may comprise: based on a camera of the wearable device, identifying a body part moved into the field-of-view(FoV) of the camera of the wearable device at a first timing. The method may comprise, based on identifying that a posture of the body part moved into the FoV at the first timing corresponding to a specified posture, identifying at least one virtual object which was connected to the body part at a second timing before the first timing. The method may comprise displaying, based on a position of the body part in the FoV, the at least one virtual object in the display of the wearable device.

For example, the identifying may comprise, using information with respect to an area where the body part is movable, identifying the posture of the body part corresponding to the specified posture.

For example, the displaying may comprise, based on identifying the body part moved outside of the FoV at the second timing, displaying the at least one virtual object in an edge of the FoV where the body part is moved.

For example, the displaying may comprise, based on the camera, identifying a path where the body part is moved within the FoV. The method may comprise changing a position of the at least one virtual object in the display based on the path.

The device described above may be implemented as a hardware component, a software component, and/or a combination of a hardware component and a software component. For example, the devices and components described in the disclosure may be implemented using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

It will be further understood that any of the embodiment(s) described herein may be used in conjunction with any other embodiment(s) described herein.

## Claims

1. A wearable device, comprising:
a camera;
a display;
memory storing instructions; and
at least one processor, comprising processing circuitry, individually and/or collectively, configured to cause the wearable device to:
identify, while displaying a virtual object within a virtual space through the display, a body part in a field-of-view (FoV) of the camera;
display, based on identifying the body part in a specified posture for moving the virtual object, the virtual object moved along a path of the body part moved in the FoV;
in a state of moving the virtual object along the path, display, based on identifying the body part moved outside of the FoV through a first position of an edge of the FoV, the virtual object in a second position within the virtual space corresponding to the first position using the camera; and
based on displaying the virtual object in the second position, display, based on identifying the body part in the specified posture moved inside of the FoV, the virtual object moved from the second position and moved along a path of the body part within the FoV.

2. The wearable device of claim 1, wherein at least one processor, individually and/or collectively, is configured to cause the wearable device to:
based on displaying the virtual object in the second position, determine, based on information with respect to an area where the body part moved outside of the FoV is movable, whether the body part moved inside of the FoV identified using the camera corresponds to the body part which was moved outside of the FoV.

3. The wearable device of claim 1, wherein at least one processor, individually and/or collectively, is configured to cause the wearable device to:
while displaying the virtual object connected to an external space of an area currently displayed through the display in the virtual space, disable a connection between the virtual object and the external space based on identifying that the body part of the specified posture is moved inside of the FoV;
while the body part is moved outside of the FoV, maintain the second position in the display of the virtual object independently from movement of the wearable device to the external space from the currently displayed area.

4. The wearable device of claim 3, wherein at least one processor, individually and/or collectively, is configured to cause the wearable device to:
based on displaying the virtual object in the second position, change, based on identifying the body part having a distinct posture different from the specified posture within the FoV, a position of the virtual object from the second position to a third position of the external space based on at least one of a path before the body part is moved outside of the FoV, information with respect to an area where the body part is movable, a movement speed of the body part.

5. The wearable device of claim 3, wherein at least one processor, individually and/or collectively, is configured to cause the wearable device to:
based on displaying the virtual object in the second position, cease to display the virtual object in the second position based on identifying the body part having a distinct posture different from the specified posture in the FoV; and
store information with respect to the virtual object in the memory.

6. The wearable device of claim 5, wherein at least one processor, individually and/or collectively, is configured to cause the wearable device to:
based on a posture of the body part moved inside of the FoV, display the virtual object corresponding to the information in the display based on identifying an input indicating to display the information stored in the memory.

7. The wearable device of claim 1, wherein at least one processor, individually and/or collectively, is configured to cause the wearable device to:
based on identifying that the body part is moved outside of the FoV from the first position with a first speed, move the virtual object using the first speed.

8. The wearable device of claim 1, wherein at least one processor, individually and/or collectively, is configured to cause the wearable device to:
identify the specified posture based on an application executed by the processor.

9. A method of a wearable device, comprising:
while displaying a virtual object within a virtual space through a display of the wearable device, identifying, based on a video obtained from a camera of the wearable device, a body part in a field-of-view (FoV) of the camera;
displaying, based on identifying the body part in a specified posture for moving the virtual object, the virtual object moved along a path of the body part moved in the FoV;
in a state of moving the virtual object along the path, displaying, from the video, based on identifying the body part moved outside of the FoV through a first position of an edge of the FoV, the virtual object in a second position within the virtual space corresponding to the first position; and
based on displaying the virtual object in the second position, displaying, based on identifying the body part in the specified posture moved inside of the FoV, the virtual object moved from the second position and moved along a path of the body part within the FoV.

10. The method of claim 9, wherein the displaying the virtual object moved from the second position comprises:
based on displaying the virtual object in the second position, determining, based on information with respect to an area where the body part moved outside of the FoV is movable, whether the body part moved inside of the FoV identified using the camera corresponds to the body part which was moved outside of the FoV.

11. The method of claim 9, wherein the identifying comprises:
while displaying the virtual object connected to an external space of an area currently displayed through the display in the virtual space, disabling connection between the virtual object and the external space based on identifying that the body part of the specified posture is moved inside of the FoV;
while the body part is moved outside of the FoV, maintaining the second position in the display of the virtual object independently from movement of the wearable device to the external space from the currently displayed area.

12. The method of claim 11, further comprising:
based on displaying the virtual object in the second position, changing, based on identifying the body part having a distinct posture different from the specified posture within the FoV, a position of the virtual object from the second position to a third position of the external space based on at least one of a path before the body part is moved outside of the FoV, information with respect to an area where the body part is movable, a movement speed of the body part.

13. The method of claim 11, further comprising:
based on displaying the virtual object in the second position, ceasing to display the virtual object in the second position based on identifying the body part having a distinct posture different from the specified posture in the FoV; and
storing information with respect to the virtual object in the memory of the wearable device.

14. The method of claim 13, further comprising:
based on a posture of the body part moved inside of the FoV, displaying the virtual object corresponding to the information in the display based on identifying an input indicating to display the information stored in the memory.

15. The method of claim 9, wherein the displaying the virtual object in the second position comprises:
based on identifying that the body part is moved outside of the FoV from the first position with a first speed, moving the virtual object using the first speed.
